# NEUE EUROPÄISCHE PATENTSCHRIFT

(11) **EP 0 568 798 B2**
(45) Veröffentlichungstag und Bekanntmachung des Hinweises auf die Entscheidung über den Einspruch: **01.10.2003**
(45) Hinweis auf die Patenterteilung: 15.07.1998
(21) Anmeldenummer: 93104144.6
(22) Anmeldetag: 14.03.1993
(51) Int. Cl.: B23Q 1/00, B23Q 37/00

(54) **Aus Baugruppen zusammengesetztes Bearbeitungszentrum**
Machining center consisting of assembled modules
Centre d'usinage formée par un assemblage de modules

(30) Priorität: 10.04.1992 DE 4212175
(43) Veröffentlichungstag der Anmeldung: 10.11.1993
(73) Patentinhaber: EMAG MASCHINENFABRIK GMBH, D-73084 Salach (DE)
(72) Erfinder: Steinbach, Heinz, W-7900 Ulm (DE)
(74) Vertreter: Beyer, Rudi

(56) Entgegenhaltungen:
- EP-A- 0 088 645
- WO-A-85/03893
- DE-A- 3 416 660
- US-A- 4 534 686
- WERKSTATT UND BETRIEB Bd. 116, Nr. 4, April 1983, MUNCHEN DE Seiten 185 - 189 PETER DIETZ 'Baukastensystematik und methodisches Konstruieren im Werkzeugmaschinenbau'

## Beschreibung

Die Erfindung betrifft eine aus Baugruppen zusammenges etzte Bearbeitungszelle.

### Stand der Technik

Eine Bearbeitungszentrum ist aus der DE-OS-40 12 690 vorbekannt. Dieses Bearbeitungszentrum besteht aus einem Werkstücktisch tragendem Bett, einem auf dem Bett längs verfahrbaren Schlitten, einem auf dem Schlitten quer verfahrbaren Ständer, einem am Ständer vertikal verfahrbaren Bearbeitungskopf und einem Werkzeugmagazin mit Wechsler, wobei das Bett ein nach rückwärts abfallendes Schrägbett ist, wobei der Werkstücktisch an der Vorderseite des Bettes angeordnet ist. An der vertikalen Vorderseite des Schrägbettes sind Halterungen zur Befestigung einer Tischkonsole sowie mindestens ein Späneschacht vorgesehen. Der Ständer weist zwei durch mindestens ein Querhaupt starr miteinander verbundene formseife Säulen mit innenseitigen Vertikalführungen auf, an denen der Bearbeitungskopf beidseitig geführt ist. Am Ständer sind verschiedenartige Bearbeitungsköpfe wahlweise montierbar. An der Vorderseite des Ständers ist eine mitfahrende Späneschürze angeordnet, auf der die Späne in diesen Späneschacht rutschen. Die Späneschürze ist jalousierartig ausgebildet und mit ihrem unteren Ende am Bett befestigt, wobei der Bearbeitungskopf an deren oberem Ende seitlich verschiebbar ist. Am Bett sind verschiedenartige Werkzeugtische mit ihren Konsolen montierbar. Neben dem Ständer sind das Werkzeugmagazin mit seinem Werkzeugwechsler ortsfest angeordnet, wobei der Werkzeugwechsler durch eine Bewegung des Schrägschlittens angefahren wird.

Die DE-OS 38 24 602 betrifft eine Maschine zur spaneabhebenden Bearbeitung von kubischen und rotationssymmetrischen Werkstücken (Teilen), wobei Bearbeitungsgruppen für die verschiedenen Operationen wie Bohr-, Fräs- und Drehoperationen, einem Maschinengrundgestell modular zugeordnet sind, das heißt die einzelnen Bearbeitungs- bzw. Baugruppen entfallen bzw. nachgerüstet werden können.

Eine Dreheinheit ist als Werkstückspanneneinheit mit positionierfähiger Achse ausgebildet, die das Werkstück in jede geforderte Position zur jeweiligen der Bearbeitungseinheiten bringt.

Werkstückspanneinheit und Bearbeitungseinheit sind für eine Fünf-Seiten Bearbeitung eines Werkstückkes ausgebildet und einander zugeordnet.

Die Dreheinheit ist mit einer automatischen oder einer handbetätigen Werkstückspanneinrichtung ausgestattet, wobei eine Hauptspindel der Dreheinheit, deren Ausbildung sowohl Vorschübe für Operationen wie Fräs- und Bohroperationen, als auch höhere Drehzahlen für Operationen möglich macht. Es kann ebenfalls eine Bearbeitungseinheit mit zwei Werkzeugsystemen vorhanden sein. Die Bearbeitungseinheit weist Verstellmöglichkeiten in X-, Y- und Z-Richtung als erstes Werkzeugsystem eine rotierende Arbeitsspindel zur Aufnahme von Bohr- und Fräswerkzeugen und als zweites Werkzeugsystem einen Mehrfachrevolver, vorzugsweise einen an sich bekannten Zwölf- oder Sechzehnrevolver, zur Aufnahme von stationären bzw. verstellbar angetriebenen Werkzeugen, auf. Es kann außerdem eine zweite Hauptspindel als Gegenspindel einer ersten Kauptspindel vorgesehen sein. Es ist außerdem ein Werkzeugwechsler für die Arbeitsspindel vorhanden. Des weiteren kann das Bearbeitungszentrum mit automatischem bzw. programmierbaren Werkstückwechseleinrichtungen versehen sein. Außerdem kann eine Werkzeugbruchkontrolle vorhanden sein mit einer zentralen Späneentsorgung.

Durch die DE-PS 34 16 660 ist eine Drehmaschine mit vertikal im Spindelstock angeordneter Arbeitsspindel, mit auf dem Spindelstock angebrachtem Antriebsmotor, mit am unteren Ende der Arbeitsspindel angeordnetem Werkstück-Spannfutter und mit unterhalb der Arbeitsspindel angeordnetem Werkzeugträger vorbekannt, wobei der Spindelstock in vertikaler und horizontaler Richtung verfahrbar ist, wobei der vertikale und horizontale Bewegungshub einerseits dem Vorschub für die Dreharbeit entspricht und andererseits zur Bewegung des Spannfutters zur einer seitlich angeordneten horizontalen Werkstückzu- und -abführungsstation dient. Aus dieser Druckschrift ist das Pick-up-Verfahren vorbekannt.

Die DE-PS 27 39 087 beschreibt eine Werkzeugmaschine mit einem auf einem Bett drehbaren, indexierbaren und in Längsrichtung des Bettes verschiebbaren Werkstücktisch, einem quer über das Bett verlaufenden, an Säulen abgestützten Querbalken, einem an dem Querbalken in waagerechter Richtung verschiebbaren Schlitten, einem an dem Schlitten in senkrechter Richtung verschiebbar angeordneten Werkzeugträger, an dessen unterem Endbereich ein um eine waagerechte Achse schwenkbarer, in verschiedenen Schwenklagen arretierbarer Werkzeughalter mit einer Werkzeugspindel angebracht ist, in die mittels einer Spanneinrichtung ein drehantreibbares Werkzeug einsetzbar ist, mit einem aus einem Motor und Getriebezug bestehenden Drehantrieb für die Werkzeugspindel, mit einer Möglichkeit zum wahlweisen Montieren eines feststehenden Drehwerkzeuges am unteren Endbereich des Werkzeugträgers, und mit einem Werkzeugmagazin und einem automatischen Werkzeugwechsler. Am unteren Ende des Werkzeugträgers kann ein weiterer, fest angeordneter Werkzeughalter mit einer diesem zugeordneten Spanneinrichtung zur Aufnahme des feststehenden Drehwerkzeuges vorgesehen sein, wobei der schwenkbare Werkzeughalter an einer Seitenfläche des Werkzeugträgers unmittelbar neben dem fest angeordneten Werkzeughalter angebracht und in einer zu diesem parallelen Schwenklage automatisch arretierbar ist, in der das drehantreibbare Werkzeug durch den auch zum Auswechseln des feststehenden Drehwerkzeuges vorgesehenen Werkzeugwechsler auswechselbar ist, wobei in der das feststehende Drehwerkzeug gleichzeitig in dem fest angeordneten Werkzeughalter und in dem schwenkbaren Werkzeughalter spannbar ist, und daß die beiden Spanneinrichtungen automatisch synchron betatigbar sind.

Die WO-A-85/03 893 zeigt eine Bearbeitungsmaschine mit einer horizontalen Grundplatte, von der mit Abstand sowie parallel zueinander angeordnet zwei vertikale Ständer in Form von Platten nach oben hervorragen, die an ihren hinteren Endbereichen durch untere und obere Versteifungen miteinander verbunden sind. Die Ständer dienen zur Aufnahme von zwei horizontalen Lagerzapfen die eine Achse bilden, um die eine Schwenkeinheit motorisch angetrieben schwenken kann. Eine obere Wand der Schwenkeinheit dient auch zur Aufnahme eines Drehtisches, der um eine an der Schwenkeinheit angeordnete Drehachse drehantreibbar ist. Auf dem Drehtisch wird das zu bearbeitende Werkstück aufgespannt. Die Drehachse des Drehtisches wird über einen Riementrieb durch ein Getriebemotoraggregat angetrieben. Die Winkelstellung der Schwenkeinheit um ihre horizontale Achse wird durch ein Motoraggregat gesteuert und bestimmt, das auf Lagerzapfen der Schwenkeinheit getrieblich einwirkt. Auf diese Weise kann die Schwenkeinheit geschwenkt werden.

Auf den beiden Ständern sind parallel zueinander verlaufende Prismenführungen in gleicher Ebene angeordnet. Auf diesen Prismenführungen wird in der Längsrichtung, mithin in einer horizontalen Ebene, ein Schlitten über eine motorisch angetriebene Kugelrollspindel bewegt. Dieser als Hauptschlitten bezeichnete Schlitten weist an seiner Vorderseite eine horizontale Führung auf, auf welcher horizontal und parallel zur Schwenkachse der Schwenkeinheit ein weiterer Schlitten gleitbeweglich und über eine Kugelrollspindel antreibbar angeordnet ist, die durch einen auf den betreffenden Schlitten angeordneten Motor angetrieben wird. Der Schlitten selbst besitzt vertikale Führungen, auf denen senkrecht ein Fräskopf über eine Kugelrollspindel beweglich ist, welche durch einen auf dem Schlitten angeordneten Motor angetrieben wird. Der Fräskopf trägt eine in der vertikalen Achse verlaufende Spindel, an der sich das Fräswerkzeug befindet, wobei die Spindel über eine Riemenübersetzung durch einen Motor drehend angetrieben wird. An dem Hauptschlitten ist in einer entsprechenden vertikalen Führung ein weiterer Gehäusesupport angeordnet. Dieser Gehäusesupport ist in vertikaler Richtung entlang einer in gleichem Abstand zwischen den beiden Ständern verlaufende Achse durch einen Zahnstangenantrieb und über ein Ritzel verschiebbar, wobei die Zahnstange durch einen Motor auf dem betreffenden Hauptsupport angetrieben wird. Der Gehäusesupport trägt eine vertikale Achse in der gleichen äquidistanten Ebene der beiden Ständer und ist an seinem unteren Ende mit einem Gehäuse zur Aufnahme von Werkzeugen, wie beispielsweise Drehmeißeln oder Bohrwerkzeugen, versehen, die durch den Gehäusesupport so in Position gebracht werden können, daß die Ausführung der gewünschten Bearbeitung möglich ist. Soll ein Werkstück bearbeitet werden, so wird dieses auf dem Drehtisch mittels üblicher Befestigung aufgespannt, wobei dann ggf. der Drehtisch unter einem bestimmten Winkel um seine Drehachse gedreht wird, wenn eine Bohrbearbeitung ausgeführt werden soll. Bei Bedarf kann außerdem die Schwenkachse um einen vorbestimmten Winkel geschwenkt werden. Auf diese Weise kann das Werkstück in die gewünschte geometrische Stellung gebracht werden, wobei der hängende Fräskopf mit seinem Werkzeug in eine entsprechende Position bewegt wird, um die Bearbeitung durchzuführen. Bei einer Drehbearbeitung kann der Drehtisch nach Änderung der Winkelstellung der Schwenkeinheit mit der erforderlichen Geschwindigkeit um seine Drehachse drehbeweglich angetrieben werden. Zum Bohren verbleibt die Schwenkeinheit in ihrer vertikalen Stellung, während der Drehtisch in Drehung versetzt wird, der in diesem Fall seine horizontale Position beibehält. Die Steuerung der verschiedenen Motoraggregate, die sowohl der Positionierung als auch der Ausführung der Bearbeitung dienen, kann auf herkömmliche Weise, z. B. von Hand erfolgen. Es wird jedoch auch in dieser Druckschrift erwähnt, daß die Bearbeitungsmaschine auch für eine numerische Steuerung geeignet sei. Diese vorbekannte Bearbeitungsmaschine ermöglicht es, Fräs-, breh- und Bohrarbeiten durchzuführen.

Die EP-A-0 088 645 zeigt eine numerisch gesteuerte Bearbeitungsmaschine mit vertikal hängender Hauptspindel. Die Spindel ist in einer Pinole gelagert und wird durch einen separaten, oben angeordneten Motor angetrieben, während die Bewegung in Richtung der Z-Achse durch einen separaten, auf einem Schlitten seitlich angeordneten Motor erfolgt. Sowohl der Motor zum Antrieb in der Z-Achse, als auch der Motor zum Antrieb der Hauptspindel sind auf einer Art vertikal sich erstreckendem, säulenartigen Podest angeordnet, das auf einem in horizontaler Richtung über einen Motor in entgegengesetzten Richtungen verschieblichen Schlitten ruht, auf dem rechts und links von dem säulenartig aufragenden Podest Magazine für Werkzeuge und Werkstücke angeordnet sind, die entweder vön der Hauptspindel selbst oder durch einen seitlich neben der Hauptspindel angeordneten und durch einen weiteren Motor angetriebenes Greifersystem in die jeweilige Position gebracht werden. Der Antrieb in Y-Richtung erfolgt abermals durch einen anderen Motor, der ebenfalls an dem säulenartigen Podest angeordnet ist. Die gesamte Bearbeitungsmaschine ist nach sämtlichen Seiten offen ausgebildet, wobei auf einer flächigen Grundplatte der Schlitten angeordnet ist. Die zu bearbeitenden Werkstücke und die Werkzeuge sind in Magazinen nebeneinander auf der verschiebbaren Schlitteneinheit angeordnet. Ein weitere Motor treibt über eine Stange das Spannfutter an. Diese Druckschrift benötigt eine weitgefächerte, große Aufstellfläche für die Magazine, für Werstücke und Werkzeuge, für die horizontale Schlitteneinheit und für das nach oben aufragende Podest.

In dem Katalog der Firma Kummer GmbH Werkzeugmaschinen betreffend "Kummer K 200 CNC" ist eine Einspindel-Drehmaschine beschrieben. Der Spindelstock ist in den Achsen X und Z bei feststehendem Revolversupport beweglich. Der Spindelstock ist auf einem Kreuzschlitten aufgebaut und mit horizontaler Drehachse versehen und besitzt einen im Spindelstock integrierten Antriebsmotor. Der Kreuzschlitten ist auf einer horizontalen Schienenführung gelagert, die ihrerseits auf einer um 90° versetzten Doppelschienenführung angeordnet ist.

Aus machine outil produire, mars 1987, S. 41-47 sind spanabhebend arbeitende Drehmaschinen mit horizontaler Drehachse und Werkzeugmagazinrevolver vorbekannt.

Der Katalog Siemens SINUMERIK 880T NC 28, Ausgabe 02.1990, beschreibt Drehmaschinensteuerungen mit der Typenbezeichnung SINUMERIK 880T.

Die US-A-4 534 686 zeigt eine Motorspindel, der das Problem zugrunde liegt, ein bestimmtes Kühlsystem zu schaffen, um eine direkte Wärmeleitung von dem Stator des Motors zu dem Vorderteil der Spindel auszuschließen.

### Aufgabe

Der Erfindung liegt die Aufgabe zugrunde, ein Bearbeitungszentrum so auszugestalten, daß sich einfache, aber auch komplizierte Bearbeitungsmaschinen, auch wenn deren Verkettung zu Transferstraßen oder flexiblen Fertigungssystemen gewünscht wird, baueinfach und relativ preiswert herstellen lassen.

### Lösung

Die Aufgabe wird durch die in dem Patentanspruch 1 wiedergegebenen Merkmale gelöst.

### Einige Vorteile

Durch die Erfindung läßt sich eine Bearbeitungszelle modulartig aufbauen. Die senkrecht angeordnete Spindeleinheit mit zwei Achsen bis zu fünf Achsen kann sowohl Werkzeugspindelstock, als auch Werkstückspindelstock sein.

Ein erfindungsgemäße Bearbeitungszelle eignet sich zum Bohren, Drehen, Fräsen, Messen, Härten, Schweißen für symmetrisch oder asymmetrische, zylindrische oder kubische Teile, bevorzugt für sogenannte Futterteile.

Ein besonderer Vorteil der erfindungsgemaß vorgeschlagenen Bearbeitungszelle ist darin zu sehen, daß dadurch Hauptkomponenten preiswert vorgefertigt und zu den jeweils gewünschten Bearbeitungsmaschinen wirtschaftlich günstig zusammengebaut werden können. Dadurch ist eine Modulbauweise möglich, mit erheblicher Senkung der Herstellkosten. Zum Beispiel lassen sich auf diese Weise NC-gesteuerte Drehmaschinen, Bearbeitungszentren, Bearbeitungszellen oder verkettete Systeme herstellen, deren Herstellkosten um einen ganz erheblichen Betrag unter den Herstellkösten herkömmlicher Systeme, zum Beispiel nur bei der Hälfte der bisherigen Herstellkoslen, liegen.

Bei der erlindungsgemäßen Bearbeitungszeile bildet der Antrieb mit der Hauptspindel eine Einheit als sogenannte Motorspindel. Hierbei sind Hauptspindel und Antrieb konzentrisch zueinander angeordnet und ermöglichen damit eine kompakte Bauform. Der Antrieb erfolgt z. B. durch einen hochdynamischen frequenzgeregelten wartungsfreien Drehstrommotor. Eine hohe Steifigkeit der Spindel wird durch Präzisionslager erreicht. Zum Beispiel Schrägkugellager vorne und Zylinderrollenlager hinten sind hierbei von besonderem Vorteil. Alle Lager sind mit Lebensdauer-Fettschmierung versehen. Durch thermosymmetrischen Aufbau des Spindelstockes und Kühlsystem ergibt sich eine praktisch konstante Genauigkeit. Eine weitere Ausführungsform kann auch mit hydrostatischer Lagerung ausgerüstet sein.

Die Werkzeugbe- und Entladestation kann an der Frontseite (Bedienerseite) in die Bearbeitungsmaschine integriert werden. Auch dies laßt sich in einfacher Weise in das erfindungsgemäße Bearbeitungszentrum einbeziehen.

Ein möglicher Werkzeug- und/oder Werkstückwechsel kann vom Pick-up-Schlitten direkt durchgeführt werden, indem der Schlitten in der Be- und Entladeposition. befindliches Werkzeug aufnimmt und wieder abgibt. Die Abgabeposition kann unmittelbar im Arbeitsraum oder im Zwischenspeicher - außerhalb dessen - im Bereich der Meßstation sein.

Trennwände bzw. Türen sowohl zwischen Arbeitsraum, Be-/und Entladestation und zwischen Meß- und Werkzeugspeicherstationen ermöglichen eine weitgehende schmutzdichte Abtrennung dieser Räume voneinander. Ein automatischer Werkzeugwechsel kann ohne weiteres in die Bearbeitungszelle einbezogen werden, der vorzugsweise bei Werkzeugverschteiß oder beim Umrüsten tätig wird, in der Regel jedoch nicht während der Bearbeitung.

Wird nach der Erfindung ein Pick-up-Drehautomat hergestellt, dann lassen sich außer den Drehoperationen auch schnelle Werkstück- oder Werkzeugwechsel ausführen. Dazu wird außer dem Drehautomal nur ein einfaches, preiswertes Werkstückzu- und -abführband benötigt, das in den Bausatz in die Be- und Entladestation einbezogen werden kann. Durch Programmierung des Kreuzschlittens (Pick-up-Spindel) können die Werkzeugparameter zum Be- und Entladen der Werkstücke benutzt werden. Sämtliche Bewegungen zum Be- und Entladen der Spindel, zum Zerspanen sowie zum Messen der Werkstücke werden mit der Pick-up-Spindel ausgeführt.

Das erfindungsgemäße Bearbeitungszentrum ermöglicht auch eine konsequente Trennung der Be-und Entladestation, des Arbeitsraumes und der Meßzone. Diese Trennung der drei Bereiche verhindert Späneprobleme beim Be- und Entladen der Werkstücke oder beim Messen. Die hängend angeordneten Werkstücke tragen zu einem optimalen Spaneabfluß bei.

Es ist auch möglich, Meßprogramme für werkzeuge und Werkstücke in die CNC-Sieuerung der Maschine mit einzubeziehen. Dadurch wird es wiederum möglich, unmittelbar nach einem Werkzeugwechsel sowohl das Werkzeug als auch das Werkstück zu messen, oder beispielsweise in der laufenden Produktion nur jedes zehnte oder zwanzigste Werkstück

Ein einfacher, schneller Werkzeugwechsel wird erreicht durch Freifahren des Arbeitsraumes mit dem Kreuzschlitten. Die Tür zwischen Ladezone und Arbeitsraum wird dazu vollständig abgesenkt.

Der in die Bearbeitungszelle einbezogene Maschi nengrundkörper aus Reaktionsharzbeton garantier beste thermische Stabilität und hervorragende Dämpfungseigenschaften. Reaktionsharzbeton hat gegen über Grauguß ein sechs- bis achtfach besseres Dämpfungsverhalten. Die verwindungssteife Konstruktion macht ein üblicherweise erforderliches Maschinenfundament überflüssig. Die Maschine kann somit auf dem normalen Hallenboden aufgestellt werden. Dei große Abstand der beiden hochpräzisen Linear-Führungen in der X-Achse gewährleistet hohe Drehpräzision, Die Führungen liegen außerdem außerhalb des Arbeitsraumes und benötigen deshalb keine Abdeckungen gegen Verschmutzungen.

Die Spindelstockeinheit mit Kreuzschlitten ist z. B, zweiachsig (X und Z) ausgeführt. Kurze Nebenzeiter werden beim Werkstück- und Werkzeugwechsel beim Anfahren des Meßtasters gegenüber üblichen Ausbildungen durch kurze Verfahrwege und hohe Eilganggeschwindigkeit erreicht.

Zum Antrieb des Kreuzschlittens sind vorzugsweise reaktionsschnelle, frequenzgeregelte wartungsfreie Drehstrommotore eingesetzt. Sie treiben die Schlitten über hochpräzise Kugelrollspindeln an. In den Linearachsen X, Y und Z sind gekapselte Meßsysteme angeordnet. Die Führungs- und Meßsysteme befinden sich außerhalb des Arbeitsraumes.

Die Schlittenführungssysteme sind ausgeführt z. B. mit hochpräzisen vorgespannten Linear-Rollenführungen; deren Reibbeiwert wesentlich geringer ist als bei konventionellen Gleitführungen. Dieses System garantiert in der erfindungsgemäßen Bearbeitungszelle, zum Beispiel einer CNC-gesteuerten Drehmaschine, einer Bearbeitungszelle oder einer -zelle höchste Drehpräzision und hohe Dynamik.

Der Kreuzschlitten mit Hauptspindel ist in allen Achsen mit hängend angeordneten Energiezuführungen ausgerüstet. Sie sind einfach aufgebaut, wartungsfrei und außerhalb des Spänebereichs angeordnet, was zu einer weiteren Vereinfachung des Bausatzes beiträgt.

Der Arbeitsraum wird durch die beiden Seitenwangen des Reaktionsharzbeton-Grundkörpers, durch zwei Türen und durch ein mit dem Spindelkasten verfahrbares Abdeckblech vollständig von der Be- und Entladezone sowie von der Meßzone getrennt und ist gegen den Austritt von Kühl-Schmiermittel und Späne abgedichtet.

Zwischen der festen Verkleidung des Steuerungselemente und Energieversorgung aufnehmenden, als Energiecontainer ausgebildeten Containers auf beiden Seiten der Maschine deckt zum Beispiel bei einer CNC-gesteuerten Drehmaschine eine Schutzeinrichtung mit Aluminium-Lamellen die komplette Front ab. Die Lamellen sind mit Fenstern und Schlitzen versehen. Die Fenster gewährleisten Einblick in die für die Maschinenbedienung wichtigen Bereiche. Ein leichter, direkter Zugang zu den Achsantrieben ist durch Deckel in den Seitenwänden und an der Oberseite der Drehautomaten gegeben.

Ein Kühlaggregat steuert den Wärmehaushalt der Maschine, zum Beispiel einer CNC-gesteuerten Drehmaschine, die aus einem Bearbeitungszentrum gemäß der Erfindung aufgebaut wird. Die Spindellagerungen und der Spindelantrieb werden auf konstanten Temperaturen gehalten.

Wird modularartig eine als Drehautomat ausgebildete Drehmaschine aufgebaut, so kann zum Messen des Werkstückes die Pick-up-Spindel mit Werkstück aus dem Arbeitsraum hinter den Revolver fahren. Zwischen Meßtaster und Arbeitsraum wird dazu eine Tür geöffnet. Gemessen wird z. B. mit einem fest montierten Meßtaster.

Die Werkzeugvermessung erfolgt z. B. mit einem auf dem Spindelkasten montierten Meßtaster. Nach dem Wechsel einer Werkzeugschneide fährt der Taster zum Messen aus seiner Abdeckung. Nach dem Messen werden die lstwe direkt in der Steuerung verrechnet. Das nächste Werkstück wird somit innerhalb einer vorbestimmten Toleranz bearbeitet.

Ein Späneförderer kann unterhalb des Grundkörpers vorgesehen sein, um zur Späneentsorgung nach links oder rechts der Maschine oder nach hinten zu dienen.

Anstelle eines Späneförderers kann auch eine Spänewanne bzw. ein flacher Spänewagen zum Einschieben in den Maschinengrundkörper von links, rechts oder von der Maschinenvorderseite eingesetzt werden.

In die Baugruppe kann auch eine Dunstabsaugung zur Kühlmittel-Nebelabsaugung aus dem Arbeitsraum einbezogen werden.

Eine erfindungsgemäße Baugruppe läßt sich mit besonderem Vorteil zur Herstellung von Drehmaschinen für Futterteile verwenden. Unter Futterteilen werden Drehteile verstanden, die ohne zusätzliche Abstützung auf der dem Spannfutter abgewandten Seite spanabhebend bearbeitet werden können.

Das in die Baugruppe einzubeziehende Werkstückspeicher- und Transportband mit einer Be- und Entladestation kann umrüstfrei ausgeführt werden. Die Pick-up-Spindel kann die Fertigteile hier ablegen, wonach das Band weitertaktet und die Spindel das nächste Rohteil ergreift. Das Band kann als Kettentaktband mit Transportprismen ausgeführt werden. Der Abstand der Transportprismen und somit die Speicherkapazität richten sich nach den zum Einsatz kommenden Spannfutterdurchmesser (großer Spannfutterdurchmesser = großer Abstand der Transportprismen). Die Speicherkapazität kann zum Beispiel bei 25 Werkstücken liegen. Die Werkstücke werden zur Übernahme für die Pick-up-Spindel entsprechend positioniert. Unterschiedliche Werkstückhöhen werden im NC-Teilprogramm definiert. Eine gute Werkstückanlage im Spannmittel wird durch eine Andrückeinheit im Transportband gewährleistet. Dazu wird mit der Pick-up-Spindel gegen die gefederte Andrückeinheit gefahren.

Ebenfalls in die Baugruppe bzw. in die Bearbeitungszelle kann ein Umsetzer zum Umsetzen der Werkstücke von einem Transportband auf ein anderes einbezogen sein.

Weiterhin können ein Werkstückumsetzer mit Wendeeinheit in die Bearbeitungszelle einbezogen werden, und zwar zum gleichzeitigen Wenden und Umsetzen der halbseitig bearbeiteten Werkstücke.

Da der Maschinengrundkörper den Arbeitsraum umschließt, ergibt sich eine kompakte Bauweise. Außerdem kann dadurch der Maschinengrund körper mehrere Funktionen übernehmen, nämlich die Abstützung der zu bildenden Bearbeitungsmaschine, zum Beispiel einer Drehmaschine, auf dem Hallenboden ohne ein zusätzliches Fundament, dem Tragen der Spindelstockeinheit mit Kreuzschlitlen und Motorspindel und zum Tragen der Speicher- und Transporteinheit sowie zum Abschirmen und Umschließen des Arbeitsraumes mit den dafür benötigten Teilen.

### Weitere erfinderische Ausführungsformen

In den Patentansprüchen 2 bis 7 sind vorteilhafte Ausführungsformen der Erfindung beschrieben.

Vorteilhatterweise sind bei der Bearbeitungszelle gemäß Patentanspruch 3 die Führungen für den Kreuzschlitten an der Oberseite des Maschinengrundkörpers angeordnet.

Gemäß Patentanspruch 4 ist der die Maschinensteuerung aufnehmende containerartige Raum als am Maschinengrundkörper befestigter Energiecontainer ausgebildet. Hierdurch wird die Möglichkeit eröffnet, den Energiecontainer in dem erforderlichen Maße zu bestücken, bevor er mit den übrigen Baugruppenteilen, also zum Beispiel mit dem Maschinengrundkörper, in geeigneter Weise verbunden wird.

Die Ausführungsform gemäß Patentanspruch 5 trägt zu einer kompakten Konstruktion bei.

Wird eine Ausführungsform nach Patentanspruch 6 gewählt, so durchgreift die Motorspindel mit ihrem Spindelvorsatz in vertikaler Richtung eine Blechabdekkung, so daß keinerlei Verschmutzung nach außen austreten kann.

Eine Ausführungsform nach Patentanspruch 7 trägt zu einer automatischen Qualitätskontrolle der bearbeiteten Teile, zum Beispiel von Futterteilen, bei.

In Patentanspruchst 8 ist eine bevorzugte Ausführungsform beschrieben.

Bei der Ausführungsform nach Patentanspruch 9 umschließt der Maschinengrundkörper den Arbeitsraum von mindestens drei Seiten, nämlich an den gegenüberliegenden vertikalen Seitenwänden und der vertikalen Rückwand sowie von unten her, also vom Boden. Dadurch ergibt sich eine geschlossene, gekapselte Bauweise, wodurch auch etwaige Schall- und Geruchsemissionen weitgehend unterbunden werden.

Nach Patentanspruch 10 ist der Maschinengrundkörper aus einem geeigneten Reaktionsharzbeton aufgebaut. Dadurch ergibt sich eine hervorragende thermische Stabilität mit ausgezeichneten Dämpfungseigenschaften.

Bei einer vorteilhaften Ausführugsform der Erfindung nach den Patentansprüchen 11,12 und 13 ist der Grundkörper in einem orthogonal zu seiner Längsachse geführten Querschnitt etwa L-, H- oder U-förmig gestaltet, derart, daß die vertikal angeordneten Stege oder Balken des H-förmigen Querschnittes vertikal und parallel zueinander verlaufen, während der Steg horizontal angeordnet ist.

Diese Form kann zum Beispiel nach Patentenspruch 15 dardurch zustandekommen, daß unter einem Maschinengrundkörper Füße angeordnet werden, um den Maschinengrundkörper zum Zweck des Transports und zum Aufstellen an einen geeigneten Ort mittels eines Gabelstaplers oder dergleichen leichter zu transportieren. Diese Füße können abnehmbar ausgebildet sein für den Transport in niedrigen Werkshallen. Die Füße gestatten auch den Einschub eines Späneförderers oder Spänewagens in die Maschine von allen vier Seiten.

Der Grundkörper bildet durch seine H- oder U-Form eine stabile Basis für die aufgesetzten Baugruppen. Die Führungen des Kreuzschlittens sind oben auf den Seitenwänden aufgesetzt. Zwischen den Führungswänden im oberen Teil des "H" oder des "U" sitzen die Befestigungsbasen für das Werkzeugsystem und den Meßtaster.

Die Aussparungen, vor allem im Späne- und Kühlmittelbereich sind durch ein Formblech, das als verlorene Form in den Reaktionsharzbetonkörper eingegossen ist, geschützt. Die eingegossene Blechform schützt den Grundkörper im Späne- und Kühlmittelbereich. Weitere Aussparungen sind für die Rückführung des Speicher- und Transportbandes bei einer möglichen Variante vorgesehen.

Die H- oder U-Form erlaubt, die Führungen des Kreuzschlittens weit nach vorne über die Bearbeitungsposition hinauszuziehen. Damit ergibt sich eine stabile Basis für den multifunktionalen Schlitten. Die Maschinenabdeckung ist ein festes Blech, unten am Kreuzschlitten befestigt und dichtet den Arbeitsraum nach oben ab.

Ist der Grundkörper in einem orthogonal zu seiner Längsachse geführten Querschnitt U-förmig gestaltet, dann verlaufen die U-Schenkel in vertikaler Ebene und parallel zueinander, während der diese U-Schenkel verbindende Steg horizontal angeordnet ist und damit parallel zu einem Fundament oder Boden verläuft.

Bisher wurden bei Drehmaschinen geschlossene Grundkörper mit horizontal, schräg oder vertikal angeordneten Führungen angewandt, die durch erfahrungsgemäß störanfällige Teleskopabdeckungen abgedeckt wurden. Die Späne fallen hierbei auf Führungen und Abdeckungen. Dieser Maschinenaufbau führt zu aufwendigen Blechabdeckungen mit Energiezuführungen im Spänebereich und großem Platzbedarf für die gesamte Maschine.

In Patentanspruch 14 ist eine bevorzugte Ausführungsform der Erfindung beschrieben. Bei dieser weisen die Schenkel des im Querschnitt H- oder U-förmigen Maschinengrundkörpers an ihrer oberen Stirnseite je eine Parallelschiene für die Spindelstockeinheit und Kreuzschlitten auf. Auf den Parallelschienen ist der Kreuzschlitten mit geeigneten Führungen, z. B. in horizontaler Ebene (X-Achse) geführt.

Dieser Kreuzschlitten trägt an einer Stirnseite mit Abstand zueinander angeordnete vertikale Führungen bzw. Schienen, an denen die Motorspindeleinheit in vertikaler Richtung verstellbar zwischen den vertikal verlaufenden Wänden des Maschinengrundkörpers angeordnet ist. Ist der Maschinengrundkörper im Querschnitt H- oder U-förmig, dann verläuft die Längsachse der Motorspindeleinheit in einem Bereich zwischen den vertikalen Stegen bzw. Wänden des Maschinengrundkörpers. Auch dies trägt, zu einem kompakten Aufbau der Maschine bei.

Der in die erfindungsgemäße Bearbeilungszelle einbezogene Energiecontainer kann als eine freitragende Blechkonstruktion ausgeführt werden, die komplett vormontiert auf die fertig montierte Grundmaschine, bestehend aus Grundkörper, Motorspindel, Kreuzschlitten und Werkzeugsystem, aufgesetzt wird. Der Energiecontainer wird dabei mit wenigen Schrauben befestigt. Der Energiecontainer enthält den vollständig installierten. Schaltschrank mit herausgeführten, vorkonfektionierten Anschlüssen zu den Verbrauchern. Die einzelnen Kabel werden in Pritschen verlegt und hängen in Schlaufen nach unten durch und führen zu sich bewegenden Verbrauchern, mit denen sie durch Stecker verbunden werden.

Auf dem Schaltschrank ist das Kühlaggregat zur Spindel- und Schaltschrankkühlung und unterhalb die Hydraulik bzw. Luftversorgung angeordnet.

Die Wasser-, Hydraulik- oder Luftschläuche werden wie die Elektrokabel in Schaukeln oder Schlaufen zum Verbraucher geführt. Der Energiecontainer wird am Schluß der Montage der Grundmaschine wie eine Karosserie beim Auto mit der Grundmaschine verbunden. Die Verbraucher werden angeschlossen und die Maschine ist praktisch betriebsbereit.

Hierdurch ergibt sich eine zeitsparende, preiswerte Montage mit minimalem Materialverbrauch.

Bisher war es bei Drehmaschinen üblich, die verschiedenen Energieerzeuger wie Schaltschrank, Hydraulikaggregat, Kühlaggregat und Luftversorgung einzeln an die Trägerrahmen oder Maschinenwände anzuschrauben oder freistehend mit Kabelkanälen zu verbinden. Zum Transport wurden sie häufig demontiert und später wieder montiert, womit hohe Kosten verbunden sind.

In den Patentanspüchen 16 bis 26 sind vorteilhafte Ausführungsformen der Erfindung beschrieben.

Patentanspruch 18 beschreibt eine bevorzugte Ausführungsform einer Bearbeitungszelle zur Herstellung einer Drehmaschine.

Aus Patentanspruch 27 ist eine Bearbeitungszelle zum Aufbau eines zweiachsigen, multifunktionalen Bearbeitungssystems zur Bearbeitung von Werkstükken mit zweiachsigem, multifunktionalem Kreuzschlitten, mit einer Motorspindel, Blockstahlhalter oder Mehrfach-Scheibenrevolvern und feststehenden Werkzeugen zu entnehmen. Die Funktionen, immer von der oberen Einheit aus betrachtet, sind:
- Greifen und Spannen eines Rohteiles und Ablegen eines Fertigteiles in der Be- und Entladezone des Speicher- und Transportbandes.
- Zentrische Bearbeitungsvorgänge, wie z. B. Drehen, Schleifen, Bohren usw. sowie teilweise auch spanlose Bearbeitungsverfahren wie Glätten, Rollieren, Kalibrieren.
- Messen von Werkstücken mit auf dem Grundkörper angeordneten Meßtaster.
- Bei Bedarf automatischer Austausch von verschlissenen Werkzeugen von auf dem Speicher- und Transportband mittaktenden Werkzeugaufnahmevorrichtungen durch den Werkzeuggreifer an der oberen Arbeitseinheit.
- Vermessen der eingewechselten Werkzeuge mit einem in die obere Arbeitsspindel eingewechselten Meßtaster oder durch einen am oberen Kreuzschlitten angeordnetem, in den Arbeitsraum positionierbaren Meßtaster.

In Patentanspruch 28 ist eine Bearbeitungszelle zum Herstellen eines dreiachsigen, multifunktionalen Bearbeitungssystems beschrieben, das zur Bearbeitung von Werkstücken mit zweiachsigem, multifunktionalem Kreuzschlitten, mit einer Spindeleinheit mit C-Achse, Blockstahlhalter oder Mehrfach-Scheibenrevolver, mit oder ohne angetriebene Werkzeuge. Die Funktionen, immer von der oberen Einheit aus betrachtet, sind :
- Greifen und Spannen eines Rohteils und Ablegen eines Fertigteils in der Be- und Entladezone des Speicher- und Transportbandes.
- Zentrische Bearbeitungsvorgänge, im wesentlichen Drehen, Schleifen, Bohren usw. sowie teilweise auch spanlose Bearbeitungsverfahren wie Glätten, Rollieren und Kalibrieren.
- Messen von Werkstücken mit auf dem Grundkörper angeordnetem Meßlaster.
- Bei Bedarf automatischer Austausch von verschlissenen Werkzeugen von auf dem Speicher- und Transportband mittaktenden Werkzeugaufnahmevorrichtungen durch den Werkzeuggreifer an der oberen Arbeitseinheit.
- Vermessen der eingewechselten Werkzeuge mit einem in die obere Arbeitsspindel eingewechselten Meßtaster oder durch einen am oberen Kreuzschlitten angeordneten, in den Arbeitsraum positionierbaren Meßtaster.

Patentanspruch 29 beschreibt eine Bearbeitungszelle zum Aufbau eines vierachsigen, multifunkionalen Bearbeitungssystems zur Bearbeitung von Werkstükken mit dreiachsigem, multifunktionalen Kreuzschlitten, mit einer Spindeleinheit mit C-Achse und querliegendem Doppelrevolver oder Mehrfach-Werkzeugaufnahmebalken. Der Doppelrevolver hat stehende und drehende Werkzeuge.

Die Funktionen, immer von der oberen Einhert aus betrachtet:
- Greifen und Spannen eines Rohteils und Ablegen eines Fertigteiles in der Be- und Entladezone des Speicher- und Transportbandes.
- 5-Seiten-Bearbeitung für alle denkbaren spanabhebenden sowie teilweise auch spanlosen Bearbeitungsverfahren wie Glätten, Rollieren, Kalibrieren, Laserschweißen und dergleichen.
- Messen von Werkstücken mit dem auf dem Grundkörper angeordneten Meßtaster.
- Bei Bedarf automatischer Austausch von verschlissenen Werkzeugen von auf dem Speicher- und Transportband mittaktenden Werkzeugaufnahmevorrichtungen durch den Werkzeuggreifer an der oberen Arbeitseinheit.
- Vermessen der eingewechselten Werkzeuge mit einem in die obere Arbeitsspindel eingewechselten Meßtaster oder durch einen am oberen Kreuzschlitten angeordneten, in den Arbeitsraum positionierbaren Meßtaster.

Patentanspruch 30 beschreibt eine Bearbeitungszelle zum Aufbau eines sechsachsigen, multifunktionalen Bearbeitungssystems zur Komplettbearbeitung eines Werkstückes in zwei Aufspannungen mit dreiachsigem, multifunktionalem Kreuzschlitten, mit einer Spindeleiflheit mit C-Achse und einer unteren, multifunktionalen Arbeitseinheit und mit einer E-Achse zum Schwenken und mit einer Spindeleinheit mit F-Achse.

Die Funktionen, immer von der oberen Einheit aus betrachtet:
- Greifen und Spannen eines Rohteils und Ablegen eines Fertigteiles in der Be- und Entladezone mit der Spannvorrichtung (Futter auf der oberen Arbeitseinheit).
- 5-Seiten-Bearbeitung in allen Winkellagen für alle denkbaren spanabhebenden oder teilweise auch spanlosen Bearbeitungsveriahren wie Glätten, Rollieren, Kalibrieren, Laserschweißen usw.
- Messen der Werkstücke mit einem auf dem Grundkörper angeordnetem Meßtaster.
- Entnahme von Werkzeugen durch Werkzeuggreifer, die an der oberen Einheit befestigt sind, aus der unteren Arbeitsspindel und Übergabe an das Speicherband und umgekehrt.
- Vermessen der eingewechselten unteren Werkzeuge mit dem am oberen Kreuzschlitten angeordneten, in dem Arbeitsraum positionierbarem Meßtaster.
- Abnehmen der Schutzkappe von der Spannvorrichtung der unteren Arbeitseinheit durch den Werkzeuggreifer der oberen Einheit und Übergabe an das Speicherband und umgekehrt.
- Umspannen des halbfertigen Werkstückes in die Spannvorrichtung der unteren Arbeitseinheit.
- Abdecken des oberen Werkstückspannfutters durch direktes Aufnehmen der Schutzkappe vom Speicherband oder umgekehrt.
- Einwechseln von Bearbeitungswerkzeugen in die obere Arbeitsspindel direkt aus dem Speicherband in der Be- und Entladezone und wieder abgeben an dieses.
- Vermessen der in die obere Arbeitsspindel eingewechselten Werkzeuge mit dem auf dem Grundkörper angeordneten Meßtaster.
- Bearbeitung der noch unbearbeiteten Werkstückoberflächen für das Werkstück, das in der unteren Arbeitsspindel gespannt ist. Es sind ebenfalls alle genannten Bearbeitungsverfahren möglich.
- Messen von Teilen, die in der unteren Arbeitsspindel gespannt sind, mit dem am oberen Kreuzschlitten angeordneten, in den Arbeitsraum positionierbaren Meßtaster.
- Entnehmen des fertigen Werkstückes aus der unteren Arbeitseinheit und Übergabe an das Speicherband.

Aus Patentanspruch 31 ist eine Bearbeitungszelle zum Aufbau eines siebenachsigen, multifunktionalen Bearbeitungssystems zur Komplettbearbeitung eines Werkstückes in zwei Aufspannungen mit vierachsigem, multifunktionalem Kreuzschlitten mit D-Achse zu entnehmen, mit einer Spindeleinheit mit C-Achse und einer unteren, multifunktionalen Arbeitseinheit mit einer E-Achse zum Schwenken und einer Spindeleinheit mit F-Achse.

Die Funktionen, immer von der oberen Einheit betrachtet:
- Greifen und Spannen eines Rohteils und Ablegen eines Fertigteiles in der Be- und Entladezone mit der Spannvorrichtung (Futter auf der oberen Arbeitseinheit).
- 5-Seiten-Bearbeitung in allen Winkellagen für alle denkbaren spanabhebenden sowie teilweise auch spanlosen Bearbeitungsverfahren wie Glätten, Rollieren, Kalibrieren, Laserschweißen usw.
- Messen der Werkstücke mit einem auf dem Grundkörper angeordnetem Meßtaster.
- Entnahme von Werkzeugen durch Werkzeuggreifer, die an der oberen Einheit befestigt sind, aus der unteren Arbeitsspindel und Übergabe an das Werkzeugmagazin und umgekehrt.
- Vermessen der eingewechseiten unteren Werkzeugen mit dem am oberen Kreuzschlitten angeordneten, in den Arbeitsraum positionierbaren Meßtaster.
- Abnehmen der Schutzkappe von der Spannvorrichtung der unteren Arbeitseinheit durch den Werkzeuggreifer der oberen Einheit und Übergabe an das Speicherband und umgekehrt.
- Umspannen des halbfertigen Werkstückes in die Spannvorrichtung der unteren Arbeitseinheit.
- Abdecken des oberen Werkstückspannfuffers durch direktes Aufnehmen der Schutzkappe vom Speicherband oder umgekehrt.
- Einwechseln von Bearbeitungswerkzeugen in die obere Arbeitsspindel direkt aus dem Speicherband in der Be- und Entladezone und wieder abgeben an dieses.
- Vermessen der in die obere Arbeitsspindel eingewechselfen Werkzeuge mit dem auf dem Grundkörper angeordneten Meßtaster.
- Bearbeitung der noch unbearbeiteten Werkstückoberflächen für das Werkstück, das in der unteren Arbeitsspindel gespannt ist. Es sind ebenfalls alle genannten Bearbeitungsverfahren möglich.
- Messen von Teilen, die in der unteren Arbeitsspindel gespannt sind, mit dem am oberen Kreuzschlitten angeordneten, in den Arbeitsraum positionierbaren Meßtaster.
- Entnehmen des fertigen Werkstückes aus der unteren Arbeitseinheit und Übergabe in das Speicherband.

In den Patentansprüchen 32 bis 37 sind vorteilhafte Ausführungsformen beschrieben.

Die Bearbeitungszelle kann durch eine kombinierte Werkstück- und Werkzeugspannvorrichtung ergänzt sein. Diese dient zum Einsatz innerhalb der multifunktionalen oberen und unteren Arbeitseinheiten, bestehend aus einem zentrisch spannenden Mehrbackenfutter oder einem beliebig gestalteten Sonderspannfutter mit einer mittigen Werkzeugaufnahme. Beide Spanneinrichtungen (Werkzeuge und Spannfutter) werden über eine Zugstange betätigt. Eine Schutzkappe verhindert beim Einsatz als Werkzeugspannvorrichtung die Verschmutzung der Werkstückspannbacken. Hierdurch werden ein Spannfutter und eine Werkzeugaufnahme miteinander kombiniert, wobei eine Zugstange beides betätigt.

Es ist ein wahlweiser Einsatz als Werkstückspannfutter oder Werkzeugaufnahme ohne Umbau möglich, wobei der Futterwechsel oder Einsatz von Sonderwerkzeugaufnahmen in multifunktionaler Arbeitseinheit gegeben ist.

Die Bearbeitungszelle kann außerdem durch eine untere multifunktionale Arbeitseinheit mit mehreren festen Werkzeugen und einer außermittig gelagerten Abeitsspindel ergänzt werden. Die gesamte Einheit schwenkt CNC-gesteuert und die Arbeitsspindel kann somit in ihrer Schwenkachse (E-Achse) in jedem beliebigen Winkel arbeiten. Die Arbeitsspindel wird stufenlos von einem eingebauten oder außenliegenden AC-Motor angetrieben. Die Arbeitsspindel kann eine kombinierte Werkstück- und Werkzeug-Spannvorrichtung zur wahlweisen Aufnahme von Werkzeugen und Werkstücken besitzen Die Arbeitsspindel hat eine CNC-gesteuerte Achse (F-Achse).

Beim Stand der Technik sind getrennte Einheiten auf separaten oder einem gemeinsamen Arbeitsschlitten, oder Revolver mit drehenden Werkzeugen für meist untergeordnete Arbeiten vorgesehen. Die Lebensdauer dieser Werkzeuge ist häufig gering.

Durch die Erfindung ist die Kombination einer vollwertigen Arbeitsspindel mit einem Mehrfach-Scheibenrevolver auf einer Achse gegeben. Die außermittig gelagerte Arbeitsspindel ermöglicht den Einsatz einer Vorsatzspindel mit günstigen kurzem Z-Hub. Dabei ist ein kombinierter Einsatz der Arbeitsspindel möglich, und zwar kann diese Spindel einmal als Werkstücktrager und einmal als Werkzeugträger vorgesehen sein.

Hierdurch ist es möglich, alle Teile in einem System (Maschine) fertig zu bearbeiten.

Dies ist besonders vorteilhaft beim Bearbeiten aus dem Vollen, z. B. im Prototypenbau, da keine teuren Vorrichtungen benötigt werden.

Weiterhin ist die Verwendung normaler Standard-Werkzeuge und Futter möglich.

Es können rotationssymmetrische wie auch kubische Teile bearbeitet werden.

Der Einsatz von 4-Backen-, 2-Backen-Futtern und Sonderspanneinrichtungen ist möglich.

Bei Verwendung von weichen Eacken können diese vom jeweils gegenüberliegenden Futter aus bearbeitet und auf entsprechend hohe Genauigkeit gebracht werden.

In das erfindungsgemäße Bearbeitungszentrum läßt sich ein Speicherband mit Transportband für Werkstücke und Werkzeuge integrieren. Für die Werkstucke können Prismenmitnahmen, Paletten, die der Teileform angepaßt sind oder Spannpaletten oder andere teileformabhängigen Mitnehmer eingesetzt werden.

Für Werkzeuge besteht die Möglichkeit, Werkzeug-Paletten mit Werkzeugen zu bestücken, die nach unten und oben stehen können.

Die Bänder können in Einfach- oder Doppelausführung, parallel oder einzeln laufend angeordnet, um die Maschine herum, nach vorn oder durch die Maschine hindurch angeordnet werden.

Durch die Reibung zwischen der festen Auflage und dem Teil oder der Palette hält der Mitnehmer das Teil bzw. die Palette beim Abbremsen und im Stillstand sicher in Position. Das Transportband wird beim Einrichten durch eine einfache Verstellung am Antrieb auf den jeweiligen Teiledurchmesser eingestellt.

Hierdurch ergibt sich der Vorteil eines universellen, weitestgehend umrüstungsfreien Transportbandes mit Positionierung der Werkstücke und Werkzeuge, zum Greifen und Spannen im Futter bzw. in der WerkzeugAufnahme, in Verbindung mit einer einfachen Andrückstation aus Blechteilen zum exakten Anlegen der Werkstücke oder Werkzeuge im Futter.

Bisher werden üblicherweise Paletten mit Rollen oder Gleitschuhen, auf denen man ein Teil in deren Mitte legt, zum Beispiel im Oval transportiert. Es gibt eine Vielzahl von Ketten- und Taktbändern, aber kein System, in dem ein Transport-Prisma ein rundes Teil mit seiner Mitte durch einen positionierten Stop auf Mitte der Übergabeposition setzt. In den bekannten Ausführungen mußten Vereinzeler oder geeignete Einrichtungen angeordnet werden, um das Teil mittig zu positionieren.

In die Bearbeitungszelle gemäß der Erfindung läßt sich auch ein automatischer Austausch von verschlissenen Werkzeugen sowie Wechsel der Werkzeuge und der Spannvorrichtungen beim Umrüsten integrieren.

Die Werkzeuge werden auf dem Speicher- und Transportband in Wechselpaletten bereitgestellt. Die Paletten selbst werden bei Bedarf an Stelle von Werkstücken auf das Band gesetzt, durch die Prismenkette zentriert und weitergetaktet.

Die Werkzeuggreiferzange am multifunktionalen Kreuzschlitten greift das erste verschlissene Werkzeug aus dem Werkzeugträger und setzt es in die erste leere Werkzeugaufnahmepalette auf dem Speicherband.

Dann wird das erste neue Werkzeug in die gerade freigemachte Position im Werkzeugträger gesetzt. Das zweite verschlissene Werkzeug wird gegriffen und die vorher leer gewordene Palette gesetzt. Der Vorgang wiederholt sich bis alle verschlissenen Werkzeuge ausgewechselt sind. Die ausgewechselten Werkzeuge werden mit den Paletten vom Band genommen, um dieses für Werkstücke freizumachen.

Die nicht voreingestellten Werkzeuge werden durch einen ebenfalls in die obere Arbeitseinheit einwechselbaren oder vorhandenen Meßtaster vermessen. Die Werkzeugmaße werden automatisch in der Maschinensteuerung eingespeichert.

Zur ersten Vermessung der Werkzeugaufnahmepositionen und zur Nachprüfung nach Kollisionen kann ein Kalibrierstift an Stelle eines Werkzeuges eingewechselt und mit dem Meßtaster vermessen werden, wobei die neue Grundposition der Werkzeugaufnahme in den Maschinendaten hinterlegt wird.

Hierdurch ergibt sich ein einfaches Werkzeugwechselsystem, wobei nach Kollisionen einfachstes Wiedereinjustieren gegeben ist.

In dieser Ausführung erfolgt ein Werkzeugwechsel auf einfache Weise automatisch ohne teuren Werkzeugspeicher und ohne Werkzeugwechselarm, sondern nur mit einer Greiferzange. Durch Aufsetzen der Werkzeuge auf das Werkstück-Transportband wird nur so viel Platz benötigt, wie Werkzeuge gebraucht werden.

Bisherige Werkzeugwchsler und Speicher sind teure, voluminöse Einheiten, die die Bedienbarkeit der Maschine häufig stark beeinträchtigen.

In der erfindungsgemäßen Bearbeitungszelle lassen sich auch Werkzeugträgersysteme integrieren.

Es kann ein Blockstahlhalter, aufgesetzt auf den Grundkörper an Stelle eines Mehrfach-Scheibenrevolvers, Anwendung finden. Bei Einzelwerkzeugaufnahme für einfache Bearbeitungsoperationen lassen sich stehende Werkzeuge in Verbindung mit drehenden Werkstückspannern auf der oberen Arbeitseinheit zum Drehen und Bohren einsetzen, oder drehende Werkzeuge zum Bohren und Fräsen auch für außermittige Bearbeitungen sowie Mehrspindelbohrköpfe.

Weiterhin lassen sich für Systeme mit- zwei und mehr Achsen Werkzeugbalken mit mehreren Werkzeugaufnahmen linear in X-Richtung auf Spindelmitte und/oder parallel dazu anordnen, und zwar für stehende Werkzeuge zum Drehen und Bohren, oder aber für drehende Werkzeuge zum Bohren einund mehrspindlig und zum Fräsen, in Kombination stehenddrehend zum Drehen, Bohren, Fräsen, gegebenenfalls auch mehrere Werkzeugbalken, parallel angeordnet mit stehenden und/oder drehenden Werkzeugen zum Einsatz ab 4-achsigen Systemen:

Es lassen sich Revolver, aufgesetzt auf den Grundkörper mit parallel zur X-Achse verlaufender Schwenkachse einsetzen, und zwar als Mehrfach-Scheibenrevolver mit verschiedenen Werkzeugaufnahmesystemen, kurzen Schwenkzeiten durch DrehstromServomotor mit Richtungslogik. Des weiteren solche für stehende Werkzeuge zum Drehen und Bohren, Rollieren und so weiter, oder für angetriebene Werkzeuge in einigen Stationen zum Drehen, Bohren, Fräsen usw.

Es sind auch Doppel-Revolver mit einer quer zur X-Achse verlaufenden Schwenkachse mit zwei parallelen Werkzeugträgern, ein Werkzeugträger für stehende Werkzeuge zum Drehen oder dergleichen, der zweite für angetriebene Werkzeuge höherer Antriebsleistung zum Bohren und Fräsen, verwendbar, gegebenenfalls auch zum Einsatz von Mehrspindelbohrköpfen.

In den Patentansprüchen 38 bis 45 sind weitere sehr vorteilhafte Ausführungsformen beschrieben. Hinsichtlich der vorteilhaften Eigenschaften und Wirkungen, die durch die Merkmale dieser Patentansprüche erzielt werden, wird auf die nachfolgende Beschreibung der Ausführungsbeispiele verwiesen.

In der Zeichnung ist die Erfindung - teils schematisch - an Ausführungsbeispielen veranschaulicht. Es zeigen:
- Fig. 1: eine erfindungsgemäße Bearbeitungszelle;
- Fig. 2: eine Bearbeitungzelle gemäß der Erfindung in perspektivischer Explosionsdarstellung;
- Fig. 3: die aus Figur 2 ersichtliche Bearbeitungszelle in perspektivischer Darstellung, teils weggebrochen dargestellt;
- Figuren 4 bis 17: eine Bearbeitungszelle in verschiedenen Bearbeitungssituationen;
- Fig. 18: eine weitere Bearbeitungszelle, teils in der Ansicht;
- Fig. 19: eine Draufsicht zu Figur 20 ergänzt durch ein Werkzeugmagazin;
- Fig. 20: eine Ansicht in Richtung des Pfei-. les A der Figur 19, teils im Schnitt;
- Fig. 21: eine Ausführungsform gemäß Figur 20, wobei ein Revolver mit einem angetriebenen Werkzeug ausgerüstet ist;
- Fig. 22: eine Ausführungsform gemäß Fig. 4, wobei die Motorspindel mit einem CNC-Plandrehkopf ausgerüstet ist;
- Fig. 23: eine Draufsicht zu Fig. 22;
- Fig. 24: ein erfindungsgemäßes Spannfutter, teils im Längsschnitt, teils in der Ansicht;
- Fig. 25: eine Stirnansicht zu Figur 24;
- Fig. 26: mit verschiedenen Werkzeugen bestückte Werkzeugpaletten auf einem Prismenband;
- Fig. 27: eine Bohrmaschine und zwei Drehmaschinen, die aus Bausätzen gemäß der Erfindung aufgebaut worden sind, zusammengestellt zu einer Transferstraße;
- Fig. 28: mehrere Bearbeitungszellen, zusammengesetzt zu einer Transferstraße;
- Fig. 29: einen als Energiecontainer ausgebildeten Container, bei einer weiteren Ausführungsform der Erfindung;
- 5 Fig. 30: die Bearbeitungszelle in Greifstellung für ein Werkstück;
- . Fig. 31: die Bearbeitungsstellung der Motorspindel der aus der Fig. 30 ersichtlichen Bearbeitungszelle;
- Fig. 32: das Messen eines Werkstücks, bei der aus den Fig. 30 und 31 ersichtlichen Bearbeitungszelle;
- Fig. 33: das Messen eines Werkstücks, bei der aus den Fig. 30 und 31 ersichtlichen Bearbeitungszelle, wobei der Meßtaster in den Arbeitsraum eingeschwenkt ist;
- Fig. 34: das Ablegen des bearbeiteten Werkstücks auf ein Speicher- und Transportband.

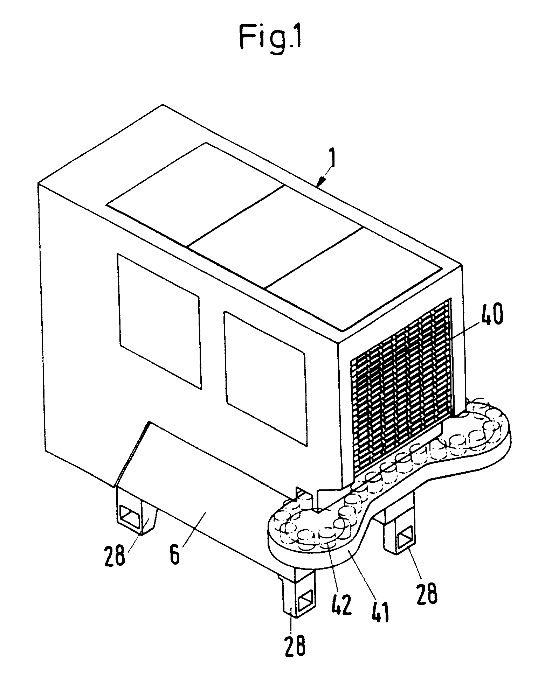

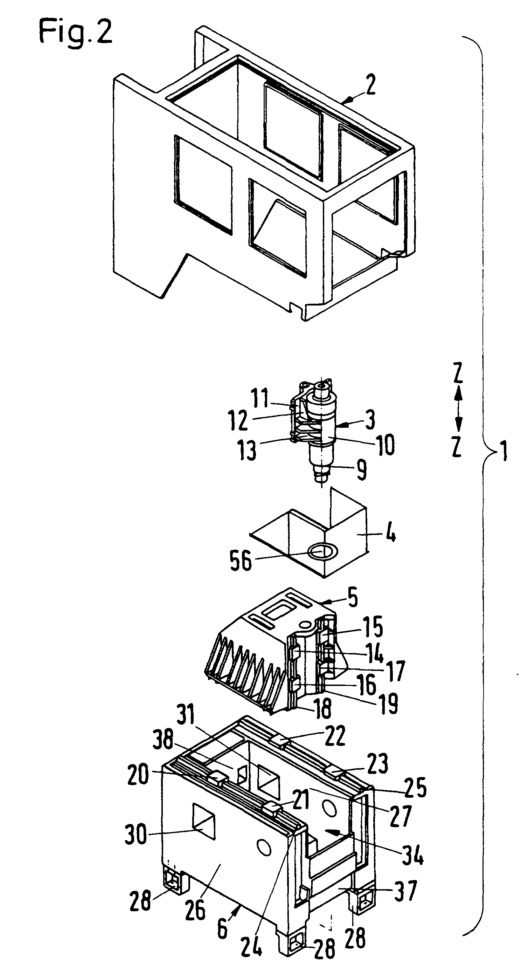

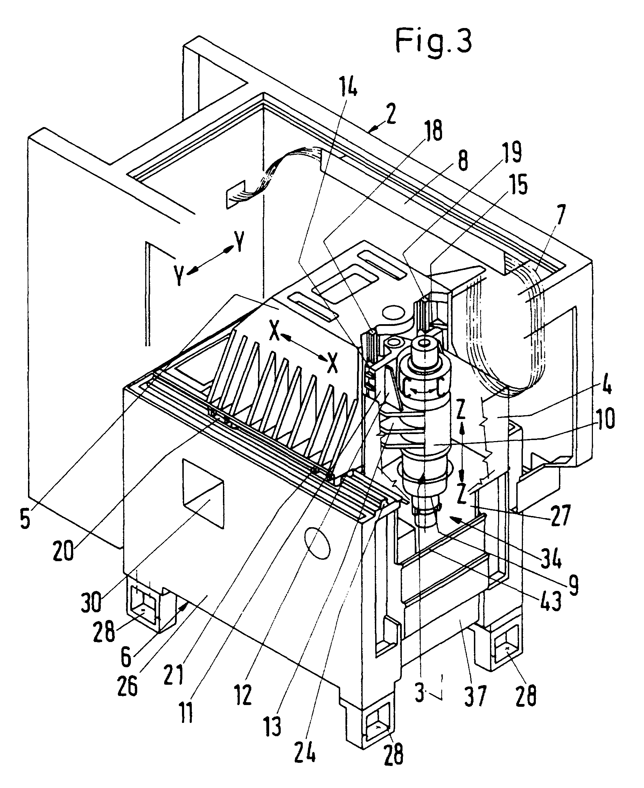

In Figur 1 ist eine aus einem erfindungsgemäßen, nachfolgend im einzelnen noch beschriebenen Bausatz aufgebaute Bearbeitungsmaschine in Anwendung auf eine CNC-gesteuerte Bearbeitungszelle 1, auch Bearbeitungszentrum genannt, veranschaulicht. Einzelne Hauptkomponenten des erfindungsgemäßen Bausatzes sind insbesondere aus den Figuren 2 und 3 zu erkennen. Dieser Bausatz besteht im wesentlichen aus einem Energiecontainer 2, einer Motorspindel 3, einer Blechabdeckung 4, einem Kreuzschlitten 5 und einem Maschinengrundkörper 6.

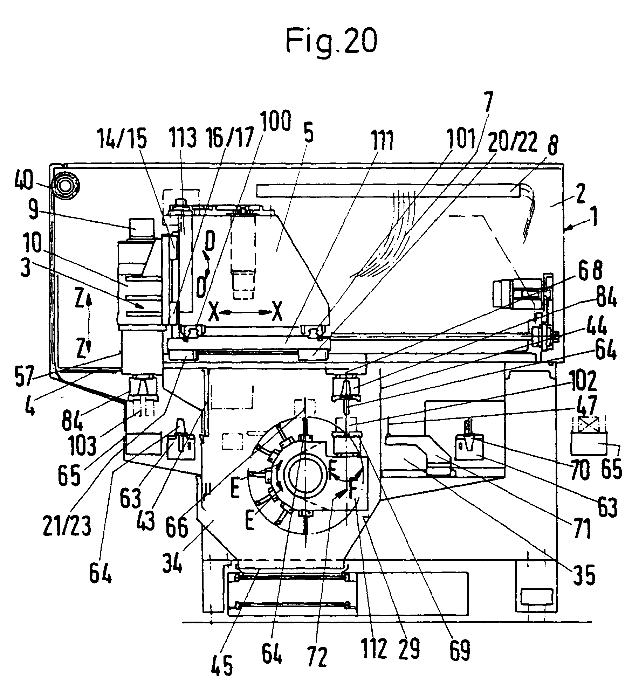

Der Energiecontainer 2 ist als freitragende Blechkonstruktion ausgebildet, die vollständig vormontiert auf die fertig montierte Grundmaschine aufgesetzt und mit wenigen Schrauben befestigt wird. Der Energiecontainer 2 enthält den vollständig installierten Schaltschrank mit herausgeführten, vorkonfektionierten Anschlüssen zu den Verbrauchern. Die einzelnen Kabel 7 sowie die hydraulischen und/oder Luftversorgungsleitungen (Fig. 3 und 20) werden in Pritschen 8 verlegt und hängen in Schlaufen herunter, so daß sie den Bewegungen der Motorspindel 3 und des Kreuzschlittens 5 zu folgen vermögen. Die Kabel 7 sind mit den einzelnen Verbrauchern über Stecker verbunden, so daß die Kupplungen sehr schnell lösbar, aber auch wieder herzustellen sind.

Auf dem Schaltschrank ist ein nicht näher dargestelltes Kühlaggregat zur Spindel- und Schaltschrankkühlung vorgesehen, während sich unter dem Schaltschrank die Hydraulik- und Luftversorgung befindet (nicht dargestellt). Die Wasser-, Hydraulik- oder Luftschläuche (nicht dargestellt) werden wie die Elektrokabel 7 in Schlaufen zu den Verbrauchern geführt wie dies im Zusammenhang mit den Kabeln 7 beschrieben wurde.

Der Energiecontainer 2 wird am Schluß der Montage wie eine Karosserie beim Auto mit der Grundmaschine verbunden, so daß sich das aus Figur 1 ersichtliche Äußere ergibt. Danach werden die Verbraucher angeschlossen und die Maschine ist praktisch betriebsbereit. Dies ergibt ein sehr zeitsparendes, preiswertes Verfahren mit minimalem Materialverbrauch.

Die Motorspindel 3 besteht aus einem im einzelnen nicht dargestellten, die Spindel 9 konzentrisch umgebenden Motor 10, der bei der dargestellten Ausführungsform ein hochdynamischer frequenzgeregelter wartungsfreier Drehstrom-Spindelmotor mit zum Beispiel 10/16 kW Zerspanleistung bei 100/40 % ED ist.

Die Motorspindel 3 ist in einer Trägereinheit 11 angeordnet, die plattenförmig ausgestaltet und über mehrere Rippen 12, 13 mit dem Motorgehäuse einstükkig verbunden ist (Fig. 2, 3).

Die Trägereinheit 11 ist mit zwei Paaren mit Abstand zueinander angeordneten, gleichgroßen Führungsschuhen 14, 15 bzw. 16, 17 durch Schrauben oder dergleichen fest verbunden und auf Führungsschienen 18, 19 des Kreuzschlittens 5 in vertikaler Ebene geführt.

Bei der aus den Figuren 2 und 3 ersichtlichen Ausführungsform ist die Spindelstockeinheit, bestehend aus Motorspindel 3 und Kreuzschlitten 5, zweiachsig ausgeführt. Das bedeutet, daß der Kreuzschlitten 5 in horizontale Ebene - in Richtung der Achse X - X - und die Motorspindel 3 in vertikaler Ebene in Richtung der Achse Z - Z CNC-gesteuert verstellbar ist. Zum Anfahren der verschiedenen Zonen mit der X-Achse (horizontal) beträgt der Hub zum Beispiel 560 mm. Kurze Nebenzeiten beim Werkzeugwechsel und beim Anfahren des Meßtasters werden auch hier durch eine hohe Eilganggeschwindigkeit erreicht.

### Beispiel für die Motorspindel 3:

Motorspindel der Spindelkopfgröße 4
Durchmesser im vorderen Lager 75 mm
Drehzahl 8000 U/min
Hohe Steifigkeit der Spindel 9 durch Präzisionslager.
Schrägkugellager vorne und Zylinderrollenlager hinten.
Alle Lager mit Lebensdauer-Fettschmierung.

Durch den thermosymmetrischen Aufbau der Spindelstockeinheit 3, 5 und durch ein Kühlsystem ergibt sich eine konstante Genauigkeit.

Der Kreuzschlitten 5 wird durch einen reaktionsschnellen, frequenzgeregelten wartungsfreien Drehstrommotor angetrieben. Dieser Antrieb treibt den Kreuzschlitten 5 über hochpräzise geschliffene Kugelrollspindeln an. In der X-Achse ist ein gekapseltes Linear-, in der Z-Achse ein Rotativ-Meßsystem eingebaut. Beide Führungssysteme sind außerhalb des Arbeitsraumes angeordnet. Darauf wird weiter unten noch näher eingegangen werden.

Der Kreuzschlitten 5 weist auf jeder Seite beabstandete, gleichgroße Führungsschuhe 20, 21, 22 und 23 auf (Figur 2).

Die Führungsschuhe 20 bis 23 sind mit dem Körper des Kreuzschlittens 5 durch Schrauben oder dergleichen einstückig, aber lösbar, verbunden.

Die Führungsschuhe 20, 21 bzw. 22, 23 sind auf parallel und mit Abstand zueinander angeordneten Führungsschienen 24 und 25 geführt. Sowohl diese Führungen für den Kreuzschlitten 5 als auch die Führungen 18 und 19 für die Trägereinheit 11 mit Motorspindel 3 mit den Führungsschuhen 14, 15, 16 und 17 können z. B. mit hochpräzisen, vorgespannten Linear-Rollenführungen versehen sein, deren Reibwert mehr als zehnmal geringer ist als bei konventionellen Gleitführungen. Dieses System garantiert hohe Drehpräzision und hohe Dynamik.

Die Motorspindel 3 und der Kreuzschlitten 5 sind in beiden Achsen mit hängend angeordneten Energiezuführungen ausgerüstet. Sie sind einfach aufgebaut, wartungsfrei und außerhalb des Spänebereichs angeordnet.

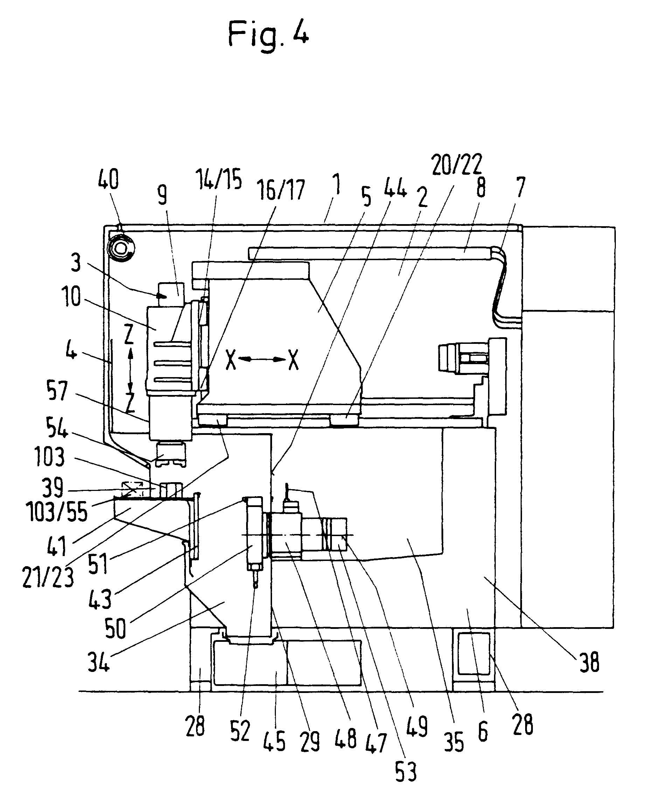

Der Grundkörper 6 besteht aus Reaktionsharzbeton und weist bei der insbesondere aus den Figuren 3 und 4 ersichtlichen Ausführungsform in einem durch seine Längsachse geführten, orthogonalen Querschnitt eine H-Form auf und besitzt damit eine stabile Basis für die aufgesetzten Baugruppen, also für den Energiecontainer 2, die Motorspindel 3, die Blechabdeckung 4 und den Kreuzschlitten 5.

Zwischen den Seitenwänden 26 und 27 (Fig. 2, 3) im oberen Teil des "H" des Grundkörpers 6 sitzen die Befestigungsbasen für das Werkzeugsystem und den Meßtaster 47.

Der Grundkörper 6 steht auf vier Maschinenfüßen 28, die in den Eckbereichen des Grundkörpers 6 angeordnet und die z. B. für den Transport der Maschine mit einem Gabelstapler oder dergleichen in niedrigen Werkshallen und durch Tore abschraubbar sind.

Die Aussparungen, vor allem im Späne- und Kühlmittelbereich, sind durch ein Formblech 29, das als verlorene Form in den Reaktionsharzbeton des Grundkörpers 6 eingegossen ist, geschützt.

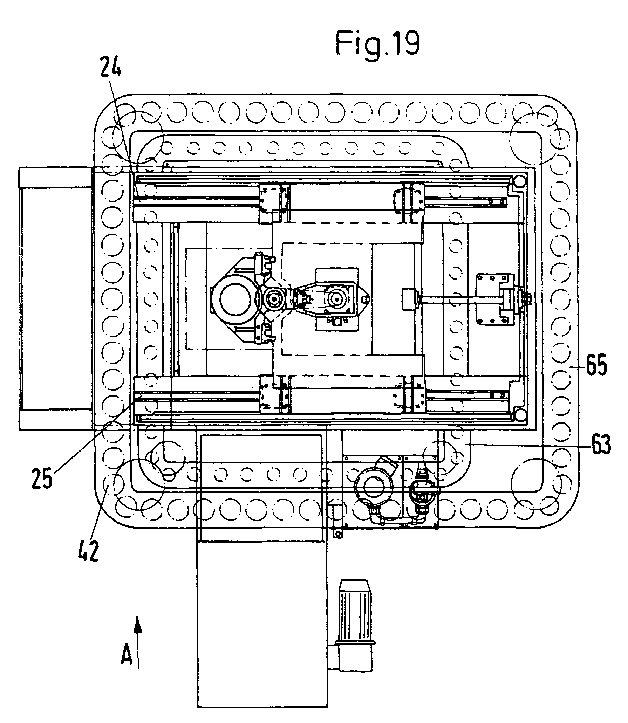

Zwei weitere Aussparungen 30 und 31 sind für die Rückführung des in den Figuren 1 bis 3 nicht dargestellten Speicher- und Transportbandes bei einer möglichen Variante vorgesehen (Fig. 19 und 20).

Die Führungsschienen 24 und 25 sind an der Oberseite der senkrechten und parallel zueinander verlaufenden Seitenwände 26 und 27 des Grundkörpers 6 angeordnet.

Ein Arbeitsraum 34 und eine Meßzone 35 werden von den U-Schenkel bildenden Seitenwänden 26 und 27 und von dem die Seitenwände 26 und 27 materialmäßig einstückig verbindenden, dem Boden zugekehrten Steg 37 sowie einer mit den Seitenwänden 26 und 27 ebenfalls einstückig verbundenen Rückwand 38 (Fig. 2) umschlossen. Dadurch ist der durch den Grundkörper 6 gebildete Raum nur nach oben und nach vorn offen. Nach oben wird dieser Raum durch den Kreuzschlitten 5 mit der Blechabdeckung 4 abgedeckt, während an der Vorderseite eine Be- und Entladezone 39 mit einem Verschlußrollo 40 angeordnet ist.

Durch die Be- und Entladezone 39 führt ein endloses Speicher- und Transportband 41 (Figur 1), auf dem Werkstücke 42 angeordnet sind. Auf dem Speicher- und Transportband 41 können sich auch Werkzeuge befinden.

Der Grundkörper 6 dient auch in der nachfolgend noch beschriebenen Art und Weise zur Aufnahme von Werkzeugträgern und Revolvern als feststehende Einheit. Dies läßt hohe Werkzeugstandzeiten erwarten; zum Beispiel 30 bis 50 **%** mehr als bisher.

Außerdem ermöglicht der Grundkörper 6 die nachfolgend beschriebene Befestigung einer multifunktionalen unteren Arbeitseinheit oder eines Doppelrevolvers in den beiden Seitenwänden 26 und 27. Damit ergibt sich eine einfache Arbeitsraumabdeckung bei geringem Platzbedarf in Abhängigkeit von den maximal zu bearbeitenden Werkstückabmessungen.

Die H-Form erlaubt es, die Führungsschienen 24 und 25 des Kreuzschlittens 5 wert nach vorne über die Bearbeitungsposition hinauszuziehen. Damit ergibt sich eine stabile Basis für den multifunktionalen Schlitten. Die Maschinenabdeckung besteht aus der festen Blechabdeckung 4, die unten am Kreuzschlitten 5 befestigt ist und einen gut geschlossenen Arbeitsraum 34 nach oben abschließt.

Das eingegossene Formblech 29 schützt den Maschinengrundkörper 6 im Späne- und Kühlmittelbereich.

Der Arbeitsraum 34 ist an der Vorderseite in Richtung auf die Be- und Entladezone 39 durch eine in vertikaler Ebene bewegliche Tür 43 verschlossen. Auf der diametral gegenüberliegenden Seite ist der Arbeitsraum 34 zur Meßzone 35 durch eine weitere Tür 44 ebenfalls dicht verschlossen.

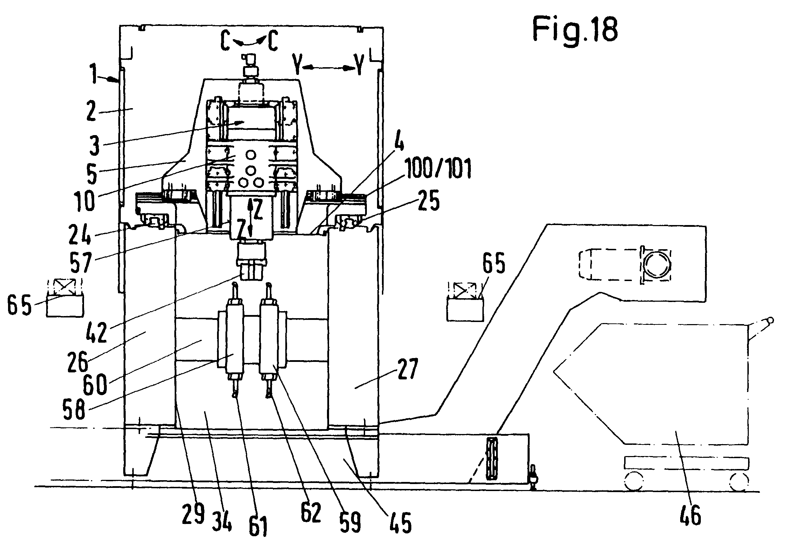

Späne fallen nach unten in einen Späneförderer 45, von wo aus sie in einem Spänewagen 46 (Fig. 18) abtransportiert werden. Dadurch ist der Arbeitsraum 34 absolut dicht von der Be- und Entladezone 39 und von der Meßzone 35 getrennt.

Entgegen der Darstellung in den Figuren 1 bis 3, können bei einer Alternativlösung zusätzlich zur X- und Z-Achse dem Kreuzschlitten 5 auch noch ein Schieber 111 zur Bildung einer Y-Achse und/oder eine C-Achse (Figur 3) zugeordnet sein, wie dies im Zusammenhang mit der Ausführungsform nach Fig. 18 bis 20 dargestellt ist, bei welcher der Kreuzschlitten 5 in der Y-Achse auf zwei beabstandeten Führungsschienen 100, 101 geführt ist.

Mit dem Bezugszeichen 47 ist ein Meßtaster bezeichnet, der auf einer Revolvereinheit 48 und Werkzeugträger 50 mit horizontaler Achse 49 angeordnet ist. Der Werkzeugträger 50 trägt auf seinem Umfang mehrere Werkzeuge, zum Beispiel Meißel 51 und Bohrer 52. Mit 53 ist ein Antriebsmotor für die Revolvereinheit 48 bezeichnet.

Die Motorspindel 3 ist in Richtung der Z-Achse motorisch beweglich und weist an ihrem unteren Ende ein Spannfutter 54 zur Aufnahme von Werkstücken 42 von dem Speicher-Transportband 41 auf.

Die Motorspindel 3 taucht durch eine ihren Außenabmessungen formmäßig angepaßten Bohrung 56 (Figur 2) in der Blechabdeckung 4 in den Arbeitsraum 34 ein. An ihrer Außenmantelfläche 57 ist die Motorspindel 3 durch eine nicht dargestellte Dichtung abgedichtet, so daß auch an dieser Stelle der Arbeitsraum 34 nach außen hin schmutzund feuchtigkeitsdicht abgedichtet sind.

Alle Bewegungen der Motorspindel 3, des Kreuzschlittens 5, der Werkzeuge 51, 52, und gegebenenfalls des Meßtasters 47 sowie das Aufnehmen und Transportieren von Werkzeugen und Werkstücken sind in die CNC-Steuerung der Maschine einbezogen.

Das Speicher- und Transportband 41 kann umrüstfrei ausgeführt sein. Auf dieses Speicher- und Transportband 41 legt die als Pick-up-Spindel ausgeführte Motorspindel 3 ein fertig bearbeitetes Werkstück 55 ab, wonach das Speicher- und Transportband 41 weitertaktet und danach das nächste Rohteil 103 ergriffen wird. Das Speicher- und Transportband 41 kann als Kettentaktband mit Transportprismen ausgeführt sein. Der Abstand der Transportprismen und somit die Speicherkapazität richtet sich nach dem zum Einsatz kommenden Spannfutterdurchmesser (großer Spannfutterdurchmesser = großer Abstand der Transportprismen) Die Werkstück-Rohteile 103 werden zur Übernahme für die Motorspindel 3 auf Mitte positioniert. Unterschiedliche Werkstückhöhen werden im NC-Teileprogramm definiert. Eine gute Werkstückanlage im Spannmittel wird durch eine Andrückeinheit im Speicher- und Transportband 41 gewährleistet. Dazu wird mit der Motorspindel 3 gegen die gefederte Andrückeinheit gefahren. Beispielsweise können folgende Abmessungen für Werkstücke in Betracht kommen:
Werkstückdurchmesser 130 mm
Werkstückhöhe 75 mm

Selbstverständlich ist die Erfindung auf derartige Abmessungen nicht beschränkt.

Die Wirkungsweise der aus den Figuren 1 bis 17 veranschaulichten Ausführungsformen ist folgende:

Die Motorspindel 3 ist im Pick-up-Spindel-Drehautomat besonders geeignet, außer den Drehoperationen auch den Werkstückwechsel in zum Beispiel nur fünf Sekunden auszuführen. Dazu wird außer dem Drehautomaten nur ein einfaches, preiswertes Werkstückzuund -abführband in Form des Speicher- und Transportbandes 41 benötigt. Durch Programmieren der Spindelstockeinheit 3, 5 können die Werkstückparameter zum Be- und Entladen der Werkstücke 103, 55 benutzt werden. Sämtliche Bewegungen zum Be- und Entladen der Spindel 3, zum Zerspanen sowie zum Messen der Werkstücke 55 werden mit der Pick-up-Spindel 3 ausgeführt.

Auf dem aus Figur 1 ersichtlichen Speicher- und Transportband 41 werden die zu bearbeitenden 103 und die fertig bearbeiteten Werkstücke 55 gefördert. Angenommen, die Bearbeitungsmaschine befindet sich in der aus Figur 4 ersichtlichen Station wobei die Tür 43 bereits geöffnet, das heißt in der vollständig nach unten abgesenkten Stellung ist. Dann fährt die Motorspindel 3 in Pfeilrichtung Z nach nuten. Das Spannfutter 54 ergreift ein Werkstück-Rohteil 103, das sich auf dem Speicher- und Tranportband 41 befindet.

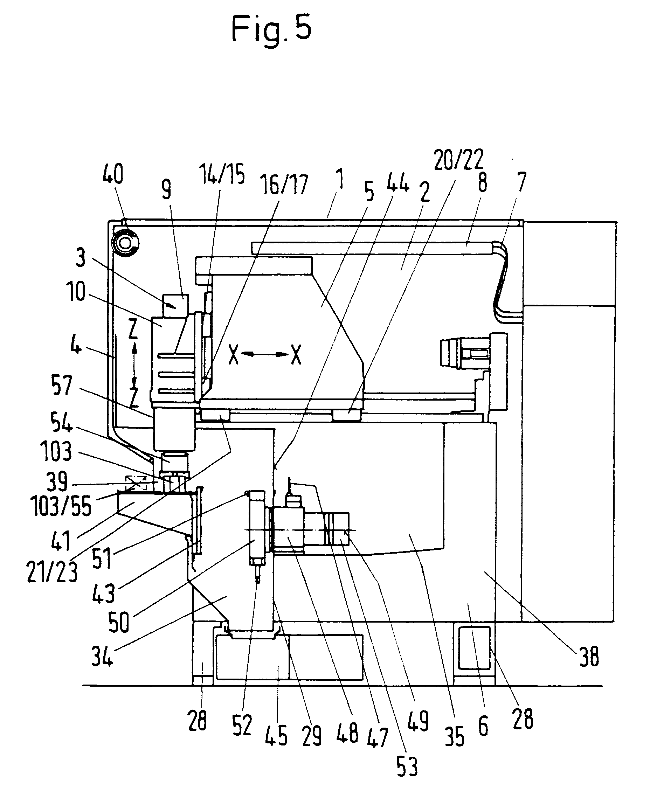

Alsdann bewegt sich die Motorspindel 3 gemäß Figur 5 in Pfeilrichtung Z vertikal nach oben.

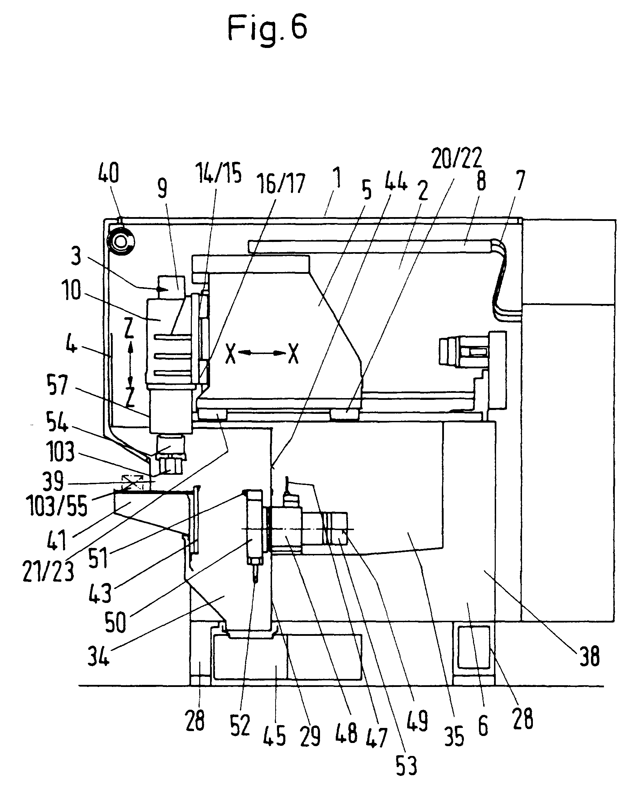

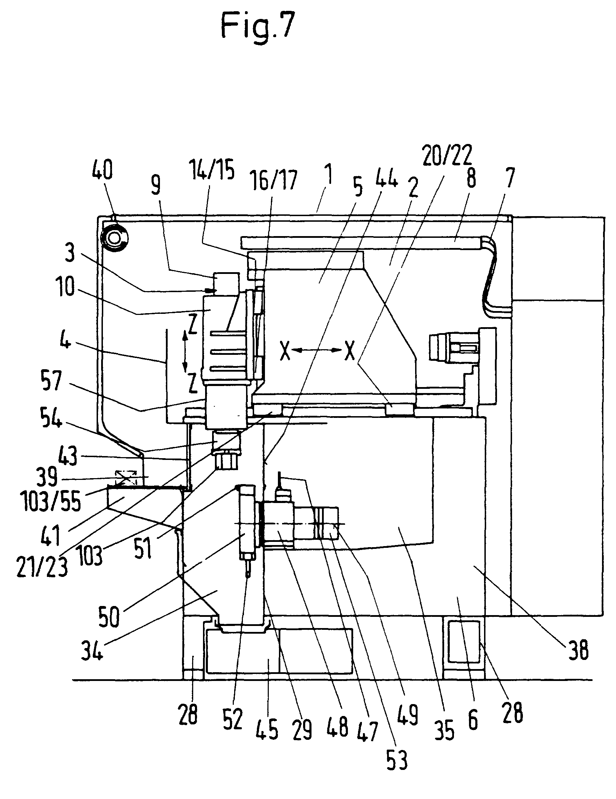

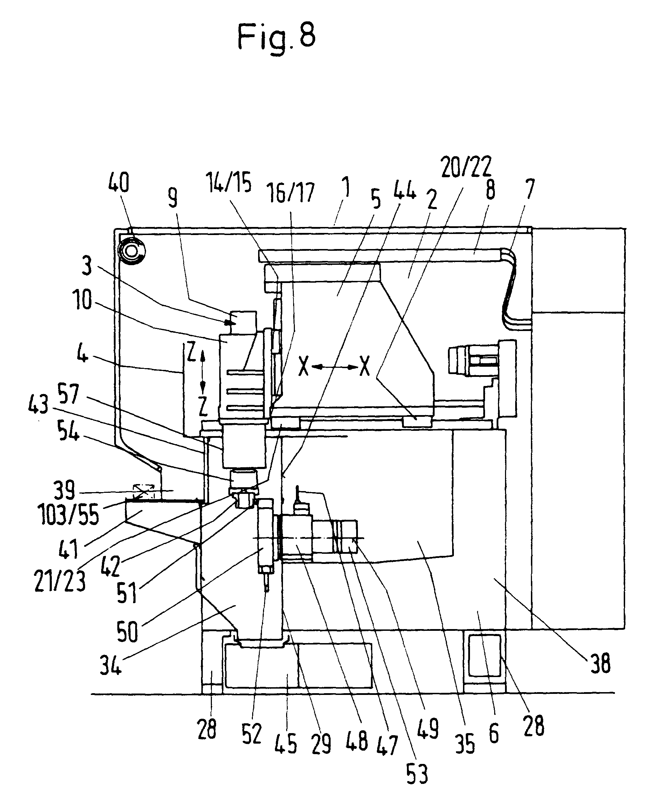

Gemäß Figur 6 wird, nachdem die Motorspindel 3 das Werkstück-Rohteil 103 aufgenommen hat, in Pfeilrichtung X, also horizontal auf den Führungsschienen 24 und 25 des Maschinengrundkörpers 6 verfahren, wobei sich der Kreuzschlitten 5 soweit bewegt, bis sich die Motorspindel 3 mit dem aufgenommenen Werkstück-Rohteil 103 im Arbeitsraum 34 befindet (Figur 7). Die Tür 43 wird in die geschlossene Stellung, also vertikal nach oben, bewegt. Dann erfolgt die Bearbeitung des Werkstückes 42 durch den Meißel 51 (Figur 8).

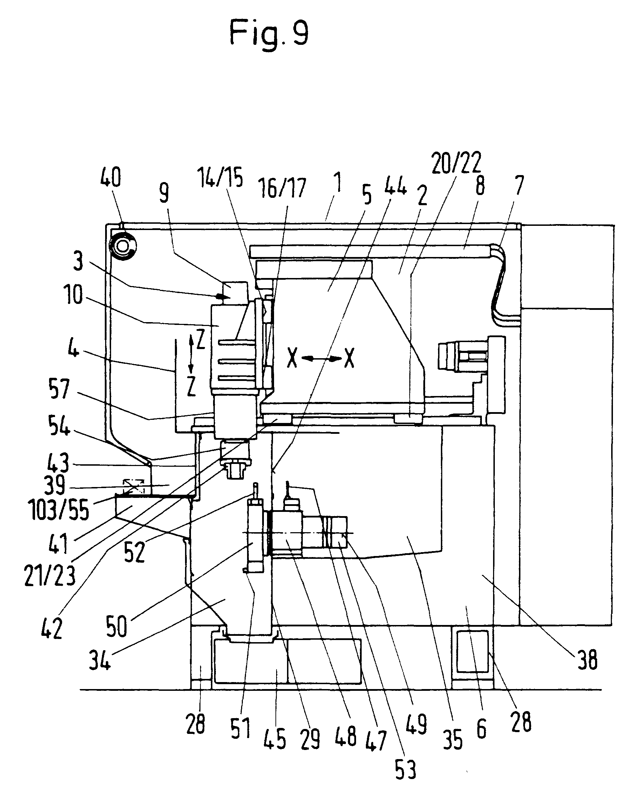

Nach Fertigstellung dieser Operation bewegt sich die Motorspindel 3 in Pfeilrichtung Z nach oben (Figur 9).

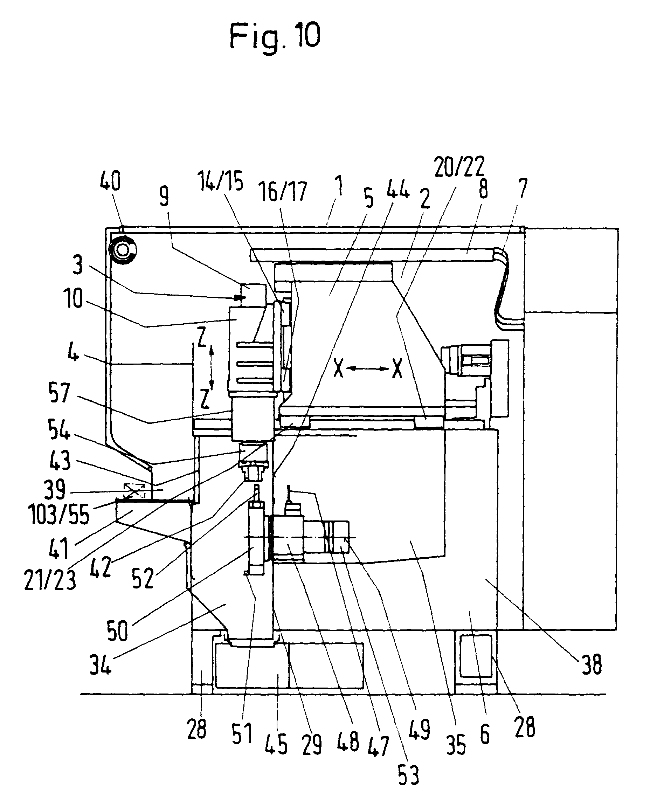

Der Kreuzschlitten 5 wird daraufhin in Pfeilrichtung X gemäß figur 10 weiterbewegt, und zwar bis sich das von der Motorspindel 3 gehaltene Werkstück 42 in einer Stellung befindet, in der der inzwischen in Bearbeitungsstellung durch die Revolvereinheit 48 geschwenkte Bohrer 52 (Figur 9) in Aktion treten kann.

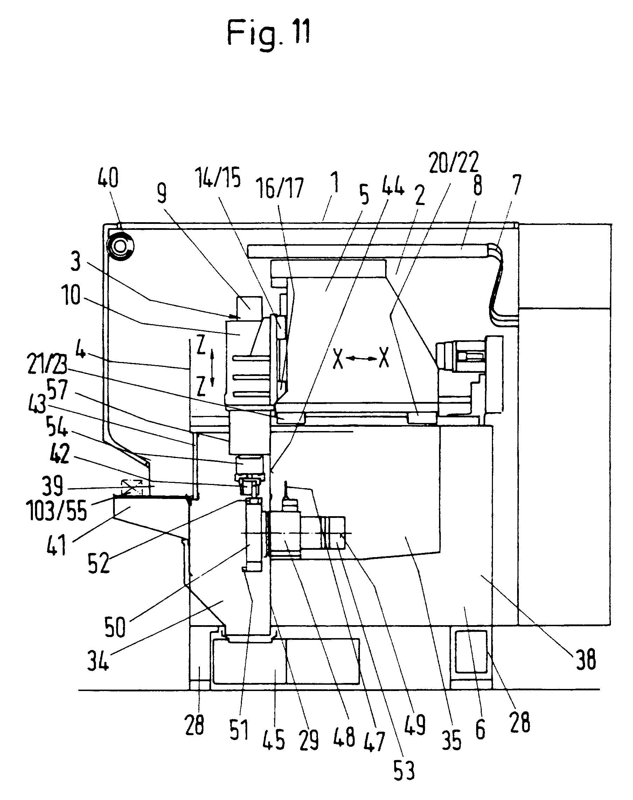

Gemäß Figur 11 wird die Motorspindel 3 in Pfeilrichtung Z nach unten gefahren und dabei der Bearbeitungsvorgang an dem Werkstück 42 vollzogen.

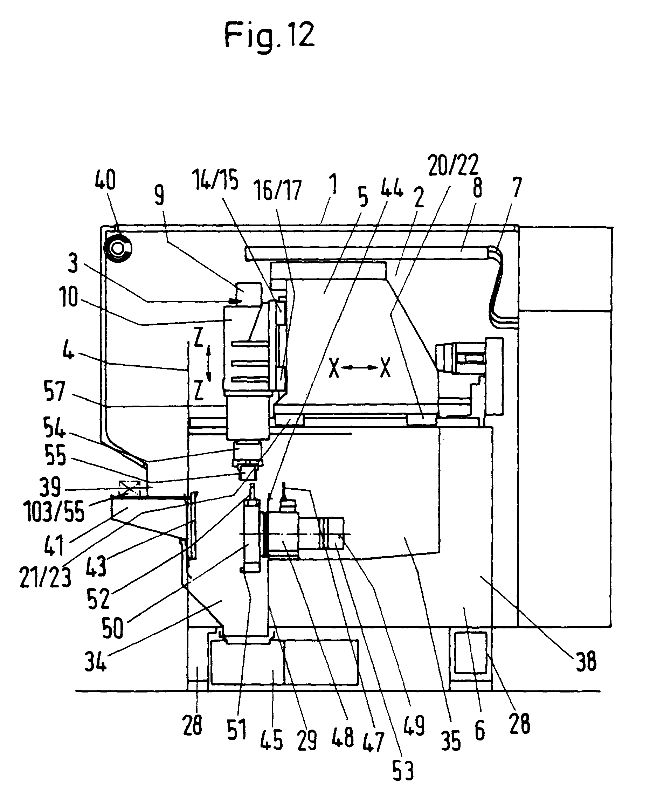

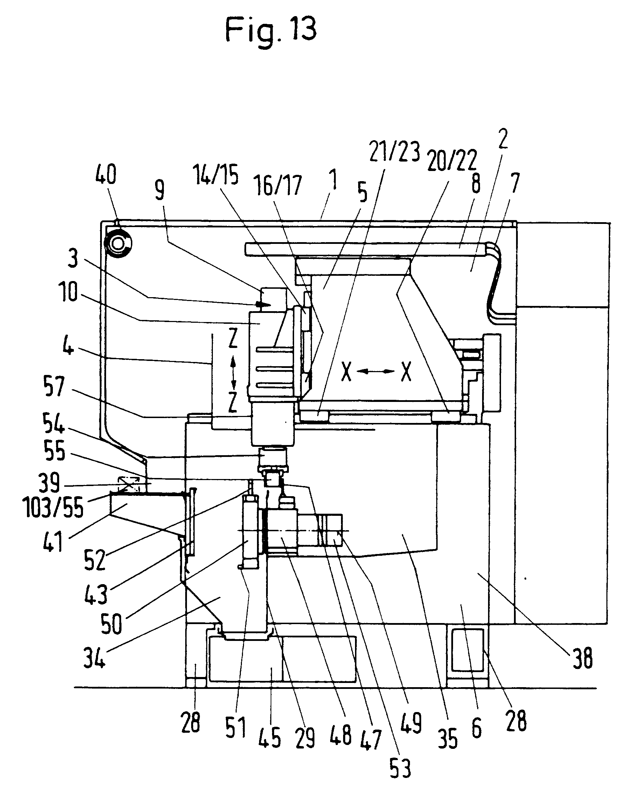

Anschließend wird gemäß Figur 12 die Werkstückspindel in Pfeilrichtung Z nach oben gefahren, die Tür 44 zur Meßzone 35 vollständig geöffnet, so daß gemäß Figur 13 der Kreuzschlitten 5 mit der Motorspindel 3 und dem Werkstück 55 sich zu dem auf der Revolvereinheit 48 montierten Meßtaster 47 bewegen kann. Mehrere Meßprogramme können in der CNC-Steuerung der Maschine hinterlegt werden. Somit ist es möglich, unmittelbar nach einem Werkzeugwechsel zu messen. Weiterhin ist es möglich, während der laufenden Produktion vorbestimmte Teile, zum Beispiel jedes zehnte oder zwanzigste Werkstück, zu messen.

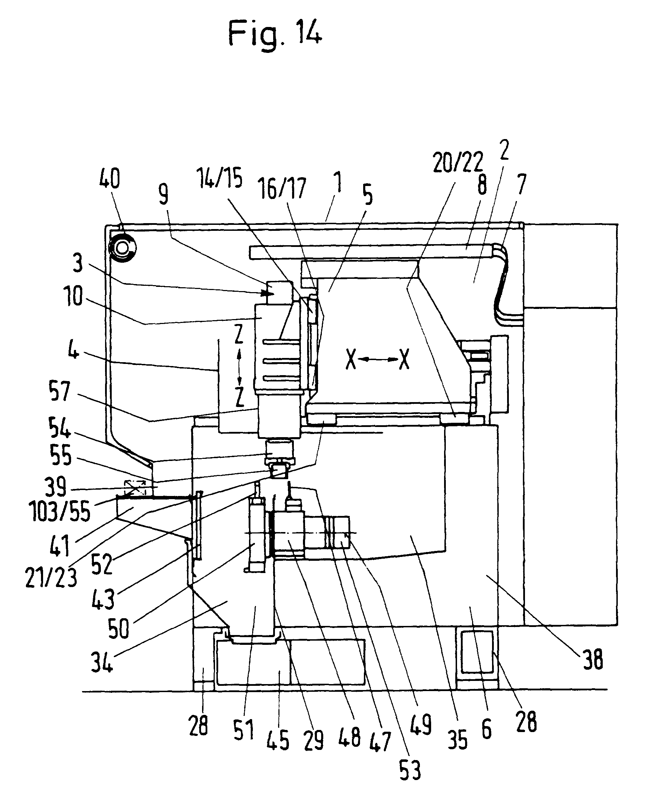

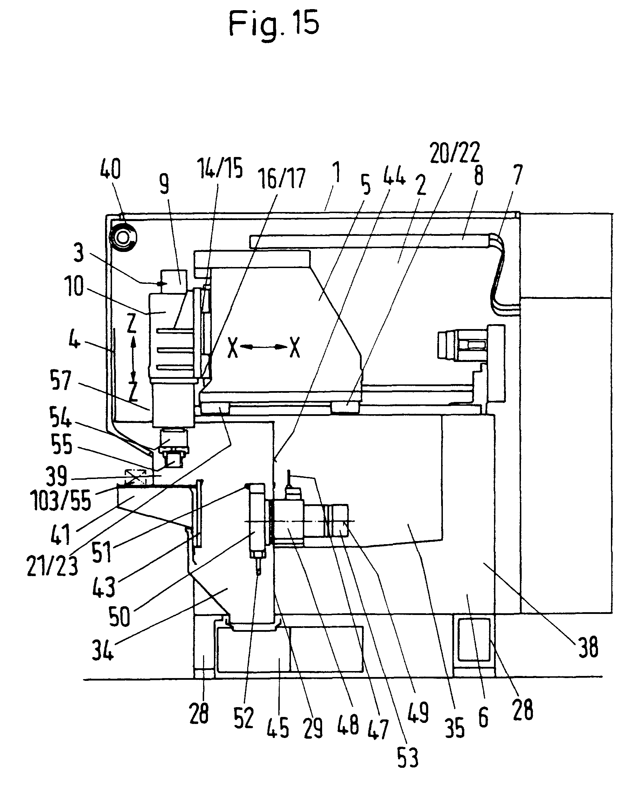

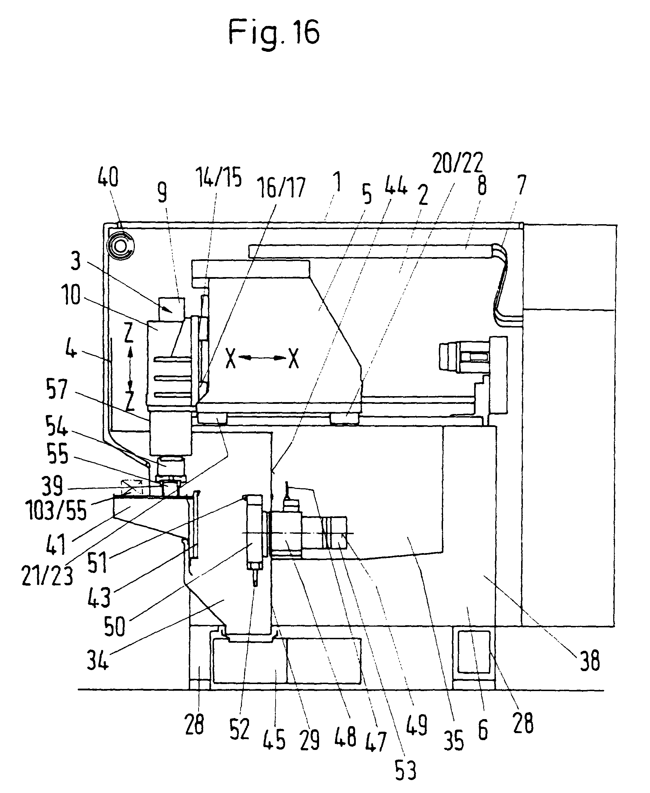

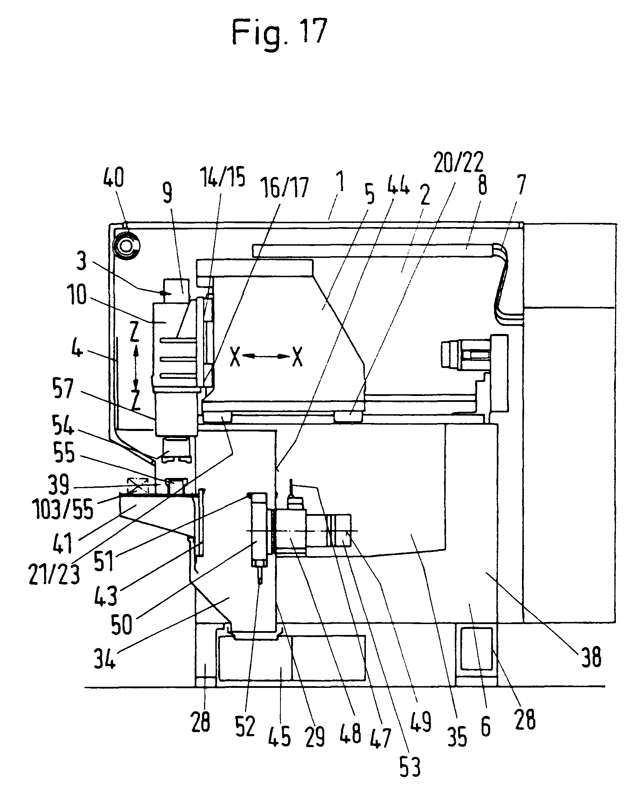

Nachdem der Meßvorgang beendet ist, wird die Motorspindel 3 in Pfeilrichtung Z nach oben (Figur 14) und der Kreuzschlitten 5 in Pfeilrichtung X wieder nach vorn gefahren (Figur 15). Die Tür 44, die den Arbeitsraum 34 zur Meßzone 35 verschließt, fährt in ihre geschlossene Stellung (Figur 15). Die Motorspindel 3 wird in Pfeilrichtung Z gemäß Figur 16 nach unten gefahren und legt das fertig bearbeitete Werkstück 55 auf dem Speicher- und Transportband 41 ab und fährt nach oben in eine Lage, in der sie gemäß Figur 17 zur Aufnahme eines neuen, unbearbeiteten Werkstückes 103 in Bereitstellung ist, woraufhin sich der Bearbeitungszyklus wiederholen kann.

Dadurch, daß die Be- und Entladezone 39, der Arbeitsraum 34 und die Meßzone 35 in der X-Richtung hintereinander angeordnet sind, ergibt sich ein störungsfreier Maschinenablauf. Die konsequente Trennung dieser drei Bereiche 39, 34 und 35 verhindert Späneprobleme bei dem Be- und Entladen der Werkstücke 103 bzw. 55 oder beim Messen. Die hängend angeordneten Werkstücke 103 bzw. 55 tragen zu einem optimalen Späneabfluß bei.

### Steuerungsbeschreibung:

### Bahnsteuerung Siemens 805 T mit integrierter PLC-Steuerung

Das Steuerungskonzept der in den Figuren 1 bis 17 dargestellten Bearbeitungsmaschine ist so angelegt, daß eine einfache Maschinensteuertafel, mit den für die Produktion notwendigen Bedienelementen, verwendet wird.

Zum Umrüsten auf ein neues Werkstück wird ein fahrbares Bedienputt mit Bildschirm, alphanumerischer Tastatur und Softkeytasten verwendet, das per Kabel und Stecker mit der Maschinensteuerung verbunden wird.

Diese Technik ist beim Einsatz mehrerer Maschinen kostengünstiger als pro Maschine ein vollwertiges Bedienpult. Außerdem hat der Maschinenbediener (nicht Einrichter) für den Produktionsablauf eine leichter zu beherrschende Bedienoberfläche.
Bedientafel mit 12" Monochrom-Bildschirm Handeingabe über alphanumerische Volltastatur Wiederanfahren an die Kontur
Bedienerunterstützung mittels 7 Softkeys über Softkey-Menue
Konventionelles Fahren in 2 Achsen simultan Automatischer Satzvorlauf auf eine Unterbrechungsstelle
Programmtestlauf ohne Maschine oder nur in einzelne Achsen
NC-Teileprogrammspeicher 16 KByte Schneidenradiuskompensation
Programmeingabe simultan zur Programmbearbeitung
Bearbeitungszyklen:
Direkte Kreisradiusprogrammierung
Bezugs- und Kettenmaßprogrammierung
Unterprogrammtechnik
Parametertechnik
1000 R-Parameter
Parameterrechnung
Parametervergleich
Ladefunktion für Parameter
Trigonometrische und arithmetische Rechenfunktion
Eingabefeinheit: 0,001 mm
Sicherheitsroutinen ständig aktiv für Meßkreise, Spannung, Speicher und Endschalter
Schnittstellendiagnose
Alarmtexte von NC und Maschine bzw. PLC auf dem Bildschirm
Anzeige interner PLC-Zustände
Konturüberwachung
Spindelüberwachung

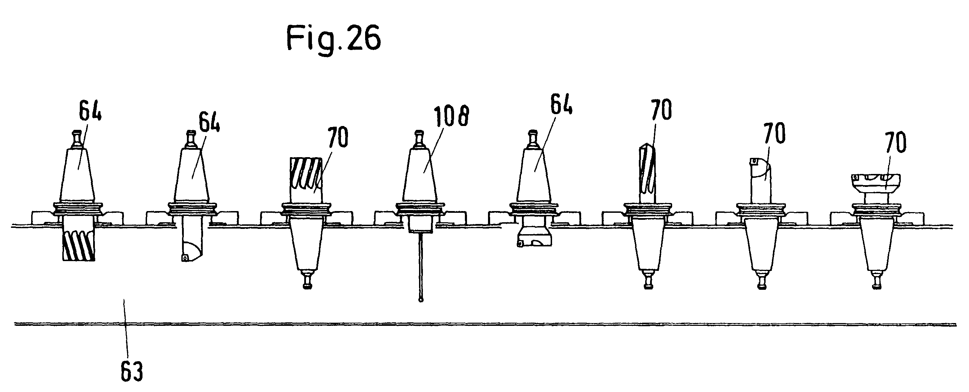

Bei der Ausführungsform nach den Figuren 18 bis 21 sind für Teile gleicher Funktion die gleichen Bezugszeichen wie bei der Ausführungsform nach den Figuren 1 bis 17 verwendet worden. Bei der Ausführungsform nach den Figuren 18 bis 20 sind in den als Führungswänden ausgebildeten seitenwänden 26 und 27 des Maschinengrundkörpers 6 zwei mit Abstand sowie parallel zueinander angeordnete Werkzeugträger für stehende Werkzeuge 58 und drehende Werkzeuge 59 auf einer motorisch angetriebenen Revolverwelle 60 angeordnet. Die Werkzeugträger 58, 59 tragen an ihrem Umfang mehrere Werkzeuge, von denen lediglich die Werkzeuge 61 (fest) und 62 (drehend) mit Bezugszeichen versehen worden sind. In der Ausbildung nach Figur 19 und 20 ist der Maschinengrundkörper 6 von einem Werkzeug-Speicherband 63 ringförmig umschlossen, auf dem die verschiedenen Werkzeuge 64, 70 in Bereitstellung mit ihrem Steilkegel 64 nach oben oder unten weisend abgelegt sind. Die Werkzeuge hängen (64) oder stehen (70) senkrecht in dem Werkzeug-Speicherband 63 (Figur 26), das die jeweils benötigten Werkzeuge taktweise heranfördern kann. Das Werkzeug-Speicherband 63 ist motorisch angetrieben und ebenfalls in die CNC-Steuerung der Maschine einbezogen.

Das ringförmige Werkzeugmagazin 63 wird von einem Speicher- und Förderband 65 umschlossen, das ebenfalls motorisch angetrieben ist und gleichfalls in die CNC-Steuerung einbezogen ist und auf dem die zu bearbeitenden Werkstücke 103 gleicher oder unterschiedlicher Art und die fertig bearbeiteten Werkstücke 55 taktweise durch motorischen Antrieb des Speicherund Förderbandes 65 bewegt werden. Die fertig bearbeiteten Werkstücke 55 werden z. B. durch einen nicht dargestellten Umsetzer abtransportiert.

Die Motorspindel 3 nimmt ein Werkstück 103 von dem Speicher- und Förderband 65 auf, wobei sie in vertikaler Richtung, also in Richtung der Z-Achse einen Hub ausführt. Nach dem Aufnehmen des Werkstückes 103 fährt die Motorspindel 3 in Richtung der Z-Achse z. B. 160 mm vertikal nach oben. Die den Arbeitsraum 34 verschließende Tür 43 ist dabei durch senkrechtes Hinunterfahren geöffnet, so daß die Motorspindel 3 mit dem Kreuzschlitten 5 in Richtung der X-Achse, also horizontal einen Hub ausführen kann. Bei der dargestellten Ausführungsform beträgt dieser Hub beispielsweise 980 mm. Die Motorspindel 3 mit dem Kreuzschlitten 5 hält dann in Richtung der Position 66 mit der ersten Aufspannung, wo dann die gewünschte Bearbeitung, zum Beispiel das Bohren eines Loches durch ein Werkzeug, zum Beispiel 70, vorgenommen wird. Nach der Vollendung des Bearbeitungsvorganges in der ersten Aufspannung fährt die Spindelstockeinheit 3, 5 weiter bis zur Position 68, in der das halbfertige Werkstück 102 an die Spannvorrichtung 69 weitergegeben wird. Die Spannvorrichtung 84 kann z. B. den Steilkegel eines Werkzeuges 64, 70 aufnehmen. Wird in der Position 68 das Werkstück 102 von der Spannvorrichtung 69 gehalten, dann erfolgt durch ein in der Spannvorrichtung 84 aufgenommenes Werkzeug 64 ein weiterer Bearbeitungsvorgang.

Die benötigten Werkzeuge werden jeweils aus dem Werkzeugmagazin 63 geholt und die nicht benötigten Werkzeuge in das Werkzeugmagazin 63 durch die Motorspindel 3 abgesetzt.

Der Transport der Schutzkappen (nicht dargestellt) für die nicht benötigten Spannvorrichtungen und das Entfernen dieser Schutzkappen von der jeweils benötigten Spannvorrichtung wird ebenfalls von der Motorspindel 3 bewerkstelligt.

Nach dem Fertigbearbeiten wird die Tür 44 zur Meßzone 35 geöffnet und die Spindelstockeinheit 3, 5 fährt das Werkzeug in die Meßzone 35, wo ein Meßtaster 47 an einem verschiebbaren Arm 71 angeordnet ist.

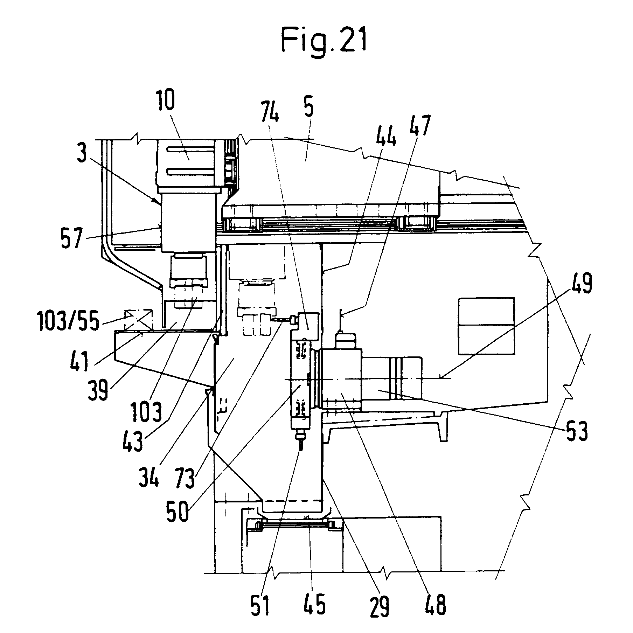

Bei der aus Figur 21 ersichtlichen Alternative sind für Teile gleicher Funktion die gleichen Bezugszeichen wie bei den vorbeschriebenen Ausführungsformen verwendet worden. Hier ist eine Revolvereinheit 48 mit den Werkzeugen 51, 73 und Eigenantrieb 74 versehen. Dadurch sind weitere Bearbeitungsvorgänge möglich.

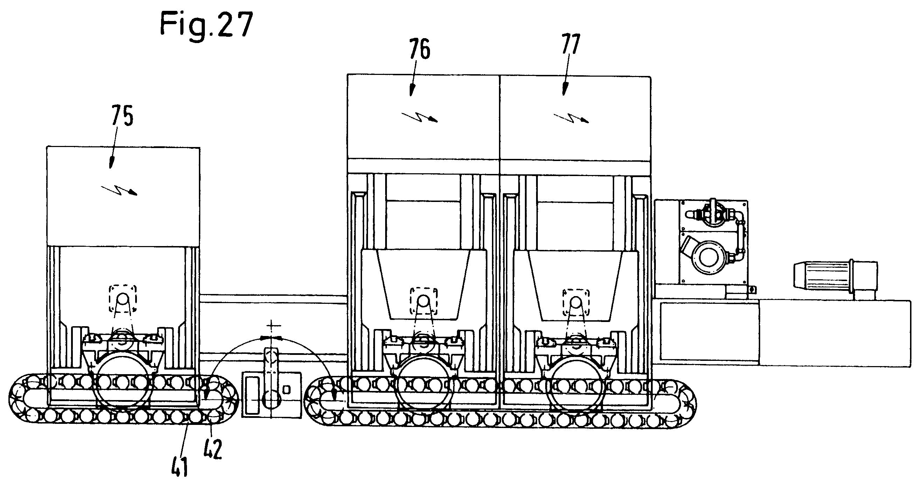

Wie die Figur 27 zeigt, ist das Verketten auf mehreren Maschinen 75, 76, 77 zu einer Transferstraße ohne weiteres möglich. Statt drei Maschinen können auch weniger oder wesentlich mehr Maschinen verkettet sein. Es ist auch denkbar, die Funktion aller Maschinen durch einen Zentralrechner zu steuern, der flexibel die Werkstück- und/oder Werkzeugzuführung steuert.

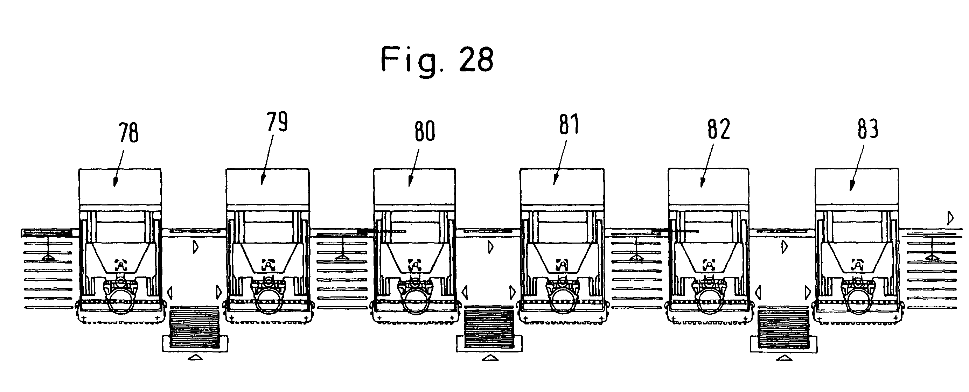

Eine weitere Alternative zur Verkettung mehrerer Einzelmaschinen 78, 79, 80, 81, 82 und 83 zu einer Transferstraße zeigt Figur 28. Hierbei übernehmen die verschiedenen Maschinen verschiedene, vorbestimmte Bearbeitungsvorgänge, nach deren Fertigstellung das Teil jeweils an die nächste Bearbeitungsmaschine weitergegeben wird. Der Transport kann durch Umsetzer vollautomatisch geschehen.

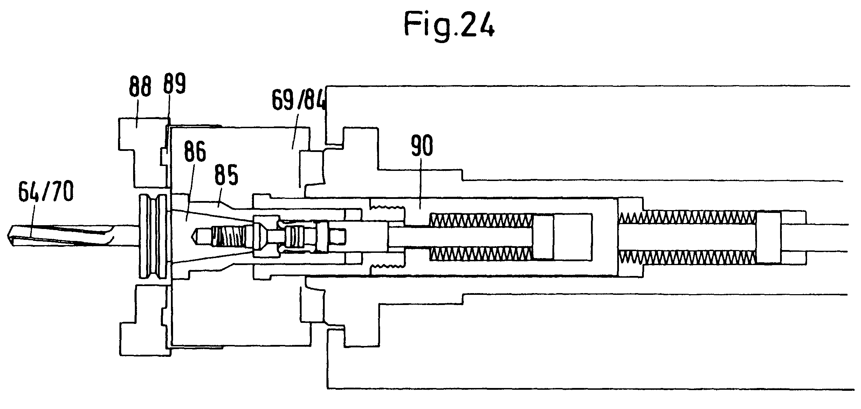

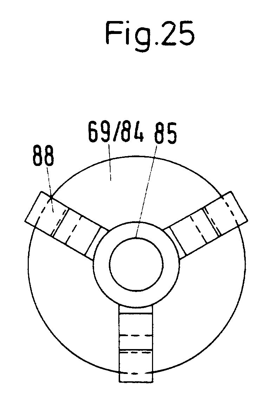

Alle Spannvorrichtungen für Werkstücke und Werkzeuge bei sämtlichen Ausführungsformen können gemäß Figur 24 und 25 ausgestaltet sein. Dabei handelt es sich um kombinierte Spannvorrichtungen 69, 84 mit einer zentrischen Werkzeugaufnabme 85 für den steilkegel 86 geeigneter Werkzeuge 64, 70 und Spannbacken 88, die auf Führungen 89 geführt sind. Durch eine Zugstange 90 können wahlweise sowohl die Werkzeugaufnahme 85 als auch die Spannbacken 88 betätigt werden. Die Spannbacken werden bei Verwendung als Werkzeugaufnahme abgedeckt. Die Schutzkappen können in der beschriebenen Art und Weise durch die Pick-up-Spindel, also die Motorspindel 3, bewegt und betätigt werden.

Bei den Ausführungsformen nach den Figuren 18 bis 21 können durch geeignete Steuerung der Motorspindel 3 und/oder des Revolver-Werkzeugträgers 50 bzw. 58, 59 auch Bearbeitungsvorgänge mit beliebigen Winkellagen im Raum vorgenommen werden. Zum Beispiel ist es möglich, Bohrungen in Werkstücke zu bohren, die unter einem beliebigen Winkel in dem Werkstück verlaufen.

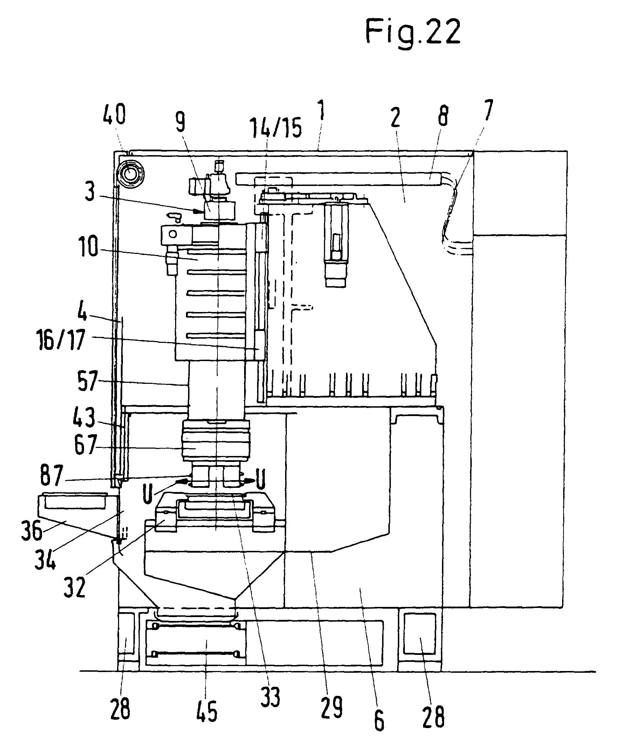

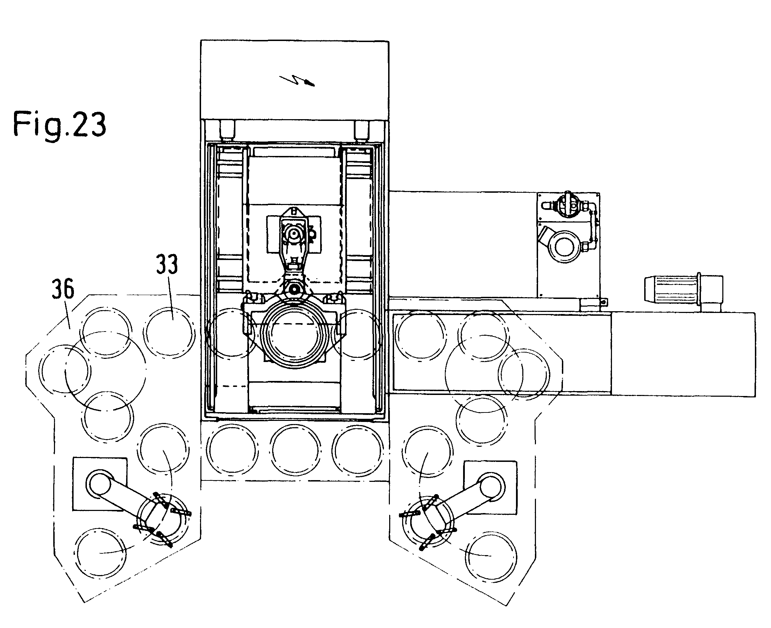

Bei der Ausführungsform nach den Figuren 22 und 23 sind für Teile gleicher Funktion die gleichen Bezugszeichen wie bei der Ausführungsform nach den Figuren 1 bis 17 verwendet worden. Hier ist die Motorspindel 3 mit einem CNC-gesteuerten Plandrehkopf 67 ausgerüstet. Dadurch sind weitere Bearbeitungsvorgänge möglich. Wie die Figur 23 zeigt, transportiert das Taktband 36 die Werkstücke 33 durch Öffnungen im Maschinengrundkörper 6 direkt in die Bearbeitungsposition. Dort werden sie von einer z. B. zentrisch spannenden Vorrichtung 32 zur nachfolgenden Bearbeitung durch den Plandrehkopf 67 mit den Werkzeugen 87 gespannt.

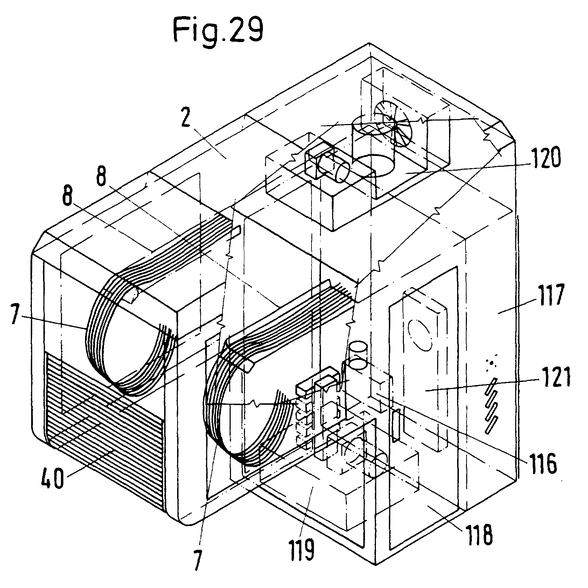

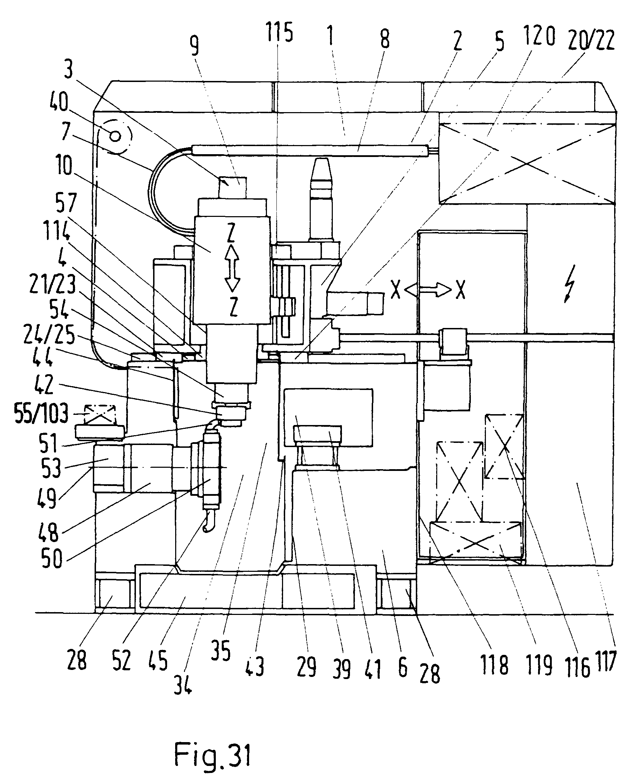

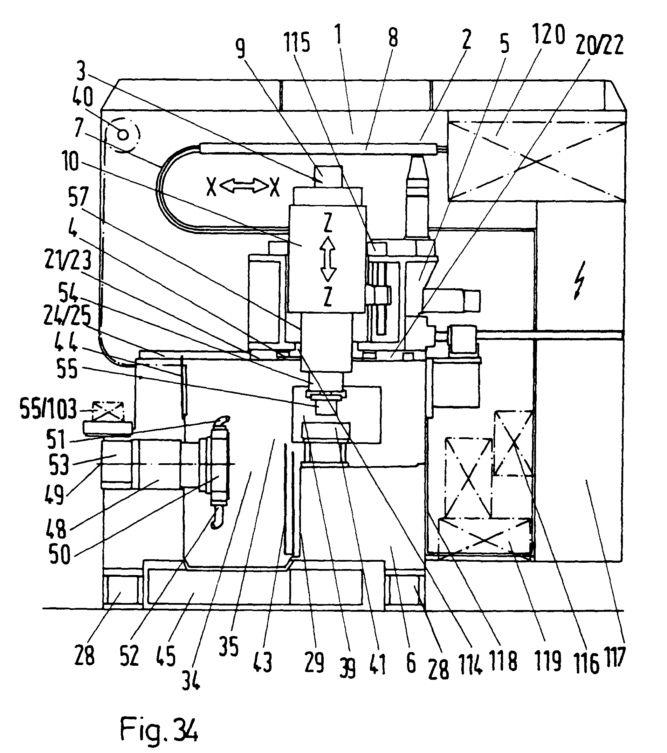

Bei den aus den Figuren 29 bis 34 ersichtlichen Ausführungsformen sind für Teile gleicher Funktion die gleichen Bezugszeichen wie bei den vorbeschriebenen Ausführungsformen verwendet worden.

Der aus Fig. 29 ersichtliche, als Energiecontainer ausgebildete Container enthält eine geeignete Elektroausrüstung 117, ein Hydraulikaggregrat 119, eine Zentralkühlung 120, eine Zentralschmierung 116 mit Pumpe, Ölbehälter und Schläuchen sowie einen Wärmetauscher für den Schaltschrank 121 sowie die anschlußfertige Verkabelung und Verrohrung, gegebenenfalls mit Steckkontakten.

Der aus Fig. 29 ersichtliche Container ist in der Seitenansicht etwa L-förmig ausgestaltet und weist mindestens eine Tür 118 auf, durch die das innere des L-Schenkels des Containers begehbar ist, um zum Beispiel die darin angeordneten Aggregate und Teile zu warten. Dadurch kann der Container räumlich und zeitlich unabhängig von den übrigen mechanishen Baueinheiten des Bearbeitungszentrums fertig installiert werden, so daß er als insgesamt bewegliche Baueinheit zu den übrigen Teilen der Maschine gebracht und an dieser anmontiert werden kann.

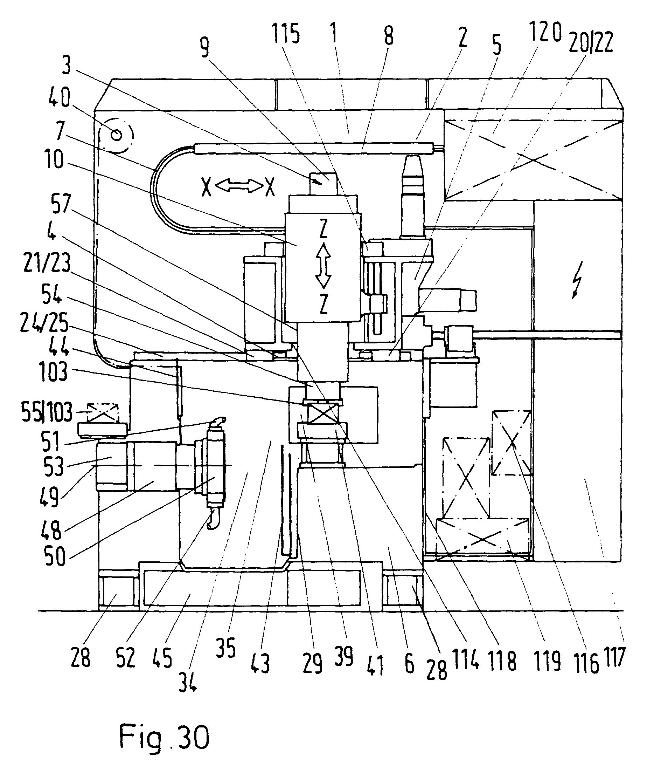

Wie die Fig. 30 bis 34 erkennen lassen, ist der Revolver 48 mit Werkzeugträger 50 bedienseitig angeordnet, das heißt dort wo die Bedienungsperson normalerweise steht. Dadurch ergibt sich eine gute Sicht auf die Werkzeugschneide und ein bequemes Wechseln der Werkzeuge.

Die Motorspindel 3 ist zentrisch im Kreuzschlitten 5 angeordnet und wird in einer hydrostatischen Führung 114, 115 in vertikaler Richtung bewegt. Durch die zentrische und damit beanspruchungs- und thermosymmetrische Anordnung ergibt sich eine hohe Steifigkeit und Temperaturstabilität. Die hydrostatische Führung 114, 115 führt zu guten Dämpfungseigenschaften und höherer Fertigungsqualität.

Die Be- und Entladezone 39 befindet sich hinter dem Arbeitsraum 34 im Innern des Bearbeitungszentrums. Dadurch wird die Be- und Entladezeit deutlich verkürzt.

Das Speicher- und Transportband 41 wird durch Aussparungen 30 (Fig. 2) im hinteren Bereich des Maschinengrundkörpers 6 in der Be- und Entladezone 39 durch das Bearbeitungszentrum hindurchgeführt.

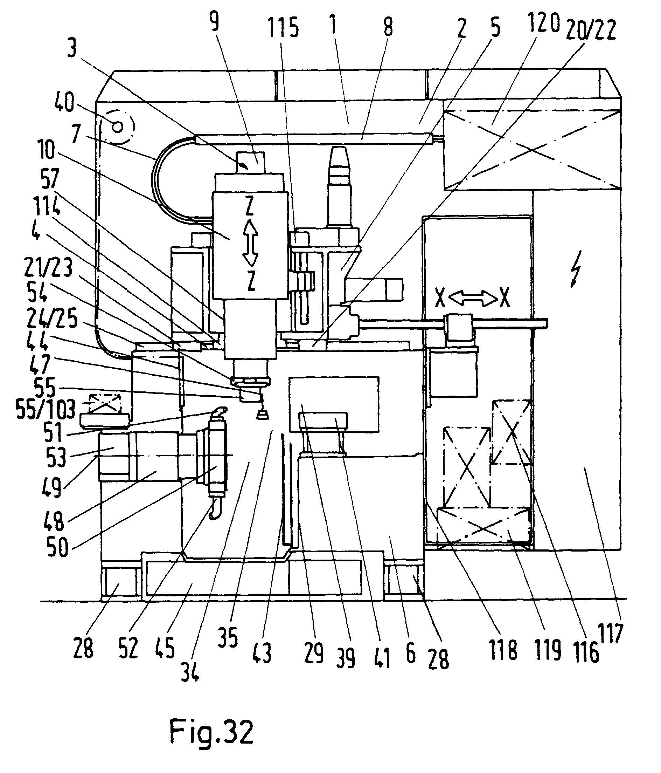

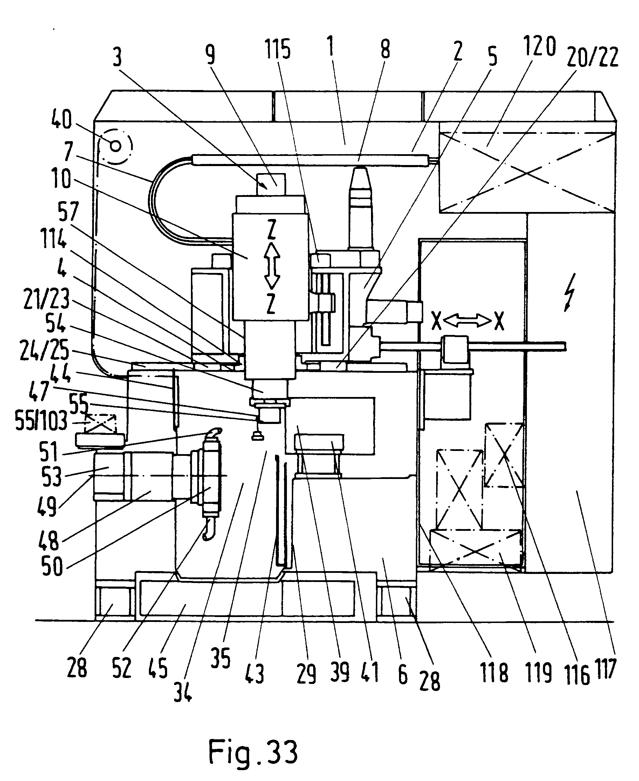

Zum Messen der Werkstücke 55 wird der Meßtaster 47 nach dem Öffnen der Tür 43 in den Arbeitsraum 34 eingeschwenkt (Fig. 32, 33). Die Meßzone 35 ist nicht mehr getrennt vom Arbeitsraum wie bei den vorbeschriebenen Ausführungsformen angeordnet, sondern liegt sowohl im Arbeitsraum 34 als auch in der Be- und Entladezone 39 (Fig. 32, 33).

Zwischen dem Maschinengrundkörper 6 und dem Schaltschrank 117 ist genügend Raum vorhanden, um das Hydraulikaggregat 119, das Zentralschmieraggregat 116 sowie den Wärmetauscher 121 innerhalb des Bearbeitungszentrums anzuordnen. Dieser Raum ist durch Türen 118 zugänglich.

Die Bearbeitungszelle wird komplett als eine Einheit transportiert. Die Inbetriebnahme beim Kunden kann daher in vergleichsweiser kurzer Zeit durchgeführt werden.

### Bezugszeichenliste

- 1: Bearbeitungszelle, Bearbeitungszentrum, Bearbeitungsmaschine
- 2: Energiecontainer, Container
- 3: Motorspindel
- 4: Blechabdeckung
- 5: Kreuzschlitten
- 6: Maschinengrundkörper
- 7: Kabel
- 8: Pritschen für elektrische Kabel und Schläuche
- 9: Spindel
- 10: Motor
- 11: Trägereinheit
- 12: Rippen
- 13: "
- 14: Führungsschuh
- 15: "
- 16: "
- 17: "
- 18: Führungsschiene
- 19: "
- 20: Führungsschuh
- 21: "
- 22: "
- 23: "
- 24: Führungsschiene, Führung
- 25: " , "
- 26: Seitenwand
- 27: "
- 28: Maschinenfuß
- 29: Formblech
- 30: Aussparung
- 31: "
- 32: Spannvorrichtung
- 33: Werkstück
- 34: Arbeitsraum
- 35: Meßzone
- 36: Werkstücktaktband
- 37: Steg
- 38: Ruckwand
- 39: Be- und Entladezone
- 40: Verschlußrollo
- 41: Speicher- und Transportband, Speicher- und Transporteinheit
- 42: Werkstück, allgemein
- 43: Tür
- 44: "
- 45: Späneförderer
- 46: Spänewagen
- 47: Meßtaster
- 48: Revolvereinheit
- 49: Achse, horizontale
- 50: Werkzeugträger
- 51: Meißel
- 52: Bohrer
- 53: Antriebsmotor für die Revolvereinheit 48
- 54: Spannfutter
- 55: Werkstück, fertig bearbeitetes
- 56: Bohrung
- 57: Außenmantelfläche der Motorspindel 3
- 58: Werkzeugträger für feststehende Werkzeuge
- 59: Werkzeugträger für angetriebene Werkzeuge
- 60: Welle
- 61: Werkzeuge, fest
- 62: Werkzeuge, drehend
- 63: Werkzeug-Speicherband
- 64: Werkzeug, hängend mit Steilkegelaufnahme
- 65: Speicher- und Förderband
- 66: Position
- 67: Plandrehkopf
- 68: Position
- 69: Spannvorrichtung, kombiniert
- 70: Werkzeug, stehend mit Steilkegelaufnahme
- 71: Arm
- 72: Multifunktionale Arbeitseinheit
- 73: Werkzeug, drehend
- 74: Eigenantrieb
- 75: Bearbeitungsmaschine
- 76: "
- 77: "
- 78: "
- 79: "
- 80: "
- 81: "
- 82: "
- 83: "
- 84: Spannvorrichtung, kombiniert
- 85: Werkzeugaufnahme, zentrische
- 86: Steilkegel
- 87: Werkzeuge für Plandrehkopf
- 88: Spannbacken
- 89: Führungen
- 90: Zugstange
- 100: Führungsschiene
- 101: "
- 102: Werkstück, halbseitig bearbeitet
- 103: Werkstück, roh
- 108: Meßtaster, einwechselbarer
- 111: Schieber, Kreuzschlitten, 3-achsig
- 112: Motorspindel, unten
- 113: Drehschieber, Kreuzschlitten, 4-achsig
- 114: Führung, hydrostatische
- 115: " "
- 116: Zentralschmieraggregat
- 117: Elektroausrüstung
- 118: Tür
- 119: Hydraulikaggregat
- 120: Zentralkühlgerät
- 121: Wärmetauscher
- C: Drehachse
- D: Schwenkachse
- E: "
- F: Drehachse
- U: Verschiebeachse des Plendrehkopfes
- X: Bewegungsrichtung
- Y: "
- Z: "

### Literaturverzeichnis

DE-PS 24 27 148'
DE-PS 27 39 087
DE-PS 34 16 660
DE-PS 663 434
DRP 735 752
DE-AS 20 13 403
DE-OS 17 52 68.1
DE-OS 25 10 933
DE-OS 38 24 602
DE-OS 40 12 690
US-PS3,918.331
US-PS 3,948,121
US-PS 4,237,598
US-PS 4,369,563
US-PS 4,621,410
US-PS 4,742,739
US-PS 4,797,990

## Patentansprüche

1. Aus Baugruppen zusammengesetzte Bearbeitungszelle, mit einem Maschinengrundkörper (6), dem eine Arbeitsraumverkleidung zugeordnet ist, und einem Arbeitsraum (34), wobei der Maschinengrundkörper (6) den Arbeitsraum (34) auf zumindest zwei Seiten umschließt und der Aufnahme von Werkzeugträgern und/oder Revolvern als feststehende Einheit dient, mit einer vertikal hängendgeführten, als Motorspindel (3) ausgebildeten Hauptspindel, die zusammen mit einem als Kreuzschlitten ausgebildeten, mit einem Abdeckblech versehenen Mehrachsschlitten (5) eine Spindelstockeinheit bildet wobei dem Maschinengrundkörper (6) oben die Führungen (24, 25) in einer Bewegungsrichtung für den Mehrachsschlitten (5) zu geordnet sind, wird die Motorspindel (3) zum Greifen, Spannen und Ablegen sowie zum Antreiben von Werkstücken oder Werkzeugen dient und CNC-gesteuert ist.
(Hieran schließen sich die Ansprüche 2 sowie 4 bis 16 und 18 bis 47 in der erteilten Fassung mit entsprechend geänderter Numerierung und Rückbeziehung an.)

2. Aus Baugruppen zusammengesetzte Bearbeitungszelle nach Anspruch 1, wobei die Spindel (9) von ihrem Motor (10) Konzentrisch umgeben ist und die CNC- Maschinensteuerung in einem energieversorgenden Containerartigen Raum angeordnet ist, mit Einrichtungen zum Sammeln von Spänen und Kühlmittel, einem Arbeitsraum (34), einer vor oder hinter dem Arbeitsraum (34) angeordneten Be- und Entladezone (39) und einer Speicher- und Transporteinheit (41), auf der die Werkstücke oder Werkzeuge angeordnet sind.

3. Bearbeitungszelle nach Anspruch 1 oder 2 **dadurch gekennzeichnet, daß** dem Maschinengrundkörper (6) an seiner Oberseite Führungen (24, 25) für den Kreuzschlitlen (5) zugeordnet sind.

4. Bearbeitungszelle nach Anspruch 2 oder einem der folgenden, **dadurch gekennzeichnet, daß** der die Maschinensteuerung aufnehmende containerartige Raum als am Maschinengrundkörper (6) befestigter Energiecontainer (2) ausgebildet ist.

5. Bearbeitungszelle nach Anspruch 3 oder 4, **dadurch gekennzeichnet, daß** zwischen den Führung en (24, 25) für den Kreuzschlitten (5) im Maschinengrundkörper (6) Aussparungen zum Sammeln und Abführen der Späne vorgesehen sind.

6. Bearbeitungszelle nach Anspruch 1 oder einem der folgenden, **dadurch gekennzeichnet, daß** an dem Kreuzschlitten (5) eine Blechabdeckung (4) befestigt ist, welche die Motorspindel (3) mit einem Spindelvorsatz abgedichtet in vertikaler Richtung durchgreift.

7. Bearbeitungszelle nach Anspruch 1 oder einem der folgenden, **dadurch gekennzeichnet, daß** in die CNC-Maschinensteuerung ein Meßtaster (47) zur Oberprüfung der bearbeiteten Werkstücke (33) einbezogen ist.

8. Bearbeitungszelle nach Anspruch/oder einem der folgenden, **dadurch gekennzeichnet, daß** die Aussparungen durch ein Formblech (29), das als verlorene Form in den Maschinengrundkörper (ε) eingegossen ist, geschützt sind.

9. Bearbeitungszelle nach Anspruch 1 oder einem der folgenden, **dadurch gekennzeichnet, daß** der Maschinengrundkörper (6) den Arbeitsraum (34) auf drei senkrecht aufeinanderstehenden Seiten und von unten umschließt.

10. Bearbeitungszelle nach Anspruch 1 oder einem der folgenden, **dadurch gekennzeichnet, daß** der Maschinengrundkörper (6) aus Reaktionsharzbeton gegossen ist.

11. Bearbeitungszelle nach Anspruch 1 oder einem der folgenden, **dadurch gekennzeichnet, daß** der Maschinengrundkörper (6) in einem zu seiner Längsachse orthogonal geführten Längsschnitt H-förmig ausgebildet ist.

12. Bearbeitungszelle nach Anspruch 1 oder einem der Ansprüche 2 bis 10, **dadurch gekennzeichnet, daß** der Maschinengrundkörper (5) in einem orthogonal zu seiner Längsachse geführten Schnitt etwa U-förmig ausgebildet ist.

13. Bearbeitungszelle nach Anspruch 1 oder einem der Ansprüche 2 bis 10, **dadurch gekennzeichnet, daß** der Maschinengrundkörper (6) in einem orthogonal zu seiner Längsachse geführten Schnitt etwa L-förmig gestaltet ist.

14. Bearbeitungszelle nach Anspruch 1 oder einem der folgenden dadurch gekennzeitnet, daß die Führungen (24 und 25) als parallel zueinander verlaufende Führungsschienen (24, 25) ausgebildet sind, von denen je eine an der Oberseite von Seitenwänden (26, 27) des Maschinengrundkörpers (6) angeordnet ist.

15. Bearbeitungszelle nach Anspruch 1 oder einem der folgenden, **dadurch gekennzeichnet, daß** der Maschinengrundkörper (5) auf abnehmbaren Maschinenfüßen (28) angeordnet ist, die einen Zwischenraurn zum Boden herstellen.

16. Bearbeitungezelle nach Anspruch 1 oder einem der folgenden, **dadurch gekennzeichnet, daß** in dem von dem Maschinengrundkörper (6) umschlosssnen Raum eine multifunktionale untere Bearbeitungseinheit (72) angeordnet ist.

17. Bearbeitungszelle nach Anspruch 1 oder einem der folgenden, **dadurch gekennzeichnet, daß** innerhalb des von dem Maschinengrundkörper (6) umschlossenen Raumes in den Seitenwänden (26, 27) des Maschinengrundkörpers (6) die Weile (60) eines Mehrfachrevolvers, zum Beispiel eines Doppelrevolvers mit den Werkzeugträgern (58, 59), angeordnet ist.

18. Bearbeitungszelle nach Anspruch 1 oder einem der folgenden, **dadurch gekennzeichnet, daß** die Führungen (24, 25) für den kreuzschlitten (5) nach vorn über die Bearbeitungsposition bis zu einem hier angeordneten Speicher- und Transportband (41) vorgezogen sind.

19. Bearbeitungszelle nach Anspruch 1 oder einem der folgenden, **dadurch gekennzeichnet, daß** die Spindelstockeinheit, bestehend aus Motorspindel (3) und Kreuzschlitten (5), zweiachsig ausgeführt ist, wobei der Kreuzschlitten in der X-Achse und die Motorspindel in der Z-Achse CNC-gesteuert verfahrbar angeordnet sind und daß die Motorspindel (3) über ein Speicher- und Transportband (41) verfahrbar ist.

20. Bearbeitungszelle nach Anspruch 1 oder einem der folgenden, **dadurch gekennzeichnet, daß** der Kreuzschlitten (5J durch einen reaktionsschnellen, frequenzgeregelten, wartungsfreien Drehstrommotor angetrieben ist, der den kreuzschlitten (5) über hochpräzise geschliffene Kugelrollspindeln antreibt, wobei in der X-Achse ein gekapseltes Linear-, in der Z-Achse ein Rotativ-Meßsystem eingebaut ist und beide Führungssysteme außerhalb des Arbeitsraumes (34) angeordnet sind.

21. Bearbeitungszelle nach Anspruch 4 oder einem der folgenden, **dadurch gekennzeichnet, daß** der Container (2) als freitragende Biechkonstruktion ausgebildet ist.

22. Bearbeitungeszelle nach Anspruch 4 oder einem der folgenden, **dadurch gekennzeichnet, daß** der Container (2) den Maschinengrundkörper (6) von oben und mindestens von drei Seiten ganz oder teilweise umschließt.

23. Bearbeitungszelle nach Anspruch 4 oder einem der folgenden, **dadurch gekennzeichnet, daß** der Container (2) den vollständig installierten Schaltschrank mit herausgeführten, vorkonfektionierten, steckbaren Anschlüssen zu den Verbrauchern enthält.

24. Bearbeitungszelle nach Anspruch 23 **dadurch gekennzeichnet, daß** zu den Anschlüssen auch elektrische Kabel (7) gehöre, die in pritschen (8) verlegt sind, wobei die Pritschen (8) einstückig mit dem Container (2) verbunden sind, während die Anschlüsse, insbesondere die elektrischen Kabel (7), in Schlaufen eine ungestörte Bewegung des Kreuzschlittens (5) und/oder der Motorspindel (3) ermöglichenden Art und Weise verlegt sind.

25. Bearbeitungszelle nach Anspruch 23, oder 24, **dadurch gekennzeichnet, daß** der Container (2) auch ein Kühlaggregat zur Spindel- und Schaltschrankkühlung und die Hydraulik- bzw. Luftversorgung enthält, wobei die Wasser-, Hydraulik- oder Luftschläuche wie die Elektrokabel (7) in Schlaufen zu den Verbrauchern geführt und gegebenenfalls in Pritschen (8) verlegt sind.

26. Bearbeitungszelle nach Anspruch 2 oder einem der folgenden, **dadurch gekennzeichnet, daß** die Beund Entladezone (39), der Arbeitsraum (34) und eine Meßzone (35) in X-Richtung hintereinander angeordnet und der Arbeitsraum (34) zur Be- und Entladezone (39) und zur Meßzone (35) durch eine in die Maschinensteuerung einbezogene zu öffnende und zu schließende Tür (43, 44) getrennt ist.

27. Bearbeitungszelle nach Anspruch 1 oder einem der Ansprüche 2 bis 26 **dadurch gekennzeichnet, daß** es zum Aufbau eines zweiachsigen, multifunktionalen Bearbeitungssystems zur Bearbeitung von Werkstücken mit zweiachsigem, multifunktionalen Kreuzschlitten (5) dient, mit einer Motorspindel (3), Blockstahlhalter oder Mehrfach-Scheibenrevolver (48, 50) und mit festen (51) oder drehenden (52) Werkzeugen, wobei
a) das Greifen und Spannen eines Rohteiles (103) und Ablegen eines Fertigteiles (55) in der Be- und Entladezone (39) eines Speicher- und Transportbandes (41) erfolgt;
b) für zentrische Bearbeitungsvorgänge, im wesentlichen Drehen, Schleifen, Bohren usw. sowie teilweise auch spanlosen Bearbeitungsverfahren wie Glatten, Rollieren und Kalibrieren;
c) zum Messen von Werkstücken (42) mit auf dem Maschinengrundkörper (6) angeordnetem Meßtaster (47);
d) bei Bedarf automatischer Austausch von verschlissenen Werkzeugen von auf einem Speicher- und Transportband (41) mittaktenden Werkzeugaufnahmevorrichtungen durch den Werkzeuggreifer an der oberen Arbeitseinheit (3, 5);
e) zum Vermessen der eingewechselten Werkzeuge mit einem in die Motorspindel (3) eingewechselten Meßlaster (105) oder durch einen am oberen kreuzschlitten (5) angeordneten, in den Arbeitsraum (34) positionierbaren Meßtaster.

28. Bearbeitungszelle zum Aufbau eines dreiachsigen, multifunktionalen Bearbeitungssystems nach Anspruch 1 oder einem der Ansprüche 2 bis 26 **dadurch gekennzeichnet, daß** es zur Bearbeitung von Werkstücken mit zweiachsigem, multifunktionalen Kreuzschlitten (5) mit einer Motorspindel (3) mit C-Achse, Blockstahlhalter oder Mehrfach-Scheibenrevolver (48, 50) mit festen (51) oder drehenden (52) Werkzeugen dient, wobei
a) das Greifen und Spannen eines Rohteils (103) und Ablegen eines Fertigteils (55) in der Be- und Entladezone (39) des Speicher- und Transportbandes (41) erfolgt;
b) zentrische Bearbeitungsvorgänge, im wesentlichen Drehen, Schleifen, Bohren usw. sowie teilweise auch spanlose Bearbeitungsverfahren wie Glätten, Rollieren und Kalibrieren möglich sind;
c) zum Messen von Werkstücken mit auf dem Maschinengrundkörper (6) angeordnetem Meßtaster (47);
d) bei Bedarf automatischer Austausch von verschlissenen Werkzeugen von auf einem Speicher- und Transportband (41) mittaktenden Werkzeugaufnahmevorrichtungen durch den Werkzeuggreifer an der oberen Arbeitseinheit(3,5);
e) zum Vermessen der eingewechselten Werkzeuge (51, 52) mit einem in die obere Arbeitsspindel (3) eingewechselten Meßtaster (108) oder durch einen am oberen Kreuzschlitten (5) angeordneten, in den Arbeitsraum (34) positionierbaren Meßtaster.

29. Bearbeitungszelle zum Aufbau eines vierachsigen, multifunktionalen Bearbeitungssystems nach Anspruch 1 oder einem der Ansprüche 2 bis 26, **dadurch gekennzeichnet, daß** es zur Bearbeitung von Werkstücken mit dreiachsigem, multifunktionalen Kreuzschlitten (5, 111) mit einer Motorspindel (3) mit C-Achse und querliegendem Doppelrevolver (58, 59) oder Mehrfach-Werkzeugaufnahmebalken dient, wobei der Doppelrevolver feste (61) und drehende (62) Werkzeuge aufweist, wobei
a) das Greifen und Spannen eines Rohteils (103) und Ablegen eines Fertigteils (55) in der Be- und Entladezone (39) des Speicher- und Transportbandes (41) erfolgt;
b) eine 5-Seiten-Bearbeitung für alle denkbaren spanabhebenden sowie teilweise auch spanlosen Bearbeitungsverfahren wie Glätten. Rollieren, Kalibrieren, Laserschweißen usw. vornehmbar ist;
c) zum Messen von Werkstücken mit auf dem Maschinengrundkörper (6) angeordnetem Meßtaster (47);
d) bei Bedarf automatischer Austausch von verschlissenen Werkzeugen von auf dem Speicher- und Transportband (41) mittaktenden Werkzeugaufnahmevorrichtungen durch den Werkzeuggreifer an der oberen Arbeitseinheit (3, 5,111);
e) zum Vermessen der eingewechselten Werkzeuge (61, 62) mit einem in die Motorspindel (3) eingewechselten Meßtaster (108) oder durch einen am oberen Kreuzschlitten (5) angeordneten, in den Arbeitsraum (34) positionierbaren Meßtaster.

30. Bearbeitungszelle zum Aufbau eines sechsachsigen, multifunktionalen Bearbeitungssystemes nach Anspruch 1 oder einem der Ansprüche 2 bis 19, **dadurch gekennzeichnet, daß** es zur Komplettbearbeitung eines Werkstücks in zwei Aufsuannungen mit dreiachsigem, multifunktionalem Kreuzschlitten (5, 111) mit einer Motorspindel (3) mit C-Achse und einer unteren, multifunktionalen Arbeitseinheit (72) mit einer E-Achse zum Schwenken und einer Motorspindel (112) mit F-Achse dient, wobei
a) das Greifen und Spannen eines Rohleils (103) und Ablegen eines Fertigteils (55) in der Be- und Entladezone (39) mit der Spannvorrichtung (84) auf der Motorspindel (3) erfolgt;
b) eine 5-Seiten-Bearbeitung in allen Winkellagen für alle denkbaren spanabhebenden sowie teilweise auch spanlosen Bearbeitungsverlahren wie Glätten, Rollieren, Kelibrieren, Laserschweißen usw. vornehmbar ist;
c) zum Hessen des Werkstückes (42) mit einem auf dem Maschinengrundkörper (6) angeordnetem Meßtaster (47);
d) zur Entnahme von Werkzeugen (70), durch einen Werkzeuggreifer, der an der oberen Arbeitseinheit (3, 5, 111) befestigt ist, aus der unteren Motorspindel (112) und Übergabe an ein Speicherband (63) als Werkzeügmagazin und umgekehrt;
e) zum Vermessen der eingewechselten unteren Werkzeuge (70) mit dem am oberen Kreuzschlitten (5, 111) angeordneten, in dem Arbeitsraum (34) positionierbaren Meßtaster;
f) zum Abnehmen der Schutzkappe von der Spannvorrichtung (69) der unteren Arbeitseinheit (72) durch den Werkzeuggreifer der oberen Arbeitseinheit (3, 5, 111) und Übergabe an das WerkzeugSpeicherband (63) und umgekehrt;
g) zum Umspannen des halbfertigen Werkstükkes (102) in die Spannvorrichtung (69) der unteren Arbeitseinheit (72);
h) zum Abdecken der oberen Spannvorrichtung (84) durch direktes Aufnehmen der Schutzkappe vom Werkzeug-Speicherband (63) oder umgekehrt;
i) zum Einwechseln von Bearbeitungswerkzeugen in die obere Motorspindel (3) direkt aus dem Werkzeug-Speicherband (63) in der Beund Entladezone (39) und Wiederabgeben an dieses;
j) zum Vermessen der in die obere Motorspindel (3) eingewechselten Werkzeuge (64) mit dem auf dem Maschinengrundkörper (6) angeordneten Meßtaster (47);
k) zur Bearbeitung der noch unbearbeiteten Werkstückoberfläche für das Werkstück (102), das in der unteren Motorspindel (112) gespannt ist und gegebenenfalls 5-Seiten-Bearbeitung in allen Winkellagen für alle denkbaren spanabhebenden sowie teilweise auch spanlosen Bearbeitungsverfahren wie Glätten, Rollieren, Kalibrieren, Laserschweißen usw.;
l) zum Messen von Werkzeugen (70), die in der unteren Motorspindel (112) gespannt sind, mit dem am oberen Kreuzschlitten (5, 111) angeordneten, in den Arbeitsraum (34) positionierbaren Meßtaster;
m) zum Entnehmen des fertigen Werkstückes (55) aus der unteren Arbeitseinheit (72) und Übergabe an das Werkstück-Speicherband (65).

31. Bearbeitungszelle nach Auspruch 1 oder einem der folgenden, zum Aufbau eines siebenachsigen, multifunktionalen Bearbeitungssystems, **dadurch gekennzeichnet, daß** es zur Komplettbearbeitung eines Werkstücks in, zwei Aufspannungen mit vierachsigem, multifunktionalem Kreuzschlitten mit D-Achse (5, 111, 113), mit einer Spindeleinheit (3) mit C-Achse und einer unteren, multifunktionalen Arbeitseinheit (72) mit einer E-Achse zum Schwenken und einer Spindeleinhelt mit F-Achse dient, wobei
a) das Greifen und Spannen eines Rohteils (103) und Ablegen eines Fertigteils (55) in der Be- und Entladezone (39) mit der Spannvorrichtung (84) auf der oberen Arbeitseinheit (3, 5,111,113) erfolgt;
b) eine 5-Seiten-Bearbeitung in allen Winkellagen für alle denkbaren spanabheberden sowie teilweise auch spanlosen Bearbeitungsverfahren wie Glätten, Rollieren, Kalibrieren, Laserschweißen usw. vornehmbar ist;
c) zum Messen der Werkstücke (42) mit einem auf dem Maschinengrundkörper (6) angeordneten Meßtaster (47);
d) zur Entnahme von Werkzeugen (70) durch einen Werkzeuggreifer, der an der oberen Arbeitseinheit, (3, 5, 111,113) befestigt ist, aus der unteren Motorspindel (112) und Übergabe an das Werkzeug-Speicherband (63) und umgekehrt;
e) zum Vermessen der eng zwechselten unteren Werkzeuge (70) mit dem am oberen Kreuzschlitten (5, 111, 113) angeordneten, in dem Arbeitsraum (34) positionierbaren Meßtaster;
f) zum Abnehmen der Schulzkappe von der Spannvorrichtung (69) der unteren Arbeitseinheit (72) durch den Werkzeuggreifer der oberen Arbeitseinheit (3, 5, 111, 113) und Übergabe an das Werkzeug-Speicherband (63) und umgekehrt;
g) zum Umspannen des halbiertigen Werkstükkes (102) in die Spannvorrichtung (69) der unteren Arbeitseinheit (72);
h) zum Abdecken der oberen Spannvorrichtung (84) durch direktes Aufnehmen der Schutzkappe vom Speicherband und umge-. kehrt;
i) zum Einwechseln von Bearbeitungswerkzeugen (64) in die obere Motorspindel (3) direkt aus dem Werkzeug-Speicherband (63) in der Be- und Entladezone (39) und Wiederobgeben an dieses;
j) zum Vermessen der in die obere Motorspindel (3) eingewechselten Werkzeuge (64) mit dem auf dem Maschinengrundkörper (6) angeordneten Meßtaster (47);
k) zum Bearbeiten der noch unbearbeiteten Werkstückoberflächenfür das Werkstück (102), das in der unteren Motorspindel (112) eingespannt ist und gegebenenfalls 5-Seiten-Bearbeitung in allen Winkellagen für alle denkbaren spanabhebenden sowie teilweise auch spanlosen Bearbetungsverfahren wie Glätten, Rollieren, Kalibrieren, Laserschweißen usw.;
l) zum Messen von Teilen (42), die in der unteren Motorspindel (112) gespannt sind, mit dem am oberen Kreuzschlitten (5, 111, 113) angeordneten, in den Arbeitsraum (34) positionierbaren Meßtaster;
m) zum Entnehmen des fertigen Werkstückes (55) aus der unteren Arbeitseinheit (72) und Übergabe an das als Speicher- und Transportband ausgebildete Werkstück-Speicherband (65).

32. Bearbeifungszelle nach Anspruch 1 oder einem der folgenden, **dadurch gekennzeichnet, daß** die Lager der Spindel (9) auf konstante Temperatur gekühlt sind.

33. Bearbeitungszelle nach Anspruch 1 oder einem der folgenden, **dadurch gekennzeichnet, daß** bei einem dreiachsigen Kreuzschlitten (5, 111) ein über der Führung für die X-Achse liegender Schieber (111) den Kreuzschlitten (5) für die Y-Achse trägt.

34. Bearbeitungszelle nach Anspruch 16 oder einem der folgenden, **dadurch gekennzeichnet, daß** die untere multifunktionale Arbeitseinheit (72)
a) mit mehreren festen Werkzeugen (70) und
b) einer außermittig gelagerten Motorspindel (112) ausgerüstet ist;
c) die gesamte Einheit ist CNC-gesteuert schwenkbar, wobei die Motorspindel (112) mit ihrer Schwenkachse (E-Achse) in jedem beliebigen Winkel arbeiten kann;
d) die Motorspindel (112) ist stufenlos von einem eingebauten oder außenliegenden AC-Motor angetrieben;
e) die Motorspindel (112) trägt, eine kombinierte Werkstück- und Werkzeug-Spannvorrichtung (69) zur wahlweisen Aufnahme von Werkzeugen (70) und Werkstücken (102);
f) die Motorspindel (112) hat eine CNC-gesteuerte Achse (F-Achse);

35. Bearbeitungszelle nach Anspruch 18 oder einem der folgenden, **dadurch gekennzeichnet, daß** das Speicher- und Transportband (41) mit Frismenmitnahmen für die Werkstücke (65) und Werkzeuge (63) versehen ist.

36. Bearbeitungszelle nach Anspruch 1 oder einem der folgenden, **gekennzeichnet durch** eine Schutzverkleidung aus Aluminiumlamellen in Form eines Verschlußrollos (40) das den Frontbereich der Maschine abdeckt.

37. Bearbeitungszelle nach Anspruch 1 oder einem der Ansprüche 2 bis 26, **gekennzeichnet durch** die Bearbeitung der Werkstücke (33) mit ein- oder mehrachsigem multifunktionalem Kreuzschlitten mit einer Motorspindel (3) und einer U-Achse im CNC-Plandrehkopf (67) zur Verstellung der Werkzeuge (87), wobei das Greifen, Spannen und Ablegen eines Werkstückes (33) aus dem Taktband (36) **durch** eine Spannvorrichtung (32) erfolgt für z. B. zentrische Bearbeitungsvorgänge wie Konturdrehen, Ausdrehen und Plandrehen.

38. Bearbeitungszelle nach Anspruch 1 oder einem der folgenden, **dadurch gekennzeichnet, daß** die Motorspindel (3) zentrisch im Kreuzschlitten (5) angeordnet ist.

39. Bearbeitungszelle nach Anspruch 1 oder einem der folgenden, **dadurch gekennzeichnet, daß** die Motorspindel (3) in einer hydrostatischen Führung (114, 115) in vertikaler Richtung bewegbar geführt ist.

40. Bearbeitungszelle nach Anspruch 38 oder 39. **dadurch gekennzeichnet, daß** die Be- und Entladezone (39) sich hinter dem Arbeitsraum (34) im Innern des Bearbeitungszentrums befindet.

41. Bearbeitungszelle nach Anspruch 18 oder einem der folgenden, **dadurch gekennzeichnet, daß** das Speicher- und und Transportband (41) durch Aussparungen (30, 31) im hinteren Bereich des Maschinengrundkörpers (6) in der Be- und Entladezone (39) durch das Bearbeitungszentrun hindurchgeführt ist.

42. Bearbeitungszelle nach Anspruch 7 oder einem der folgenden, **dadurch gekennzeichnet, daß** der Meßtaster (47) nach dem Öffnen einer Tür (43) in den Arbeitsraum (34) automatisch einschwenkbar ist.

43. Bearbeitungszelle nach Anspruch 7 oder einem der folgenden, **dadurch gekennzeichnet, daß** die Meßzone (35) teils im Arbeitsraum (34) als auch in der Beund Entladezone (39) angeordnet ist.

44. Bearbeitungszelle nach Anspruch 1 oder einem der folgenden, **dadurch gekennzeichnet, daß** zwischen Maschinengrundkörper (6) und einem Schaltschrank (117) ein Raum vorhanden ist, in dem ein Hydraulikaggregat (119), ein Zentralschmieraggregat (116) sowie ein Wärmelauscher (121) angeordnet sind und daß dieser Raum durch wenigstens eine Tür (118) verschließbar ist.

45. Bearbeitungszentrum nach Anspruch 44, **dadurch gekennzeichnet, daß** der Energiecontainer (2) in der Seitenansicht L-förmig gestaltet ist, derart, daß sich die zum Betrieb der Maschine erforderlichen elektrischen, hydraulischen und/oder Luftversorgungsleitungen vorkonfektioniert und z.B. steckbar im wesentlichen in dem horizontal angeordneten L-Schenkel und der Schaltschrank (117), das Hydraulikaggregat (119) sowie das Zentralschmieraggregat (116) und der Wärmetauscher (121) mit wenigstens einer Tür (118) in dem vertikal dazu angeordnetem Schenkel befinden und daß der horizontal angeordnete L-Schenkel den Maschinengrundkörper (6) von oben und ein Teil des dazu verlaufenden, vertikalen L-Schenkels die eine Stirnwand des Maschinengrundkörpers (6) abdeckt.

## Claims

1. A machining cell composed of assemblies, with a machine base (6), which a work area housing is allocated to, and a work area (34), whereby the machine base (6) encloses the work area (34) on at least two sides and serves to receive tool carriers and/or turrets as a fixed unit, with a vertically suspended, guided main spindle designed as a motor spindle (3), which together with multiple-axis slide (5) provided with a sheet metal cover and constructed as a compound slide forms a headstock unit, whereby the guides (24, 25) are allocated to the machine base (6) in the upper area one direction of movement for the multiple-axis slide (5), and whereby the motor spindle (3) serves for gripping, clamping end depositing as welt as for driving workpieces or tools and is CNC-controlled.

2. A machining cell composed of assemblies according to claim 1, whereby the spindle (9) is surrounded concentrically by Its motor (10), and the CNC machine control system is arranged in a power-supplying container-type area, with equipment for collecting swarf and coolant, a work area (34), a loading and unloading zone (39) located before or behind the work area (34) and a storage and transport unit (41), on which the workpieces or tools are arranged.

3. A machining cell according to claim 1 or 2, **characterised in that** guides (24, 25) for the compound slide (5) are allocated to the machine base (6) on its top side.

4. A machining cell according to claim 2 or one of the following claims, **characterised in that** the container-type room accommodating the machine control system is constructed as a power container (2) attached to the machine base (6).

5. A machining cell according to claim 3 or 4, **characterised in that** openings for collecting and removing swarf are provided between the guides (24, 25) for the compound slide (5) in the machine base (6).

6. A machining cell according to claim 1 or one of the following alarms, **characterised in that** a sheet metal cover (4) which the motor spindle (3) with a sealed spindle attachment passes through in the vertical direction, is attached to the compound slide (5).

7. A machining cell according to claim 1 or one of the following claims, **characterised in that** the CNC machine control system includes a measuring probe (47) for examining the machined workpieces (33).

8. A machining cell according to claim 5 or one of the following alarms, **characterised in that** the openings are protected by a shaped sheet casting (29) cast as a lost form in the machine base (6).

9. A machining cell according to claim 1 or one the following claims, **characterised in that** the machine base (6) encloses the work area (34) on three sides orthogonal one to another and from below.

10. A machining cell according to claim 1 or one of the following claims, **characterised in that** the machine base (6) is cast from a reaction resin concrete.

11. A machining cell according to claim 1 or one of the following claims, **characterised in that** the machine base (6) is designed as an H shape in a longitudinal section orthogonal to its longitudinal axis.

12. A machining cell according to claim 1 or one of the claims 2 to 10, **characterised in that** the machine base (6) is designed as an approximately U shape in a section orthogonal to its longitudinal axis.

13. A machining cell according to claim 1 or one of the claims 2 to 10, **characterised in that** the machine base (6) is designed as an approximately L shape in a section orthogonal to its longitudinal axis.

14. A machining cell according to claim 1 or one of the following claims, **characterised in that** the guides (24 and 25) are designed as guide rails (24, 25) running parallel to one an other, one each of said guide rails being allocated at the upper side of the side walls (26, 27) of the machine base (6).

15. A machining cell according to claim 1 or one of the following claims, **characterised in that** the machine base (6) is arranged on removable machine pedestals (28), providing an intermediate space to the bottom.

16. A machining cell according to claim 1 or one of the following claims, **characterised in that** a multifunctional lower machining unit (72) is located in the area enclosed by the machine base (6).

17. A machining cell according to claim 1 or one of the following claims, **characterised in that** the shaft (60) of a multiple turret, for example, of a double turret with the tool carriers (58, 59), is located within the area enclosed by the machine base (6) in the side walls (26, 27) of the machine base (6).

18. A machining cell according to claim 1 or one of the following claims, **characterised in that** the guides (24, 25) for the compound slide (5) are extended beyond the machining position up to a storage and conveyor belt (41) arranged there.

19. A machining cell according to claim 1 or one of the following claims, **characterised in that** the headstock unit comprising a motor spindle (3) and compound slide (5) is of a two-axis construction, whereby the compound slide is movable along the X axis and the motor spindle is arranged in the Z axis in a CNC controlled traversable position, and **in that** the motor spindle (3) is traversable via a storage and conveyor belt (41).

20. A machining cell according to claim 1 or one of the following claims, **characterised in that** the compound slide (5) is driven by a rapid-reaction, frequency-controlled, maintenance-free three-phase motor for driving the compound slide (5) through high-precision ground ball spindles, whereby an encapsulated linear measuring system is incorporated along the X axis and a rotating measuring system along the Z axis, with both guide systems being arranged outside the work area (34).

21. A machining cell according to claim 4 or one of the following claims, **characterised in that** the container (2) is designed as a self-supporting sheet metal construction.

22. A machining cell according to claim 4 or one of the following claims, **characterised in that** the container (2) completely or partly encloses the machine base (6) from above and at least from three sides.

23. A machining cell according to claim 4 or one of the following claims, **characterised in that** the container (2) houses the completely installed control cabinet with projecting, preassembled plug connections to the consumers.

24. A machining cell according to claim 23, **characterised in that** the connections also include electrical cables (7) installed in racks (8), said racks (8) being linked with the container (2) in one piece, and whereby the connections, especially the electrical cables (7), are installed in loops so as to enable unhindered movement of the compound slide (5) and/or the motor spindle (3).

25. A machining cell according to claim 23 or 24, **characterised in that** the container (2) also contains a cooling unit for the motor spindle and control cabinet cooling as well as the hydraulic and air supply, whereby the water, hydraulic or air tubes, like the electrical cables (7), are guided in loops to the consumers and, where necessary, installed in racks (8).

26. A machining cell according to claim 2 or one of the following claims, **characterised in that** the loading and unloading zone (39), the work area (34) and a measuring zone (35) are arranged in sequence in an X direction, and whereby the work area (34) to the loading and unloading zone (39) and to the measuring zone (35) is separated by a door (43, 44) to be opened and closed that is included in the machine control system.

27. A machining cell according to claim 1 or any of claims 2 to 26, **characterised in that** it serves for constructing a two-axis multifunctional machining system for machining workpieces with a two-axis, multifunctional compound slide (5), with a motor spindle (3), a bloom carrier or multiple turret unit (48, 50) and with fixed (51) or rotating (52) tools, whereby
a) gripping and clamping a blank (103) and depositing a finished workpiece (55) take place in the loading and unloading zone (39) of the storage and conveyor belt (41);
b) means are provided for carrying out centrical machining processes, essentially turning, grinding, drilling, etc., as well as partly also non-cutting machining such as planishing, rolling and calibrating;
c) means are provided for measuring workpieces (42) with the probe (47) located on the machine base (6);
d) means are provided for enabling, where necessary, automatic exchange of worn tools from indexing tool carrying devices provided on a storage and conveyor belt (41) by means of the tool gripper on the upper machining unit (3, 5);
e) means are provided for measuring the exchanged tools with a probe (108) exchanged in the motor spindle (3) or by means of a probe located on the upper compound slide (5) said probe being movable into the work area (34).

28. A machining cell for assembling a three-axis multifunctional machining system according to claim 1 or any of claims 2 to 26, **characterised in that** it serves to machine workpieces with a two-axis multifunctional compound slide (5) with a motor spindle (3) with a C axis, a bloom carrier or multiple turret unit (48, 50) with fixed (51) or rotating (52) tools, whereby
a) gripping and clamping a blank (103) and depositing a finished workpiece (55) take place in the loading and unloading zone (39) of the storage and conveyor belt (41);
b) means are provided for carrying out centric machining processes, essentially turning, grinding, drilling, etc., as well as partly also non-cutting machining such as planishing, rolling and calibrating
c) means are provided for measuring workpieces with a probe (47) located on the machine base (6);
d) means are provided for enabling, where necessary, automatic exchange of worn tools from indexing tool carrying devices provided on a storage and conveyor belt (41) by means of the tool gripper on the upper machining unit (3, 5);
e) means are provided for measuring the exchanged tools (51, 52) with a probe (108) exchanged in the upper working spindle (3) or by means of a probe located on the upper compound slide (5) said probe being movable into the work area (34).

29. A machining cell for assembling a four-axis multifunctional machining system according to claim 1 or any of claims 2 to 26, **characterised in that** it serves to machine workpieces with a three-axis multifunctional compound slide (5, 111 ) with a motor spindle (3) with a C axis and a transverse double turret (58, 59) or a multiple tool carrying beam, the double turret being provided with fixed (62) and rotating (62) tools, whereby
a) gripping and clamping a blank (103) and depositing a finished workpiece (55) take place in the loading and unloading zone (39) of the storage and conveyor belt (41);
b) means are provided for carrying out 5-sided machining processes for all conceivable cutting as well as partly also non-cutting machining, such as planishing, rolling and calibrating, laser-welding, etc.
c) means are provided for measuring workpieces with a probe (47) located on the machine base (6);
d) means are provided for enabling, where necessary, automatic exchange of worn tools from indexing tool carrying devices provided on a storage and conveyor belt (41) by means of the tool gripper on the upper machining unit (3, 5,111); );
e) means are provided for measuring the exchanged tools (61, 62) with a probe (108) exchanged in the motor spindle (3) or by means of a probe located on the upper compound slide (5) said probe being movable into the work area (34).

30. A machining cell for assembling a six-axis multifunctional machining system according to claim 1 or any of claims 2 to 19, **characterised in that** it serves to completely machine a workpiece in two settings with a three-axis multifunctional compound slide (5, 111) with a motor spindle (3) with a C axis and a lower multifunctional machining unit (72) with an E axis for swivelling and a motor spindle (112) with an F axis, whereby
a) gripping and clamping a blank (103) and depositing a finished workpiece (55) take place in the loading and unloading zone (39) with the clamping device (84) on the motor spindle (3);
b) means are provided for carrying out 5-sided machining in all angular positions for all conceivable metal-removing as well as partly also non-cutting machining processes, such as planishing, rolling, calibrating, laser-welding, etc.
c) means are provided for measuring the workpiece (42) with a probe (47) located on the machine base (6);
d) means are provided for removing tools (70) by a tool gripper attached to the upper machining unit (3, 5, 111) from the lower motor spindle (112) and transferring said removed tools to a storage belt (63) forming a tool magazine, and vice versa;
e) means are provided for measuring the exchanged tools (70) with the probe located on the upper compound slide (5, 111 ) said probe being movable into the work area (34).
f) means are provided for removing the safety cap from the clamping device (69) of the lower machining unit (72) by the tool gripper of the upper machining unit (3, 5, 111 ) and transferring to the tool storage belt (63), and vice versa;
g) means are provided for clamping the semi-finished workpiece (102) in the clamping device (69) of the lower machining unit (72);
h) means are provided for covering the upper clamping device (84) by directly receiving the safety cap from the tool storage belt (63), or vice versa;
i) means are provided for changing machining tools in the upper motor spindle (3) directly from the tool storage belt (63) in the loading and unloading zone (39) and re-depositing said tools in the loading and unloading zone;
j) means are provided for measuring the exchanged tools (64) in the upper motor spindle (3) with the probe (47) located on the machine base (6);
k) means are provided for machining the still unmachined workpiece surface for the workpiece (102) clamped in the lower motor spindle (112) and, where necessary, five-sided machining in all angular positions for all conceivable metal removing and partly also non-cutting machining processes such as planishing, rolling, calibrating, laser welding, etc.
l) means are provided for measuring the tools (70) clamped in the lower motor spindle (112) with the probe located on the upper compound slide (5,111) that is adjustable in the work area (34);
m) means are provided for removing the finished workpiece (55) from the lower machining unit (72) and transferring to the workpiece storage belt (65).

31. A machining cell according to claim 1 or one of the following claims for constructing a seven-axis multifunctional machining system, **characterised in that** it serves to completely machine a workpiece in two settings with a four-axis multifunctional compound slide with a D axis (5, 111, 113) with a spindle unit (3) with a C axis and a lower multifunctional machining unit (72) with an E axis for swivelling and a spindle unit with an F axis, whereby
a) gripping and clamping a blank (103) and depositing a finished workpiece (55) take place in the loading and unloading zone (39) with the clamping device (84) on the upper machining unit (3,5,111,113)
b) means are provided for carrying out five-sided machining in all angular positions for all conceivable metal removing and partly also non-cutting machining processes such as planishing, rolling, calibrating, laser welding, etc.
c) means are provided for measuring the workpieces (42) with a probe (47) located on the machine base (6);
d) means are provided for removing tools (70) by a tool gripper attached to the upper machining unit (3, 5, 111, 113) from the lower machine spindle (112) and transferring said removed tools to the tool storage belt (63), and vice versa;
e) means are provided for measuring the exchanged lower tools (70) with the probe located on the upper compound slide (5, 111, 113) said probe being movable into the work area (34);
f) means are provided for removing the safety cap from the clamping device (69) of the lower machining unit (72) by the tool gripper of the upper machining unit (3, 5, 111, 113) and transferring said removed safety cap to the tool storage belt (63), and vice versa;
g) means are provided for clamping the semi-finished workpiece (102) in the clamping device (69) of the lower machining unit (72);
h) means are provided for covering the upper clamping device (84) by directly receiving the safety cap from the storage belt, and vice versa;
i) means are provided for changing machining tools (64) in the upper motor spindle (3) directly from the tool storage belt (63) in the loading and unloading zone (39) and re-depositing the tools at said loading and unloading zone;
j) means are provided for measuring the exchanged tools (64) in the upper motor spindle (3) with the probe (47) located on the machine base (6);
k) means are provided for machining the still unmachined workpiece surfaces for the workpiece (102) clamped in the lower motor spindle (112) and, where necessary, five-sided machining in all angular positions for all conceivable metal removing and partly also non-cutting machining processes such as planishing, rolling, calibrating, laser welding, etc.
l) means are provided for measuring parts (42) clamped in the lower motor spindle (112) with the probe located on the upper compound slide (5, 111, 113) said probe being movable into the work area (34);
m) means are provided for removing the finished workpiece (55) from the lower machining unit (72) and transferring said finished workpiece to the workpiece storage belt (65) constructed as a storage and conveyor belt.

32. A machining cell according to claim 1 or one of the following claims, **characterised in that** the bearings of the spindle (9) are cooled to a constant temperature.

33. A machining cell according to claim 1 or one of the following claims, **characterised in that** in the case of a three-axis compound slide (5, 111), a slide valve (111 ) arranged above the guide for the X axis carries the compound slide (5) for the Y axis.

34. A machining cell according to claim 16 or one of the following claims, **characterised in that** the lower multifunctional machining unit (72) is equipped with
a) several fixed tools (70) and
b) an off-centre-mounted motor spindle (112);
c) means for swivelling the entire unit by a CNC control system, whereby the motor spindle (112), having a swivel axis (E axis), is adapted to operate at any angle required;
d) means for driving the motor spindle (112) in an infinitely variable manner by an incorporated or external AC motor;
e) a combined workpiece and tool clamping device (69) carried by the motor spindle (112) for alternately mounting tools (70) and workpieces (102);
f) a CNC-controlled axis (F axis) for the motor spindle (112).

35. A machining cell according to claim 18 or one of the following claims, **characterised in that** the storage and conveyor belt (41) is equipped with angular drives for accommodating the workpieces (65) and tools (63).

36. A machining cell according to claim 1 or one of the following claims, **characterised by** a safety housing made of an aluminium lamina shaped like a roller blind (40) which covers the front area of the machine.

37. A machining cell according to claim 1 or any of the claims 2 to 26, **characterised by** machining the workpieces (33) with a single or multiple axis compound slide with a motor spindle (3) having an U axis in the CNC facing head (67) for adjustment of the tools (87), whereby gripping, clamping and depositing of a workpiece (33) from the indexing belt (36) is carried out by a clamping device (32) for, for example, central machining processes such as contour turning, internal cutting and face turning.

38. A machining cell according to claim 1 or one of the following claims, **characterised in that** the motor spindle (3) is centrically arranged in the compound slide (5).

39. A machining cell according to claim 1 or one of the following claims, **characterised in that** the motor spindle (3) is movably mounted in a vertical direction in a hydrostatic guide (114, 115).

40. A machining cell according to claim 38 or 39, **characterised in that** the loading and unloading zone (39) is arranged behind the work area (34) inside the machining centre.

41. A machining cell according to claim 18 or one of the following claims, **characterised in that** the storage and conveyor belt (41) is passed through the openings (30, 31) in the back area of the machine base (6) in the loading and unloading zone (39) through the machining centre.

42. A machining cell according to claim 7 or one of the following claims, **characterised in that** the probe (47) is automatically swivelled into the work area (34) after a door (43) is opened.

43. A machining cell according to claim 7 or one of the following claims, **characterised in that** the measuring zone (35) is arranged partly in the work area (34) as well as in the loading and unloading zone (39).

44. A machining cell according to claim 1 or one of the following claims, **characterised in that** there is room between the machine base (6) and a control cabinet (117) in which a hydraulic power pack (119), a central lubricating unit (116) as well as a heat exchanger (121) are arranged, and this room is lockable by at least one door (118).

45. A machining centre according to claim 44, **characterised in that** the power container (2) is designed in an L shape in the side view, in such a manner that the electrical, hydraulic and/or air supply lines required for operating the machine are preassembled and include, for example, plug connections essentially located in the horizontally arranged portion of the L shape, and that the control cabinet (117), the hydraulic unit (119) as well as the central lubricating unit (116) and the heat exchanger (121) with at least one door (118) are located in the vertically arranged portion of the L shape, and that the horizontal arranged portion of the L shape covers the machine base (6) from above and a part of the associated vertical portion of the L shape covers one front wall for the machine base (6).

## Revendications

1. Cellule d'usinage formée par un assemblage de modules, comportant un bâti-machine (6), auquel est affecté un capotage du compartiment opérationnel , et un compartiment opérationnel (34), le bâti-machine (6) renfermant le compartiment opérationnel (34) sur au moins deux côtés et servant à la réception de porte-outils et/ou de dispositifs revolvers, sous forme d'uns unité fixe, avec une broche principale verticale suspendue, guidée, configurée en broche motorisée (3), constituant ensemble avec un chariot multi-axes (5) configuré en chariot à mouvements croisés et doté d'un capotage en tôle une unité porte-broche, des guides (24, 25) dans un sens de déplacement du chariot multi-axes (5) étant affectés au bâti-machine (6) en haut, et la broche motorisée (3) servant à saisir, serrer, déposer et entraîner des pièces d'oeuvre ou des outils et étant pilotée par une commande CNC.

2. Cellule d'usinage formée par un assemblage de modules selon la revendication 1, dans laquelle la broche (9) est entourée de manière concentrique par son moteur (10) et la commande CNC de la machine étant agencée dans un compartiment en forme de conteneur alimentateur en énergie, avec des dispositifs servant à collecter des copeaux et le liquide de refroidissement, avec un compartiment opérationnel (34), une zone de chargement et de déchargement (39) située devant ou derrière le compartiment opérationnel (34) et une unité accumulatrice et transporteuse (41) sur laquelle sont disposé(e)s les pièces d'oeuvre ou les outils.

3. Cellule d'usinage selon les revendications 1 ou 2, **caractérisée en ce que** le bâti-machine (6) comporte sur son côté supérieur des guides (24, 25) pour le chariot à mouvements croisés (5).

4. Cellule d'usinage selon la revendication 2 ou l'une des revendications suivantes, **caractérisée en ce que** le compartiment en forme de conteneur logeant la commande-machine est configuré comme un conteneur alimentateur en énergie (2) fixé sur le bâti-machine (6).

5. Cellule d'usinage selon les revendications 3 ou 4, **caractérisée en ce qu'**entre les guides (24, 25) du chariot à mouvements croisés (5) des évidements sont formés dans le bâti-machine (6) pour collecter et évacuer les copeaux.

6. Cellule d'usinage selon la revendication 1 ou l'une des revendications suivantes, **caractérisée en ce que** sur le chariot à mouvements croisés (5) est fixé un capot en tôle (4) que traverse verticalement la broche motorisée (3), l'étanchéité du point de traversée étant établie par une garniture équipant la broche.

7. Cellule d'usinage selon la revendication 1 ou l'une des revendications suivantes, **caractérisée en ce qu'**un palpeur métrologique (47) est intégré dans la commande CNC de la machine et sert à contrôler les pièces usinées (33).

8. Cellule d'usinage selon la revendication 5 ou l'une des revendications suivantes, **caractérisée en ce que** les évidements sont protégés par une tôle modelée (29) noyée en tant que module perdu dans le bâti-machine (6).

9. Cellule d'usinage selon la revendication 1 ou l'une des revendications suivantes, **caractérisée en ce que** le bâti-machine (6) renferme le compartiment opérationnel (34) sur trois côtés verticaux superposés et par le bas.

10. Cellule d'usinage selon la revendication 1 ou l'une des revendications suivantes, **caractérisée en ce que** le bâti-machine (6) est formé par du béton moulé à résine réactive.

11. Cellule d'usinage selon la revendication 1 ou l'une des revendications suivantes, **caractérisée en ce qu'**une vue en coupe longitudinale du bâti-machine (6) orthogonale à son axe longitudinal se présente en forme de H .

12. Cellule d'usinage selon la revendication 1 ou l'une des revendications 2 à 10, **caractérisée en ce qu'**une vue en coupe du bâti-machine (6) orthogonale à son axe longitudinal se présente approximativement en forme de U.

13. Cellule d'usinage selon la revendication 1 ou l'une des revendications 2 à 10, **caractérisée en ce qu'**une vue en coupe du bâti-machine (6) orthogonale à son axe longitudinal se présente approximativement en forme de L.

14. Cellule d'usinage selon la revendication 1 ou l'une des revendications suivantes, **caractérisée en ce que** les guides (24 et 25) sont configurés en rails de guidage (24, 25) au tracé réciproquement parallèle, un rail correspondant étant fixé sur un côté supérieur des parois latérales (26, 27) du bâti-machine (6).

15. Cellule d'usinage selon la revendication 1 ou l'une des revendications suivantes, **caractérisée en ce que** le bâti-machine (6) est disposé sur des pieds-machine (28) amovibles établissant un espace par rapport au sol.

16. Cellule d'usinage selon la revendication 1 ou l'une des revendications suivantes, **caractérisée en ce que** dans le compartiment renfermé par le bâti-machine (6) est logée une unité d'usinage plurifonctionnelle inférieure (72).

17. Cellule d'usinage selon la revendication 1 ou l'une des revendications suivantes, **caractérisée en ce qu'**à l'intérieur du compartiment renfermé par le bâti-machine (6), dans les parois latérales (26, 27) du bâti-machine (6), est disposé l'arbre (60) d'un dispositif revolver multiple, par exemple d'un dispositif revolver double avec les porte-outils (58, 59).

18. Cellule d'usinage selon la revendication 1 ou l'une des revendications suivantes, **caractérisée en ce que** les guides (24, 25) du chariot à mouvements croisés (5) dépassent à l'avant la position d'usinage pour arriver jusqu'à un tapis accumulateur et transporteur (41) disposé ici.

19. Cellule d'usinage selon la revendication 1 ou l'une des revendications suivantes, **caractérisée en ce que** l'unité porte-broche composée de la broche motorisée (3) et du chariot à mouvements croisés (5) a une configuration bi-axiale, le chariot à mouvements croisés étant disposé de sorte à pouvoir être déplacé selon l'axe X et la broche motorisée étant disposée de sorte à pouvoir être déplacée selon l'axe Z par la commande CNC, la broche motorisée (3) pouvant être déplacée au-dessus d'un tapis accumulateur et transporteur (41).

20. Cellule d'usinage selon la revendication 1 ou l'une des revendications suivantes, **caractérisée en ce que** le chariot à mouvements croisés (5) est entraîné par un moteur triphasé à réactions rapides, régulé en fréquence et exempt d'entretien, entraînant le chariot à mouvements croisés (5) par l'intermédiaire de broches filetées rectifiées haute précision à billes, un système métrologique linéaire sous boîtier étant intégré dans l'axe X et un système métrologique rotatif étant intégré dans l'axe Z, les deux systèmes de guidage étant disposés en dehors du compartiment opérationnel (34).

21. Cellule d'usinage selon la revendication 4 ou l'une des revendications suivantes, **caractérisée en ce que** le conteneur (2) est configuré en construction en tôle autoporteuse.

22. Cellule d'usinage selon la revendication 4 ou l'une des revendications suivantes, **caractérisée en ce que** le conteneur (2) renferme le bâti-machine (6) par le haut et par au moins trois côtés, entièrement ou partiellement.

23. Cellule d'usinage selon la revendication 4 ou l'une des revendications suivantes, **caractérisée en ce que** le conteneur (2) contient l'armoire électrique installée au complet avec des raccords enfichables sortants, préconfectionnés et enfichables aboutissant aux consommateurs.

24. Cellule d'usinage selon la revendication 23, **caractérisée en ce que** les raccords comportent aussi des câbles électriques (7) posés dans des plateaux (8), lesdits plateaux (8) étant reliés d'une seule pièce au conteneur (2), les raccords, en particulier les câbles électriques (7) étant posés en boucles, de manière à permettre le déplacement libre du chariot à mouvements croisés (5) et/ou de la broche motorisée (3).

25. Cellule d'usinage selon les revendications 23 ou 24, **caractérisée en ce que** le conteneur (2) contient aussi un groupe frigorifique destiné à refroidir la broche et l'armoire électrique, ainsi que les circuits d'alimentation hydraulique et pneumatique, les flexibles à eau, hydrauliques ou pneumatiques ainsi que les câbles électriques (7) aboutissant en boucles aux consommateurs et étant posés le cas échéant dans des plateaux (8).

26. Cellule d'usinage selon la revendication 2 ou l'une des revendications suivantes, **caractérisée en ce que** la zone de chargement et de déchargement (39), le compartiment opérationnel (34) et une zone métrologique (35) sont disposés les uns derrière les autres dans le sens de l'axe X et **en ce que** le compartiment opérationnel (34) est séparé de la zone de chargement et de déchargement (39) et de la zone métrologique (35) par une porte à ouverture et fermeture (43, 44) intégrée dans la commande-machine.

27. Cellule d'usinage selon la revendication 1 ou l'une des revendications 2 à 26, **caractérisée en ce qu'**elle sert à constituer un système bi-axial plurifonctionnel d'usinage des pièces d'oeuvre au moyen d'un chariot à mouvements croisés (5) bi-axial et plurifonctionnel, avec une broche motorisée (3), un porte-bloom ou un dispositif revolver multiplateaux (48, 50) et avec des outils fixes (51) ou rotatifs (52), permettant ainsi
a) la saisie et le serrage d'une pièce brute (103) et le dépôt d'une pièce finie (55) dans la zone de chargement et de déchargement (39) du tapis accumulateur et transporteur (41) ;
b) la réalisation d'opérations d'usinage centrées, essentiellement le tournage, la rectification, l'alésage, etc., ainsi qu'en partie les procédés d'usinage sans copeaux tels que le lissage, l'écrouissage au rouleau et le calibrage ;
c) la mesure des pièces d'oeuvre (42) au moyen d'un palpeur métrologique (47) disposé sur le bâti-machine (6) ;
d) l'échange automatique nécessaire d'outils usés à partir des dispositifs porte-outils à mouvements cycliques identiques et situés sur un tapis accumulateur et transporteur (41), l'échange étant effectué par une pince à outils située sur l'unité opérationnelle supérieure (3, 5) ;
e) la mesure des outils remplacés au moyen d'un palpeur métrologique (108) remplacé dans la broche motorisée (3) ou au moyen d'un palpeur métrologique disposé sur le chariot supérieur à mouvements croisés (5) et pouvant être positionné dans le compartiment opérationnel (34).

28. Cellule d'usinage pour constituer un système d'usinage tri-axial plurifonctionnel selon la revendication 1 ou l'une des revendications 2 à 26, **caractérisée en ce qu'**elle sert à usiner des pièces d'oeuvre avec un chariot à mouvements croisés bi-axial et plurifonctionnel (5), avec une broche motorisée (3) tournant selon l'axe C, un porte-bloom ou un dispositif revolver multiplateaux (48 , 50) comportant des outils fixes (51) ou rotatifs (52), permettant ainsi
a) la saisie et le serrage d'une pièce brute (103) et le dépôt d'une pièce finie (55) dans la zone de chargement et de déchargement (39) du tapis accumulateur et transporteur (41) ;
b) la réalisation d'opérations d'usinage centrées, essentiellement le tournage, la rectification, l'alésage, etc., ainsi qu'en partie les procédés d'usinage sans copeaux tels que le lissage, l'écrouissage au rouleau et le calibrage ;
c) la mesure des pièces d'oeuvre au moyen d'un palpeur métrologique (47) disposé sur le bâti-machine (6) ;
d) l'échange automatique nécessaire d'outils usés à partir des dispositifs porte-outils à mouvements cycliques identiques et situés sur un tapis accumulateur et transporteur (41), l'échange étant effectué par une pince à outils située sur l'unité opérationnelle supérieure (3, 5);
e) la mesure des outils remplacés (51, 52) au moyen d'un palpeur métrologique (108) remplacé dans la broche motorisée (3) ou au moyen d'un palpeur métrologique disposé sur le chariot supérieur à mouvements croisés (5) et pouvant être positionné dans le compartiment opérationnel (34).

29. Cellule d'usinage pour constituer un système d'usinage quadri-axial plurifonctionnel selon la revendication 1 ou l'une des revendications 2 à 26, **caractérisée en ce qu'**elle sert à usiner des pièces d'oeuvre avec un chariot à mouvements croisés tri-axial et plurifonctionnel (5, 111) avec une broche motorisée (3) tournant selon l'axe C et avec un dispositif double revolver transversal (58, 59) ou une barre porte-outils multiple, le dispositif double revolver présentant des outils fixes (61) et rotatifs (62), permettant ainsi
a) la saisie et le serrage d'une pièce brute (103) et le dépôt d'une pièce finie (55) dans la zone de chargement et de déchargement (39) du tapis accumulateur et transporteur (41) ;
b) un usinage sur 5 côtés avec tous les procédés envisageables d'usinage par enlèvement de copeaux, ainsi que, partiellement, les procédés d'usinage sans copeaux, tels que le lissage, l'écrouissage au rouleau, le calibrage, le soudage au laser, etc. ;
c) la mesure des pièces d'oeuvre au moyen d'un palpeur métrologique (47) disposé sur le bâti-machine (6) ;
d) l'échange automatique nécessaire d'outils usés à partir des dispositifs porte-outils à mouvements cycliques identiques et situés sur un tapis accumulateur et transporteur (41), l'échange étant effectué par une pince à outils située sur l'unité opérationnelle supérieure (3, 5, 111);
e) la mesure des outils remplacés (61, 62) au moyen d'un palpeur métrologique (108) remplacé dans la broche motorisée (3) ou au moyen d'un palpeur métrologique disposé sur le chariot supérieur à mouvements croisés (5) et pouvant être positionné dans le compartiment opérationnel (34).

30. Cellule d'usinage pour constituer un système d'usinage hexa-axial plurifonctionnel selon la revendication 1 ou l'une des revendications 2 à 19, **caractérisée en ce qu'**elle sert à l'usinage complet d'une pièce d'oeuvre en deux serrages avec un chariot à mouvements croisés (5, 111) tri-axial et plurifonctionnel, avec une broche motorisée (3) tournant selon l'axe C et avec une unité opérationnelle(72) inférieure plurifonctionnelle avec un axe E de pivotement et une broche motorisée (112) se déplaçant selon un axe F, permettant ainsi
a) la saisie et le serrage d'une pièce brute (103) et le dépôt d'une pièce finie (55) dans la zone de chargement et de déchargement (39) avec le dispositif de serrage (84) sur la broche motorisée (3) ;
b) un usinage sur 5 côtés, dans toutes les inclinaisons, avec tous les procédés envisageables d'usinage par enlèvement de copeaux, ainsi que, partiellement, les procédés d'usinage sans copeaux, tels que le lissage, l'écrouissage au rouleau, le calibrage, le soudage au laser, etc. ;
c) la mesure de la pièce d'oeuvre (42) au moyen d'un palpeur métrologique (47) disposé sur le bâti-machine (6) ;
d) le retrait des outils (70) de la broche motorisée inférieure (112) par une pince à outils fixée sur l'unité opérationnelle supérieure (3, 5, 111) et le transfert desdits outils à un tapis accumulateur (63) servant de magasin à outils, et inversement ;
e) la mesure des outils inférieurs remplacés (70) au moyen du palpeur métrologique disposé sur le chariot supérieur à mouvements croisés (5, 111, 113) et pouvant être positionné dans le compartiment opérationnel (34) ;
f) le retrait du capuchon protecteur du dispositif de serrage (69) de l'unité opérationnelle inférieure (72) par l'intermédiaire de la pince à outils de l'unité opérationnelle supérieure (3, 5, 111) et le transfert au tapis accumulateur des outils (63), et inversement ;
g) le serrage de la pièce d'oeuvre servi-finie (102) dans le dispositif de serrage (69) de l'unité opérationnelle inférieure (72) ;
h) le recouvrement du dispositif de serrage supérieur (84) par saisie directe du capuchon protecteur du tapis accumulateur d'outils (63), ou inversement ;
i) le remplacement des outils d'usinage dans la broche motorisée supérieure (3), directement à partir du tapis accumulateur d'outils (63) dans la zone de chargement et de déchargement (39) et le redépôt sur celui-ci ;
j) la mesure des outils (64) remplacés dans la broche motorisée supérieure (3) au moyen du palpeur métrologique (47) disposé sur le bâti-machine (6) ;
k) l'usinage de la surface non encore usinée de la pièce d'oeuvre (102) serrée dans la broche motorisée inférieure (112) et l'usinage éventuel sur 5 côtés, dans toutes les inclinaisons, selon tous les procédés envisageables d'usinage par enlèvement de copeaux ainsi que, partiellement, les procédés d'usinage sans copeaux, tels que le lissage, l'écrouissage au rouleau, le calibrage, le soudage au laser,; etc. ;
l) la mesure des outils (70) serrés dans la broche motorisée inférieure (112) au moyen du palpeur métrologique disposé sur le chariot supérieure à mouvement croisés (5, 111) et pouvant être positionné dans le compartiment opérationnel (34) ;
m) le retrait de la pièce d'oeuvre finie (55) de l'unité opérationnelle inférieure (72) et le transfert au tapis accumulateur d'outils (65).

31. Cellule d'usinage selon la revendication 1 ou selon l'une des revendications suivantes, pour constituer un système d'usinage hepta-axial plurifonctionnel, **caractérisée en ce qu'**elle sert à l'usinage complet d'une pièce d'oeuvre en deux serrages, avec un chariot à mouvements croisés (5, 111, 113) quadri-axial et plurifonctionnel, se déplaçant selon l'axe D, avec une unité à broche (3) tournant selon l'axe C et avec une unité opérationnelle (72) inférieure plurifonctionnelle avec un axe E de pivotement et une unité à broche se déplaçant selon un axe F, permettant ainsi
a) la saisie et le serrage d'une pièce brute (103) et le dépôt d'une pièce finie (55) dans la zone de chargement et de déchargement (39) avec le dispositif de serrage (84) sur l'unité opérationnelle supérieure (3,5, 111, 113);
b) un usinage sur 5 côtés, dans toutes les inclinaisons, avec tous les procédés envisageables d'usinage par enlèvement de copeaux, ainsi que, partiellement, les procédés d'usinage sans copeaux, tels que le lissage, l'écrouissage au rouleau, le calibrage, le soudage au laser, etc. ;
c) la mesure des pièces d'oeuvre (42) au moyen d'un palpeur métrologique (47) disposé sur le bâti-machine (6) ;
d) le retrait des outils (70) de la broche motorisée inférieure (112) par une pince à outils fixée sur l'unité opérationnelle supérieure (3, 5, 111, 113) et le transfert desdits outils au tapis accumulateur d'outils (63), et inversement ;
e) la mesure des outils inférieurs remplacés (70) au moyen du palpeur métrologique disposé sur le chariot supérieur à mouvements croisés (5, 111, 113) et pouvant être positionné dans le compartiment opérationnel (34) ;
f) le retrait du capuchon protecteur du dispositif de serrage (69) de l'unité opérationnelle inférieure (72) par l'intermédiaire de la pince à outils de l'unité opérationnelle_supérieure (3, 5, 111, 113) et le transfert au tapis accumulateur d'outils (63), et inversement ;
g) le serrage de la pièce d'oeuvre semi-finie (102) dans le dispositif de serrage (69) de l'unité opérationnelle inférieure (72) ;
h) le recouvrement du dispositif de serrage supérieur (84) par saisie directe du capuchon protecteur du tapis accumulateur d'outils, ou inversement ;
i) le remplacement des outils d'usinage (64) dans la broche motorisée supérieure (3), directement à partir du tapis accumulateur d'outils (63) dans la zone de chargement et de déchargement (39) et le redépôt sur celui-ci ;
j) la mesure des outils (64) remplacés dans la broche motorisée supérieure (3) au moyen du palpeur métrologique (47) disposé sur le bâti-machine (6) ;
k) l'usinage des surfaces non encore usinées de la pièce d'oeuvre (102) serrée dans la broche motorisée inférieure (112) et l'usinage éventuel sur 5 côtés, dans toutes les inclinaisons, selon tous les procédés envisageables d'usinage par enlèvement de copeaux ainsi que, partiellement, les procédés d'usinage sans copeaux, tels que le lissage, l'écrouissage au rouleau, le calibrage, le soudage au laser, etc. ;
l) la mesure des pièces (42) serrées dans la broche motorisée inférieure (112) au moyen du palpeur métrologique disposé sur le chariot supérieure à mouvement croisés (5, 111, 113) et pouvant être positionné dans le compartiment opérationnel (34) ;
m) le retrait de la pièce d'oeuvre finie (55) de l'unité opérationnelle inférieure (72) et le transfert au tapis accumulateur d'outils (65), configuré en tapis accumulateur et transporteur.

32. Cellule d'usinage selon la revendication 1 ou l'une des revendications suivantes, **caractérisée en ce que** les paliers de la broche (9) sont refroidis à une température constante.

33. Cellule d'usinage selon la revendication 1 ou l'une des revendications suivantes, **caractérisée en ce que** dans le cas d'un chariot à mouvements croisés tri-axial (5, 111), un curseur (111) reposant au-dessus du guidage selon l'axe X supporte le chariot à mouvements croisés (5) et lui permet de se déplacer selon l'axe Y.

34. Cellule d'usinage selon la revendication 16 ou l'une des revendications suivantes, **caractérisée en ce que** l'unité opérationnelle plurifonctionnelle inférieure (72)
a) est équipée de plusieurs outils fixes (70) et
b) est équipée d'une broche motorisée (112) à logement excentré ;
c) l'ensemble de l'unité pouvant être pivoté par la commande CNC, la broche motorisée (112) avec son axe de pivotement (axe E) pouvant fonctionner à un angle quelconque ;
d) la broche motorisée (112) pouvant être entraînée en continu par un moteur CA incorporé ou externe ;
e) la broche motorisée (112) supportant un dispositif de serrage combiné des pièces d'oeuvre et des outils (69) permettant la réception sélective d'outils (70) et de pièces d'oeuvre (102) ;
f) la broche motorisée (112) comportant un axe à commande CNC (axe F).

35. Cellule d'usinage selon la revendication 18 ou l'une des revendications suivantes, caractérisée en que le tapis accumulateur et transporteur (41) est équipé de taquets prismatiques servant à entraîner les pièces d'oeuvre (65) et les outils (63).

36. Cellule d'usinage selon la revendication 1 ou l'une des revendications suivantes, **caractérisée en ce qu'**un capotage protecteur en lamelles d'aluminium formant un store obturateur (40) recouvre la partie avant de la machine.

37. Cellule d'usinage selon la revendication 1 ou l'une des revendications 2 à 26, **caractérisée en ce que** l'usinage des pièces d'couvre (33) est assuré par un chariot à mouvements croisés plurifonctionnel mono-axial ou pluri-axial avec une broche motorisée (3) et une tête de surfaçage (67) à commande CNC se déplaçant selon l'axe U et servant à déplacer les outils (87), la saisie, le serrage et le dépôt d'une pièce d'oeuvre (33) provenant du tapis cadencé (36) étant assurés par un dispositif de serrage (32) pour exécuter par exemple des opérations d'usinage centrées, telles que le tournage des contours, le tournage d'agrandissement et le surfaçage.

38. Cellule d'usinage selon la revendication 1 ou l'une des revendications suivantes, **caractérisée en ce que** la broche motorisée (3) est disposée de manière centrée dans le chariot à mouvements croisés (5).

39. Cellule d'usinage selon la revendication 1 ou l'une des revendications suivantes, **caractérisée en ce que** la broche motorisée (3) est guidée de manière mobile dans le sens vertical par un guidage hydrostatique (114, 115).

40. Cellule d'usinage selon les revendications 38 ou 39, **caractérisée en ce que** la zone de chargement et de déchargement (39) est située derrière le compartiment opérationnel (34), à l'intérieur du centre d'usinage.

41. Cellule d'usinage selon la revendication 18 ou l'une des revendications suivantes, **caractérisée en ce que** le tapis accumulateur et transporteur (41) traverse le centre d'usinage par des évidements (30, 31) ménagés dans la zone arrière du bâti-machine (6), dans la zone de chargement et de déchargement (39).

42. Cellule d'usinage selon la revendication 7 ou l'une des revendications suivantes, **caractérisée en ce que** le palpeur métrologique (47) peut automatiquement pivoter dans le compartiment opérationnel (34) après l'ouverture d'une porte (43).

43. Cellule d'usinage selon la revendication 7 ou l'une des revendications suivantes, **caractérisée en ce que** la zone métrologique (35) est disposée en partie dans le compartiment opérationnel (34) et en partie dans la zone de chargement et de déchargement (39).

44. Cellule d'usinage selon la revendication 1 ou l'une des revendications suivantes, **caractérisée en ce qu'**entre le bâti-machine (6) et une armoire électrique (117) est établi un espace dans lequel sont disposés un groupe hydraulique (119), un groupe de lubrification centralisée (116) ainsi qu'un échangeur thermique (121) et **en ce que** cet espace peut être fermé par au moins une porte (118).

45. Centre d'usinage selon la revendication 44, **caractérisé en ce que** le conteneur alimentateur en énergie (2) se présente dans une vue latérale en forme de L, de sorte que les lignes et conduites d'alimentation électrique, hydraulique et/ou pneumatique préconfectionnées et pouvant par exemple être enfichées se trouvent essentiellement dans la branche en L disposée horizontalement, **en ce que** l'armoire électrique (117), le groupe hydraulique (119), le groupe de lubrification centralisée (116) et l'échangeur thermique (121) se trouvent avec au moins une porte (118) dans la branche agencée verticalement par rapport à l'autre branche, et **en ce que** la branche en L agencée horizontalement recouvre le bâti-machine (6) par le haut, une partie de la branche en L agencée verticalement par rapport à l'autre branche recouvrant une paroi frontale du bâti-machine (6).
